# EUROPÄISCHE PATENTSCHRIFT

(11) **EP 4 358 471 B1**
(45) Veröffentlichungstag und Bekanntmachung des Hinweises auf die Patenterteilung: **29.07.2026**
(21) Anmeldenummer: 23204165.7
(22) Anmeldetag: 17.10.2023
(51) Int. Cl.: H04L 9/06, H04L 9/08, H04L 9/32

(54) **VERFAHREN ZUM AUSSTELLEN EINER DIGITALEN KOPIE EINES DOKUMENTS**
METHOD FOR MAKING A DIGITAL COPY OF A DOCUMENT
PROCÉDÉ POUR EXPOSER UNE COPIE NUMÉRIQUE D'UN DOCUMENT

(30) Priorität: 18.10.2022 DE 102022127354
(43) Veröffentlichungstag der Anmeldung: 24.04.2024
(73) Patentinhaber: Bundesdruckerei GmbH, 10969 Berlin (DE)
(72) Erfinder: DIETRICH, Frank, 12437 Berlin (DE); HECK, Isabel, 10715 Berlin (DE)
(74) Vertreter: Richardt Patentanwälte PartG mbB

(56) Entgegenhaltungen:
- EP-B1- 3 114 600
- US-A1- 2018 173 871
- "Advances in Databases and Information Systems", vol. 8450, 1 January 2014, SPRINGER INTERNATIONAL PUBLISHING, Cham, ISBN: 978-3-319-10403-4, article NICOLAS BUCHMANN ET AL: "Towards Electronic Identification and Trusted Services for Biometric Authenticated Transactions in the Single Euro Payments Area", pages: 172 - 190, XP055625940, 032682, DOI: 10.1007/978-3-319-06749-0_12

## Beschreibung

Die Erfindung betrifft ein Verfahren zum Ausstellen einer digitalen Kopie eines Dokuments sowie einen Server und ein System zum Ausführen des Verfahrens. Ferner betrifft die Erfindung eine entsprechende digitale Kopie eines Dokuments.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet.

Es stellt jedoch eine technische Herausforderung dar, für entsprechende Endgeräte digitale Dokumente und insbesondere Kopien von Dokumenten in kryptographisch sicherer Weise bereitzustellen.

Die US 2018/173871 A1 beschreibt ein System und Verfahren zur Registrierung und zum Erhalten elektronischer Berechtigungsnachweise mithilfe persönlicher Geräte sowie ein Identitätsregistrierungssystem, welches ein Verfahren zur Handhabung digitaler Siegel mit einer Existenznachweisverfahren kombiniert. Das Identitätsregistrierungssystem dient zur Registrierung und Überprüfung elektronischer Berechtigungsnachweise. Gerätebesitzer registrieren ihre elektronischen Berechtigungsnachweise, wenn sie erstellt und aktualisiert werden, und überprüfen die erworbenen elektronischen Berechtigungsnachweise, um sie vor Manipulationen und Fehlern zu schützen. Bei der Registrierung eines elektronischen Berechtigungsnachweises wird der elektronische Berechtigungsnachweis gehasht und mit einem digitalen Siegel versehen, sodass ein identifizierender Fingerabdruck entsteht, der im Identitätsregistrierungssystem gespeichert wird. Bei der Überprüfung eines erworbenen elektronischen Berechtigungsnachweises wird der elektronische Berechtigungsnachweis gehasht, das Identitätsregistrierungssystem wird nach dem identifizierenden Fingerabdruck durchsucht und das digitale Siegel des Fingerabdrucks wird überprüft. Ein anfragender Eigentümer kann einen ausstellenden Eigentümer auffordern, einen elektronischen Berechtigungsnachweis des Anfragenden zu prüfen, zu bestätigen und mit einem digitalen Siegel zu versehen. Sowohl der Aussteller als auch der Anfragende verwenden das Identitätsregistrierungssystem, um von der anderen Partei erworbene elektronische Berechtigungsnachweise zu überprüfen.

Die EP 3 114 600 B1 beschreibt ein computerimplementiertes Verfahren zur Kontrolle des Zugriffs eines Nutzers auf einer Sicherungsanlage, wobei ein Identitätsdokument des Nutzers eine elektronische Identifikation beinhaltet, mit: Empfang einer Erlaubnisanfrage zum Zugriff des Nutzers auf die Sicherungsanlage; auf Empfang der Erlaubnisanfrage, Prüfung, ob ein erster Vertrauensanker in einem ersten Speicher vorliegt und/oder ob ein zweiter Vertrauensanker in einem zweiten Speicher vorliegt; falls die Vertrauensanker gespeichert vorliegen, Verwenden desselben zur gegenseitigen Authentifizierung einer Kontrolleinheit und des Identitätsdokuments; im Falle einer erfolgreichen gegenseitigen Authentifizierung des Identitätsdokuments und der Kontrolleinheit, Übermittlung der in elektronischen Identifikation an einen Autorisierungsserver; falls der erste und/oder der zweite Vertrauensanker nicht gespeichert vorliegt, Veranlassung eines Authentifizierungsservers, den ersten und/oder den zweiten Vertrauensanker zu erzeugen; und Übermittlung oder Ermöglichung der Übermittlung der in dem Identitätsdokument gespeicherten elektronischen Identifikation des Nutzers an den Autorisierungsserver durch den Authentifizierungsserver; Gewährung oder Verweigerung des Zugriffs auf die Sicherungsanlage in Abhängigkeit von der übermittelten elektronischen Identifikation durch den Autorisierungsserver.

Der Artikel "Towards Electronic Identification and Trusted Services for Biometrie Authenticated Transactions in the Single Euro Payments Area" von Nicolas Buchmann et al. in "Advances in Databases and Information Systems", 1. Januar 2014, Seiten 172-190, beschreibt eine Anpassung des elDAS-Standards an vertrauenswürdige Banktransaktionen und skizziert die daraus resultierenden Sicherheits- und Datenschutzverbesserungen. Ferner wird der elDAS-Standard um biometrisch authentifizierte Transaktionen erweitert.

Der Erfindung liegt die Aufgabe zugrunde, ein Verfahren zum kryptographisch sicheren Bereitstellen einer digitalen Kopie eines digitalen Dokuments zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ausstellen einer digitalen Kopie eines ausgestellten digitalen Dokuments unter Verwendung eines digitalen Provisionierungstokens.

Der Provisionierungstoken weist eine Berechtigung zum Empfang der auszustellenden digitalen Kopie des ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines dem ausgestellten Dokument zugeordneten ersten Datenelements, welches das ausgestellte Dokument, für das eine Kopie auszustellen ist, eindeutig identifiziert, und eines dem ersten Datenelement zugeordneten ersten Salt-Werts erzeugt. Der Indikator zeigt an, dass es sich um ein Provisionierungstoken für eine Kopie des ausgestellten Dokuments handelt. Der erste Datensatz ist mit einem ersten Signaturschlüssel eines den Provisionierungstoken erzeugenden Ausstellerdienstes signiert ist.

In einer ersten Datenbank ist ein erster Datenbankeintrag mit einer ersten Zuordnung des ersten Salt-Werts zu dem ersten Datenelement gespeichert.

In einer zweiten Datenbank ist ein zweiter Datenbankeintrag mit Datenelementen des ausgestellten Dokuments gespeichert.

Das Verfahren umfasst durch einen ersten Server des Ausstellerdienstes:
∘ Empfangen einer Ausstellungsanfrage zum Ausstellen der auszustellenden Kopie des ausgestellten Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen ersten Datenelements,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen der Kopie des Dokuments, wobei das Ausstellen der Kopie des Dokuments umfasst:
   - Auslesen des zweiten Datenbankeintrags aus der zweiten Datenbank,
   - Erstellen eines zweiten Datensatzes, welcher ein oder mehrere der Datenelemente des zweiten Datenbankeintrags, welche dem ausgestellten Dokument zugeordnet sind, in Klartext umfasst, wobei der zweite Datensatz ferner einen Indikator in Klartext umfasst, welcher anzeigt, dass es sich um einen Datensatz einer Kopie des ausgestellten Dokuments handelt,
   - Senden einer Schlüsselabfrage an das Endgerät,
   - Empfangen eines dem Endgerät zugeordneten öffentlichen kryptographischen Schlüssel,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen der ausgestellten Kopie des Dokuments in Form des signierten zweiten Datensatzes,
   - Speichern einer Zuordnung des empfangenen öffentlichen kryptographischen Schlüssels des Endgeräts zu der ausgestellten Kopie des Dokuments in der ersten Datenbank,
∘ Senden der ausgestellten Kopie des Dokuments an das Endgerät.

Ausführungsformen können den Vorteil haben, dass eine digitale Kopie eines Dokuments ausgestellt werden kann, die kryptographisch an ein Endgerät, insbesondere ein mobiles Endgerät, wie beispielsweise ein Smartphone, gebunden bzw. gekoppelt ist. Eine Berechtigung zur Verwendung der entsprechenden Kopie des Dokuments kann mit einem dem öffentlichen kryptographischen Schlüssel zugeordneten privaten kryptographischen Schlüssel des Endgeräts nachgewiesen werden, welcher beispielsweise in einem geschützten Speicherbereich des eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von dem Dokument umfasst öffentlichen kryptographischen Schlüssel des Endgeräts validiert werden kann. Insbesondere kann die Kopie eines Dokuments an ein anderes Endgerät gekoppelt werden als das Dokument.

Zum Nachweis der Berechtigung zum Empfang der auszustellenden digitalen Kopie des Dokuments mit dem Endgerät und zur kryptographischen Kopplung an das Endgerät im Zuge der Ausstellung ist der Provisionierungstoken notwendig. Wer sich im Besitz des entsprechenden Provisionierungstokens befindet kann das Ausstellen der Kopie des Dokuments initiieren.

Durch das Löschen zumindest der in dem ersten Datenbankeintrag gespeicherten Salt-Werte kann sichergestellt werden, dass der Provisionierungstoken nur einmal zum Ausstellen einer Kopie des Dokuments verwendet werden kann.

Datenelemente des Dokuments bzw. der Kopie des Dokuments werden in dem Provisionierungstoken beispielsweise nicht in Klartext, sondern nur in gehashter und damit geschützter Form gespeichert. Somit kann sichergestellt werden, dass die entsprechende Datenelemente nicht aus dem Provisionierungstoken abgeleitet werde können. Um das Hashen zusätzlich abzusichern, werden die Datenelemente, z.B. das erste Datenelement, jeweils mit einem Salt-Wert kombiniert und die resultierte Kombination zum Erzeugen der in dem Provisionierungstoken gespeicherten Hashwerte, beispielsweise des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Nach einer Verwendung des Provisionierungstokens zum Nachweis der Berechtigung zum Empfang der auszustellenden Kopie, wird der Salt-Wert beispielsweise gelöscht. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang der auszustellenden digitalen Kopie des Dokuments verwendet werden.

Der Provisionierungstoken stellt ein kryptographisch gesichertes Verbindungsglied zwischen einer Identifizierung eines Anfragenstellers bei Erstellen des Provisionierungstoken und einem Ausstellen der auszustellenden Kopie des Dokuments dar. Somit kann das Ausstellen über einen von dem Identifizieren unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte. Dabei wird durch den Indikator angezeigt, dass mit dem entsprechenden Provisionierungstoken lediglich eine Kopie des Dokuments ausgestellt werden kann.

Auf ein erfolgreiches Validieren des Provisionierungstoken hin, wird die von dem Ausstellerdienst signierte Kopie des Dokuments ausgestellt, welches die Datenelemente des Dokuments in Klartext sowie den öffentlichen kryptographischen Schlüssel des Endgeräts zur kryptographischen Bindung bzw. Kopplung an das entsprechende Endgerät umfasst.

Ein entsprechendes Provisionierungstoken für eine digitale Kopie eines Dokuments ermöglicht es dem Besitzer des Dokuments einem anderen Nutzer, welcher keinen Zugriff auf das entsprechende Dokument besitzt, eine digitale Kopie zur Verfügung zu stellen. Der andere Nutzer kann unter Verwendung des Provisionierungstoken selbstständig die Kopie des Dokuments ausstellen lassen und herunterladen bzw. empfangen.

Beispielsweise handelt es sich bei der Kopie des Dokuments um eine Kopie einer elektronischen Zulassungsbescheinigung I. In diesem Fall kann ein Fahrzeughalter anderen Fahrern eines Fahrzeugs mit dem vorliegenden Verfahren jeweils eine Kopie der elektronischen Zulassungsbescheinigung I zur Verwendung bereitstellen. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten von Vorteil sein.

Anhand des Indikators der ausgestellten Kopie wird angezeigt, dass es sich um ein eine Kopie des Dokuments handelt. Beispielsweise unterscheidet sich eine solche Kopie von dem Originaldokument lediglich durch den entsprechenden Indikator und die kryptographische Bindung an ein anderes Endgerät, d.h. einem anderen von der Kopie umfassten kryptographischen Schlüssel im Vergleich zu dem von dem Originaldokument umfassten kryptographischen Schlüssel.

Das Senden der ausgesellten Kopie kann auf verschiedene Weise erfolgen. Beispielsweise kann die Kopie automatisch gesendet werden. Beispielsweise kann ein QR-Code zum Herunterladen der Kopie bereitgestellt werden. Beispielsweise können Informationen zum Nachweisen einer Berechtigung zum Herunterladen der Kopie an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Unter einem Dokument wird hier insbesondere eine Urkunde verstanden, wie etwa eine Geburtsurkunde, eine Heiratsurkunde, ein Staatsbürgerschaftsnachweis, ein Ausweisdokument, insbesondere Reisepass, Personalausweis, Visum sowie Führerschein, Fahrzeugschein oder Fahrzeugbrief.

Unter einer Kopie eines Dokuments wird eine inhaltlich übereinstimmende Version des Dokuments verstanden, welche mittels eines Indikators explizit als Kopie gekennzeichnet ist.

Nach Ausführungsformen handelt es sich bei der ersten Datenbank und der zweiten Datenbank um Teile ein und derselben Datenbank. Nach Ausführungsformen handelt es sich bei der ersten Datenbank und der zweiten Datenbank um voneinander unabhängige Datenbanken.

Die erste Datenbank stellt beispielsweise Daten bereit, welche zum Prüfen der Gültigkeit von Provisionierungstoken, Dokument und/oder Dokumentenkopien dienen. In der zweiten Datenbank sind beispielsweise Datenelemente auszustellender Dokumente und/oder Dokumentenkopien gespeichert.

Nach Ausführungsformen umfasst das Verfahren ferner ein Empfangen des ersten Datenelements und ein Verwenden des empfangenen ersten Datenelements zum Auslesen des ersten Datenbankeintrags aus der ersten Datenbank.

Ausführungsformen können den Vorteil haben, dass unter Verwendung des ersten Datenelements der ersten Datenbankeintrag mit den zum Validieren des Provisionierungstoken notwendigen Daten, beispielsweise den Salt-Werten, ausgelesen werden kann.

Nach Ausführungsformen wird die Zuordnung des empfangenen öffentlichen kryptographischen Schlüssels des Endgeräts zu der ausgestellten Kopie des Dokuments in dem ersten Datenbankeintrags der ersten Datenbank gespeichert.

Ausführungsformen können den Vorteil haben, dass somit die kryptographische Bindung bzw. Kopplung an das entsprechende Endgerät zentral bei dem Ausstellerdient hinterlegt bzw. festgelegt werden kann.

Nach Ausführungsformen umfasst das Validieren des Provisionierungstokens, auf eine erfolgreiche Prüfung hin, ein Löschen aller dem Provisionierungstoken zugeordneter Daten aus dem ersten Datenbankeintrag in der ersten Datenbank.

Ausführungsformen können den Vorteil haben, dass sichergestellt werden kann, dass der Provisionierungstoken kein weiteres Mal zum Ausstellen einer Kopie des Dokuments verwendet werden kann.

Nach Ausführungsformen umfasst der zweite Datensatz alle der Datenelemente des zweiten Datenbankeintrags, welche dem ausgestellten Dokument zugeordnet sind, in Klartext. Ausführungsformen können den Vorteil haben, dass die ausgestellte Kopie des Dokuments alle Datenelemente des Dokuments umfasst, wie sie in dem zweiten Datenbankeintrag hinterlegt sind.

Nach Ausführungsformen handelt es sich bei dem ersten kryptographischen Signaturschlüssel und dem zweiten kryptographischen Signaturschlüssel des Ausstellerdienstes um ein und denselben Signaturschlüssel. Nach Ausführungsformen handelt es sich dem ersten kryptographischen Signaturschlüssel und dem zweiten kryptographischen Signaturschlüssel des Ausstellerdienstes um zwei verschiedene kryptographischen Signaturschlüssel.

Nach Ausführungsformen wird der Provisionierungstoken zusammen mit der Ausstellungsanfrage empfangen. Nach Ausführungsformen wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Nach Ausführungsformen wird das erste Datenelement verwendet zum Bereitstellen eines Datenbankzugriffsschlüssels zum Identifizieren des in der ersten Datenbank gespeicherten ersten Datenbankeintrags mit der ersten Zuordnung des erzeugten ersten Salt-Werts zu dem ersten Datenelement.

Ausführungsformen können den Vorteil haben, dass unter Verwendung des ersten Datenelements, welches das Dokument, von welchem eine Kopie auszustellen ist, eindeutig identifiziert, auf den ersten Datenbankeintrag in der ersten Datenbank zugegriffen werden kann, welcher Daten bereitstellt, die zum Prüfen der Gültigkeit des Provisionierungstokens dienen.

Nach Ausführungsformen umfasst das Verfahren ferner ein Empfangen eines zweiten Datenelements des ausgestellten Dokuments, welches zum Auslesen des ersten Datenbankeintrags aus der ersten Datenbank verwendet wird. Das zweite Datenelement wird zum Bereitstellen des Datenbankzugriffsschlüssels zum Identifizieren des in der ersten Datenbank gespeicherten ersten Datenbankeintrags verwendet.

Beispielsweise dient das zweite Datenelement in Kombination mit dem ersten Datenelement zum Bereitstellen eines Datenbankzugriffsschlüssels, beispielsweise als Primärschlüssel, zum Zugreifen auf den ersten Datenbankeintrag in der ersten Datenbank.

Nach Ausführungsformen handelt es sich bei dem zweiten Datenelement des ausgestellten Dokuments um ein Datenelement, welches das ausgestellte Dokument eindeutig identifiziert.

Nach Ausführungsformen wird ein Zugriff auf die zweite Datenbank über einen zweiten Server bereitgestellt. Das Abfragen des zweiten Datenbankeintrags umfasst ein Senden einer Abfrage an den zweiten Server und einen Empfang des zweiten Datenbankeintrags in Antwort auf die Abfrage.

Ausführungsformen können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Nach Ausführungsformen erfolgt das Abfragen des zweiten Datenbankeintrags unter Verwendung des dem ausgestellten Dokument zugeordneten ersten Datenelements, welches das ausgestellte Dokument eindeutig identifiziert. Nach Ausführungsformen umfasst die Abfrage des zweiten Datenbankeintrags das dem ausgestellten Dokument zugeordnete erste Datenelement, welches das ausgestellte Dokument eindeutig identifiziert. Das erste Datenelement dient beispielsweise zum Bereitstellen eines Datenbankzugriffsschlüssels, beispielsweise als Primärschlüssel, zum Zugreifen auf den zweiten Datenbankeintrag.

Nach Ausführungsformen erfolgt das Abfragen des zweiten Datenbankeintrags unter Verwendung des zweiten dem ausgestellten Dokument zugeordneten zweiten Datenelements, welches das ausgestellte Dokument beispielsweise eindeutig identifiziert. Nach Ausführungsformen umfasst die Abfrage des zweiten Datenbankeintrags das dem ausgestellten Dokument zugeordnete zweite Datenelement. Beispielsweise können auch Identifikationsdaten des identifizierenten Anfragenstellers dazu dienen, einen dem Anfragensteller zugeordneten zweiten Datenbankeintrag in der zweiten Datenbank zu identifizieren.

Nach Ausführungsformen umfasst der erste Datensatz des Provisionierungstokens ferner einen zweiten Hashwert, welcher unter Verwendung einer zweiten Kombination eines Einmalkennworts und eines dem Einmalkennwort zugeordneten zweiten Salt-Werts erzeugt ist. In dem ersten Datenbankeintrag ist der ersten Datenbank eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie des ausgelesenen ersten Datenbankeintrags.

Ausführungsformen können den Vorteil haben, dass zusätzlich zu dem Besitz des Provisionierungstoken das entsprechende Einmalkennwort, etwa eine TAN, zum erfolgreichen Nachweis der Berechtigung zum Empfang der auszustellenden digitalen Kopie des Dokuments mit einem Endgerät und zur kryptographischen Kopplung an das Endgerät im Zuge der Ausstellung notwendig.

Nach Ausführungsformen umfasst der zweite Datensatz der ausgestellten Kopie des Dokuments ferner eine Angabe eines Zeitpunkts der Ausstellung der Kopie.

Ausführungsformen können den Vorteil haben, dass dem Ausstellen der Kopie des Dokuments ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung der Kopie kann beispielsweise geprüft werden, ob es sich bei der entsprechenden Kopie um eine aktuelle Version mit aktuellen Datenelementen handelt oder ob eine Aktualisierung notwendig ist.

Nach Ausführungsformen umfasst das Verfahren ferner ein Aktualisieren der ausgestellten Kopie des Dokuments. Das Aktualisieren umfasst:
∘ Empfangen einer Aktualisierungsanfrage zum Aktualisieren der ausgestellten Kopie des Dokuments von dem Endgerät, wobei die Aktualisierungsanfrage die ausgestellte Kopie umfasst,
∘ Auslesen des zweiten Datenbankeintrags aus der zweiten Datenbank unter Verwendung des ersten Datenelements der empfangenen Kopie des Dokuments, wobei der zweite Datenbankeintrag eine Angabe eines Zeitpunkts einer letzten Aktualisierung des zweiten Datenbankeintrags umfasst,
∘ Vergleichen der Angabe des Zeitpunkts der Ausstellung der empfangenen Kopie des Dokuments mit der Angabe des Zeitpunkts der letzten Aktualisierung des zweiten Datenbankeintrags,
∘ Feststellen, dass die letzte Aktualisierung des zweiten Datenbankeintrags nach dem Ausstellen der Kopie des Dokuments erfolgt ist,
∘ Ausstellen einer aktualisierten Kopie des Dokuments, wobei das Ausstellen der aktualisierten Kopie des Dokuments umfasst:
   - Erstellen eines vierten Datensatzes, welcher ein oder mehrere der Datenelemente des ausgelesenen zweiten Datenbankeintrags, welche der auszustellenden Kopie des Dokuments zugeordnet sind, in Klartext umfasst, wobei der vierte Datensatz ferner einen Indikator in Klartext umfasst, welcher anzeigt, dass es sich um einen Datensatz einer Kopie des ausgestellten Dokuments handelt,
   - Hinzufügen des öffentlichen kryptographischen Schlüssels des Endgeräts aus der empfangenen Kopie des Dokuments zu dem vierten Datensatz zum kryptographischen Binden des vierten Datensatzes an das Endgerät,
   - Signieren des vierten Datensatzes mit dem zweiten kryptographischen Signaturschlüssel des Ausstellerdienstes,
   - Bereitstellen der aktualisierten Kopie des Dokuments in Form des signierten vierten Datensatzes,
∘ Senden der aktualisierten Kopie des Dokuments an das Endgerät.

Ausführungsformen können den Vorteil haben, dass so basierend auf einem Vergleich der Angabe des Zeitpunkts der Ausstellung der Kopie des Dokuments mit der Angabe des Zeitpunkts der letzten Aktualisierung des zweiten Datenbankeintrags geprüft werden kann, ob die Kopie aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen der Kopie erfolgt ist, wird eine aktualisierte Kopie des Dokuments ausgestellt. Somit kann sichergestellt werden, dass stets eine aktuelle Version der Kopie des Dokuments zur Verfügung steht.

Nach Ausführungsformen ist die empfangene ausgestellte Kopie des Dokuments mit einem dem Endgerät zugeordneten privaten kryptographischen Schlüssel signiert. Das Verfahren umfasst ferner ein Validieren der empfangenen Kopie des Dokuments. Das Validieren umfasst ein Prüfen der Signatur der empfangenen Kopie des Dokuments mit dem privaten kryptographischen Schlüssel des Endgeräts unter Verwendung des von der empfangenen Kopie des Dokuments umfassten öffentlichen kryptographischen Schlüssels des Endgeräts.

Ausführungsformen können den Vorteil haben, dass die Kopie als Voraussetzung für eine Aktualisierung zunächst validiert wird. Somit kann sichergestellt werden, dass nur für ein authentisches Kopie bzw. eine gültige Kopie eine Aktualisierung ausgeführt wird.

Nach Ausführungsformen ist die von der Aktualisierungsanfrage umfasste Kopie des Dokuments mit dem privaten kryptographischen Schlüssel des Endgeräts signiert. Nach Ausführungsformen ist die die Kopie umfassende Aktualisierungsanfrage mit dem privaten kryptographischen Schlüssel des Endgeräts signiert.

Nach Ausführungsformen, falls basierend auf dem Vergleichen der Angabe des Zeitpunkts der Ausstellung der Kopie mit der Angabe des Zeitpunkts der letzten Aktualisierung des zweiten Datenbankeintrags festgestellt wird, dass die letzte Aktualisierung des zweiten Datenbankeintrags vor dem Ausstellen der Kopie erfolgt ist, wird eine Information an den Anfragensteller gesendet, welche angibt, dass es sich bei der ausgestellten Kopie des Dokuments um eine aktuelle Kopie mit aktuellen Datenelementen handelt.

Nach Ausführungsformen umfasst der zweite Datensatz ferner eine Angabe einer für die ausgestellte Kopie vorgesehene Gültigkeitsdauer im Klartext.

Ausführungsformen können den Vorteil haben, dass für die Kopie des Dokuments eine Gültigkeitsdauer festgelegt werden kann. So kann der Besitzer des Dokuments effektiv die Gültigkeitsdauer der auszustellenden Kopie des Dokuments beschränken, selbst wenn der Provisionierungstoken zum Anfragen des Ausstellens der Kopie selbständig durch einen anderen Nutzer erfolgt.

Nach Ausführungsformen umfasst der Provisionierungstoken ferner einen dritten Hashwert, welcher eine dritte Kombination der Angabe der Gültigkeitsdauer mit einem dritten Salt-Wert umfasst, wobei in dem ersten Datenbankeintrag in der ersten Datenbank eine dritte Zuordnung des dritten Salt-Werts zu der Angabe der Gültigkeitsdauer gespeichert ist.

Ausführungsformen können den Vorteil haben, dass die Gültigkeitsdauer in kryptographisch gesicherter Form als Hashwert in dem Provisionierungstoken codiert werden kann.

Nach Ausführungsformen umfasst das Prüfen der in dem Provisionierungstoken eingetragenen Hashwerte ein Prüfen des dritten Hashwerts.

Ausführungsformen können den Vorteil haben, dass ein Prüfen der Gültigkeitsdauer erfolgt.

Nach Ausführungsformen umfasst das Verfahren ferner ein Revozieren der ausgestellten Kopie des Dokuments umfasst. Das Revozieren umfasst:
∘ Empfangen einer Revozierungsanfrage zum Revozieren der ausgestellten Kopie des Dokuments von einem an das ausgestellte Dokument kryptographisch gebundenen Endgerät,
∘ Löschen zumindest der Zuordnung des öffentlichen kryptographischen Schlüssels des an die zu revozierende Kopie des Dokuments kryptographisch gebundenen Endgeräts aus der ersten Datenbank,
∘ Senden einer Revozierungsbestätigung an das Endgerät.

Ausführungsformen können den Vorteil haben, dass eine Möglichkeit zum Revozieren einer ausgestellten Kopie des Dokuments bereitgestellt werden kann. Somit kann der Besitzer des Dokuments, selbst nach einer Übergabe des Provisionierungstokens an einen anderen Nutzer zum Ausstellen der Kopie des Dokuments, noch ein Ausstellen der entsprechenden Kopie unterbinden.

Nach Ausführungsformen werden im Zuge des Löschens alle Daten zu der zu revozierenden Kopie des Dokuments aus der ersten Datenbank gelöscht. In diesem Fall, umfasst die erste Datenbank keine Daten mehr zum Validieren der Kopie des Dokuments, weshalb diese nicht mehr verwendet werden kann.

Sind die Daten für individuelle Kopien in der ersten Datenbank individuell identifizierbar, kann ein gezieltes Löschen von Daten für bestimmte Kopien desselben Dokuments erfolgen.

Nach Ausführungsformen werden im Zuge des Löschens Daten zu allen Kopien des vorliegenden digitalen Dokuments aus der ersten Datenbank gelöscht. Sind die Daten für individuelle Kopien des Dokuments in der ersten Datenbank individuell nicht identifizierbar, werden beispielsweise die Daten für alle Kopien gelöscht

Nach Ausführungsformen umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts.

Ausführungsformen können den Vorteil haben, dass ein Revozieren nur unter Nachweis einer entsprechenden Berechtigung in Form des ausgestellten Dokuments ermöglicht wird.

Nach Ausführungsformen ist das von der Revozierungsanfrage umfasste Dokument mit dem privaten kryptographischen Schlüssel des an das ausgestellte Dokument kryptographisch gebundenen Endgeräts signiert. Nach Ausführungsformen ist die das Dokument umfassende Revozierungsanfrage mit dem privaten kryptographischen Schlüssel des an das ausgestellte Dokument kryptographisch gebundenen Endgeräts signiert.

Nach Ausführungsformen handelt es sich bei der ausgestellten Kopie des Dokuments um eine Kopie eines Fahrzeugdokuments, beispielsweise um eine Kopie einer elektronischen Zulassungsbescheinigung Teil I.

Ausführungsformen können den Vorteil haben, dass Kopie einer elektronischen Zulassungsbescheinigung Teil I ausgestellt werden kann. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten von Vorteil sein.

Nach Ausführungsformen handelt es sich bei dem ersten Datenelement um eine eindeutige Fahrzeug-ID, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Nach Ausführungsformen handelt es sich bei dem zweiten Datenelement um ein dem Fahrzeug zugeordnetes Datenelement, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Ausführungsformen umfassen ferner einen Server eines Ausstellerdienst zum Ausstellen einer digitalen Kopie eines ausgestellten digitalen Dokuments unter Verwendung eines digitalen Provisionierungstokens. Der der Server umfasst einen Prozessor, einen Speicher mit Programminstruktionen und eine Kommunikationsschnittstelle zur Kommunikation über ein Netzwerk.

Der Provisionierungstoken weist eine Berechtigung zum Empfang der auszustellenden digitalen Kopie des ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines dem ausgestellten Dokument zugeordneten ersten Datenelements, welches das ausgestellte Dokument, für das eine Kopie auszustellen ist, eindeutig identifiziert, und eines dem ersten Datenelement zugeordneten ersten Salt-Werts erzeugt. Der Indikator zeigt an, dass es sich um ein Provisionierungstoken für eine Kopie des ausgestellten Dokuments handelt. Der erste Datensatz ist mit einem ersten Signaturschlüssel eines den Provisionierungstoken erzeugenden Ausstellerdienstes signiert.

Der Server besitzt Zugriff auf eine erste Datenbank, in der ein erster Datenbankeintrag mit einer ersten Zuordnung des ersten Salt-Werts zu dem ersten Datenelement gespeichert ist.

Der Server besitzt ferner Zugriff auf eine zweite Datenbank, in der ein zweiter Datenbankeintrag mit Datenelementen des ausgestellten Dokuments gespeichert ist.

Ein Ausführen der Programminstruktionen durch den Prozessor veranlasst den Prozessor dazu, den Server zu steuern zum:
∘ Empfangen einer Ausstellungsanfrage zum Ausstellen der auszustellenden Kopie des ausgestellten Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen ersten Datenelements,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen der Kopie des Dokuments, wobei das Ausstellen der Kopie des Dokuments umfasst:
   - Auslesen des zweiten Datenbankeintrags aus der zweiten Datenbank,
   - Erstellen eines zweiten Datensatzes, welcher ein oder mehrere der Datenelemente des zweiten Datenbankeintrags, welche dem ausgestellten Dokument zugeordnet sind, in Klartext umfasst, wobei der zweite Datensatz ferner einen Indikator in Klartext umfasst, welcher anzeigt, dass es sich um einen Datensatz einer Kopie des ausgestellten Dokuments handelt,
   - Senden einer Schlüsselabfrage an das Endgerät,
   - Empfangen eines dem Endgerät zugeordneten öffentlichen kryptographischen Schlüssel,
   - Hinzufügen des empfangenen öffentlichen kryptographischen Schlüssels des Endgeräts zu dem zweiten Datensatz zum kryptographischen Binden des zweiten Datensatzes an das Endgerät,
   - Signieren des zweiten Datensatzes mit einem dem Ausstellerdienst zugeordneten zweiten kryptographischen Signaturschlüssel,
   - Bereitstellen der ausgestellten Kopie des Dokuments in Form des signierten zweiten Datensatzes,
   - Speichern einer Zuordnung des empfangenen öffentlichen kryptographischen Schlüssels des Endgeräts zu der ausgestellten Kopie des Dokuments in der ersten Datenbank,
∘ Senden der ausgestellten Kopie des Dokuments an das Endgerät.

Nach Ausführungsformen ist der Server dazu konfiguriert jede der zuvor beschrieben Ausführungsformen des Verfahrens zum Ausstellen der Kopie des digitalen Dokuments auszuführen.

Ausführungsformen umfassen ferner ein System umfassend einen Server eines Ausstellerdienst nach einer der vorangehenden Ausführungsformen sowie einen weiteren Server, welcher den Zugriff auf die zweite Datenbank bereitgestellt. Der zweite Server umfasst einen weiteren Prozessor, einen weiteren Speicher mit weiteren Programminstruktionen und eine weiteren Kommunikationsschnittstelle zur Kommunikation über das Netzwerk.

Das Abfragen des zweiten Datenbankeintrags umfasst ein Senden einer Abfrage von dem Server an den weiteren Server und einen Empfang des von dem weiteren Server in Antwort auf die Abfrage gesendeten zweiten Datenbankeintrags durch den Server.

Nach Ausführungsformen ist das System dazu konfiguriert jede der zuvor beschrieben Ausführungsformen des Verfahrens zum Ausstellen der digitalen Kopie des Dokuments auszuführen.

Nach Ausführungsformen umfasst das System ferner das Endgerät.

Ausführungsformen umfassen ferner eine digitale Kopie eines ausgestellten Dokuments. Die Kopie umfasst einen Datensatz mit Datenelementen und einen Indikator in Klartext. Der Indikator zeigt an, dass es sich um eine Kopie des ausgestellten Dokuments handelt. Der Datensatz ist mit einem Signaturschlüssel eines die Kopie des Dokuments ausstellenden Ausstellerdienstes signiert. Der Datensatz umfasst ferner einen öffentlichen kryptographischen Schlüssel eines Endgeräts zum kryptographischen Binden der Kopie des Dokuments an das Endgerät.

Nach Ausführungsformen handelt es sich bei der digitalen Kopie des Dokuments um ein Erzeugnis eines der zuvor beschriebenen Ausführungsformen des Verfahrens zum Ausstellen der Kopie des Dokuments.

Nach Ausführungsformen umfasst der signierte Datensatz ferner eine Angabe einer Gültigkeitsdauer der Kopie des Dokuments im Klartext.

Nach Ausführungsformen umfasst der signierte Datensatz ferner eine Angabe eines Zeitpunkts der Ausstellung der Kopie des Dokuments in Klartext.

Nach Ausführungsformen handelt es sich bei der Kopie um eine Kopie eines Fahrzeugdokuments, beispielsweise um eine Kopie einer elektronischen Zulassungsbescheinigung Teil I.

Ausführungsformen umfassen ein Verfahren zum Erzeugen eines digitalen Provisionierungstokens durch einen Ausstellerdienst. Der Provisionierungstoken weist eine Berechtigung zum Empfang einer auszustellenden digitalen Kopie eines ausgestellten digitalen Dokuments mit einem Endgerät und zur kryptographischen Kopplung an das Endgerät im Zuge der Ausstellung nach.

Das Verfahren umfasst durch einen ersten Server des Ausstellerdienstes:
∘ Empfangen einer Erstellungsanfrage zum Erstellen des Provisionierungstokens,
∘ Identifizieren des Anfragenstellers unter Verwendung des ausgestellten digitalen Dokuments,
∘ Erstellen des angefragten Provisionierungstokens in Form eines signierten Datensatzes, wobei das Erstellen umfasst:
   - Empfangen eines dem ausgestellten Dokument zugeordneten ersten Datenelements, welches das ausgestellte Dokument, für das eine Kopie auszustellen ist, eindeutig identifiziert,
   - Prüfen des ersten Datenelements unter Verwendung eines aus einer zweiten Datenbank ausgelesenen zweiten Datenbankeintrags, welcher von dem ausgestellten Dokument umfasste Daten umfasst,
   - Erzeugen eines ersten Salt-Werts, welcher dem ersten Datenelement zugeordnet wird, wobei das Zuordnen ein Speichern einer ersten Zuordnung des ersten Salt-Werts zu dem ersten Datenelement in einer ersten Datenbank umfasst,
   - Berechnen eines ersten Hashwerts unter Verwendung einer ersten Kombination des ersten Datenelements und des ersten Salt-Werts,
   - Erstellen eines Datensatzes, welcher den ersten Hashwert sowie einen Indikator umfasst, wobei der Indikator anzeigt, dass es sich um ein Provisionierungstoken für eine Kopie des ausgestellten Dokuments handelt,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierenten Anfragensteller.

Ausführungsformen können den Vorteil haben, dass in kryptographisch gesicherter Weise ein Provisionierungstoken bereitgestellt wird. Der Provisionierungstoken weist eine Berechtigung zum Empfang einer auszustellenden digitalen Kopie eines ausgestellten digitalen Dokuments mit einem Endgerät und zur kryptographischen Kopplung an das Endgerät im Zuge der Ausstellung nach. Diese Berechtigung wird durch die Signatur des Datensatzes mit dem dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert unter Verwendung des ausgestellten digitalen Dokuments identifiziert. Beispielsweise wird das ausgestellte digitale Dokument mit der Erstellungsanfrage gesendet, wobei die Erstellungsanfrage und/oder das empfangene Dokument mit einem privaten kryptographischen Schlüssel des Endgeräts, beispielsweise eines mobilen Endgeräts, signiert ist, an welches das Dokument kryptographisch gekoppelt ist. Beispielsweise sind die Datenelemente des zweiten Datenbankeintrags bzw. der zweite Datenbankeintrag einer bestimmten Person oder Entität zugeordnet. Durch das Identifizieren des Anfragenstellers kann beispielsweise sichergestellt werden, dass sich bei dem Anfragensteller um die entsprechende berechtigte Person oder Entität handelt.

Ferner wird geprüft, ob es sich bei dem empfangenen Datenelement tatsächlich um ein in dem zweiten Datenbankeintrag gespeichertes Datenelement und damit um ein korrektes Datenelement handelt. Beispielsweise werden zusätzlich zu dem ersten Datenelement noch ein oder mehrere weitere Datenelemente empfangen, welche unter Verwendung des zweiten Datenbankeintrags geprüft werden.

Das erste Datenelement wird zum Identifizieren des auszustellenden Dokuments verwendet. Somit kann anhand des in dem Provisionierungstoken gespeicherten ersten Hashwerts, welcher von dem ersten Datenelement abhängt, der zum Ausstellen der entsprechenden Kopie des Dokuments zu verwendende Datenbankeintrag der zweiten Datenbank, nämlich der zweite Datenbankeintrag, identifiziert werden. Das ersten Datenelement dient beispielsweise selbst als ein Datenbankzugriffsschlüssel, z.B. ein Primärschlüssel, oder zum Ableiten eines Datenbankzugriffsschlüssels, z.B. eines Primärschlüssels. Beispielsweise kann anhand des ersten Datenelements der zum Prüfen zu verwendende zweite Datenbankeintrag identifiziert werden.

Datenelemente des Dokuments bzw. der Kopie des Dokuments werden in dem Provisionierungstoken beispielsweise nicht in Klartext, sondern nur in gehashter und damit geschützter Form gespeichert. Somit kann sichergestellt werden, dass die entsprechende Datenelemente nicht aus dem Provisionierungstoken abgeleitet werde können. Um das Hashen zusätzlich abzusichern, werden die Datenelemente, z.B. das erste Datenelement, jeweils mit einem Salt-Wert kombiniert und die resultierte Kombination zum Erzeugen der in dem Provisionierungstoken gespeicherten Hashwerte, beispielsweise des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Somit kann sichergestellt werden, dass der Provisionierungstoken nur einmal verwendet werden kann. Nach einer Verwendung des Provisionierungstokens zum Nachweis der Berechtigung zum Empfang der auszustellenden digitalen Kopie des Dokuments, wird der Salt-Wert beispielsweise gelöscht. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang der auszustellenden digitalen Kopie des Dokuments verwendet werden.

Der Provisionierungstoken stellt somit ein kryptographisch gesichertes Verbindungsglied zwischen einer Identifizierung eines Anfragenstellers mittels des nur von dem Anfragensteller zu verwendenden Dokuments und einem Ausstellen der auszustellenden Kopie des Dokuments dar. Dabei kann die Ausstellung der Kopie des Dokuments von einem anderen Nutzer angefragt werden, welcher keinen Zugriff auf das ausgestellte Dokument besitzt. Somit kann das Ausstellen über einen von dem Identifizieren unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Nach Ausführungsformen handelt es sich bei der ersten Datenbank und der zweiten Datenbank um Teile ein und derselben Datenbank. Nach Ausführungsformen handelt es sich bei der ersten Datenbank und der zweiten Datenbank um voneinander unabhängige Datenbanken.

Die erste Datenbank stellt beispielsweise Daten bereit, welche zum Prüfen der Gültigkeit von Provisionierungstoken, Dokument und/oder Dokumentenkopien dienen. In der zweiten Datenbank sind beispielsweise Datenelemente auszustellender Dokumente und/oder Dokumentenkopien gespeichert.

Ein entsprechendes Provisionierungstoken für eine digitale Kopie eines Dokuments ermöglicht es dem Besitzer des Dokuments einem anderen Nutzer, welcher keinen Zugriff auf das entsprechende Dokument besitzt, eine digitale Kopie zur Verfügung zu stellen. Der andere Nutzer erhält der Provisionierungstoken und kann unter Verwendung des Provisionierungstoken beispielsweise selbstständig die Kopie des Dokuments ausstellen lassen und herunterladen bzw. empfangen.

Beispielsweise handelt es sich bei der Kopie des Dokuments um eine Kopie einer elektronischen Zulassungsbescheinigung I. In diesem Fall kann ein Fahrzeughalter anderen Fahrern eines Fahrzeugs jeweils eine Kopie der elektronischen Zulassungsbescheinigung I zur Verwendung bereitstellen. Dies kann insbesondere im Falle von anderen Familienmitgliedern, welche dasselbe Fahrzeug nutzen, Mitarbeitern, welche denselben Firmenwagen nutzen, Teilnehmer eines Car-Sharing-Services, welche sich dasselbe Fahrzeug teilen, oder Kunden einer Autovermietung, welche dasselbe Fahrzeug, mieten von Vorteil sein.

Anhand des Indikators wird angezeigt, dass es sich um ein Provisionierungstoken für eine Kopie handelt. Beispielsweise unterscheidet sich der Provisionierungstoken für eine Kopie von einem Provisionierungstoken für das Originaldokument lediglich durch den entsprechenden Indikator.

Nach Ausführungsformen wird das erste Datenelement verwendet zum Bereitstellen eines Datenbankzugriffsschlüssels zum Identifizieren eines in der ersten Datenbank gespeicherten ersten Datenbankeintrags mit der ersten Zuordnung des erzeugten ersten Salt-Werts zu dem ersten Datenelement.

Ausführungsformen können den Vorteil haben, dass unter Verwendung des ersten Datenelements, welches das Dokument, für das eine Kopie auszustellen ist, eindeutig identifiziert, auf den ersten Datenbankeintrag in der ersten Datenbank zugegriffen werden kann, welcher Daten bereitstellt, die zum Prüfen der Gültigkeit des Provisionierungstokens dienen.

Nach Ausführungsformen wird das erste Datenelement von dem Anfragensteller empfangen und das Prüfen umfasst ein Prüfen, ob der zweite Datenbankeintrag das erste Datenelement umfasst.

Ausführungsformen können den Vorteil haben, dass somit sichergestellt werden kann, dass das von dem Anfragensteller empfangene erste Datenelement korrekt ist bzw. ein Datenbankeintrag mit Datenelementen für die auszustellende Kopie des Dokuments in der zweiten Datenbank gespeichert ist.

Nach Ausführungsformen wird das erste Datenelement als Teil des zweiten Datenbankeintrags der zweiten Datenbank empfangen und das Prüfen umfasst ein Prüfen, ob das erste Datenelement aus dem zweiten Datenbankeintrag stammt.

Ausführungsformen können den Vorteil haben, dass das erste Datenelement aus dem zweiten Datenbankeintrags der zweiten Datenbank ausgelesen wird. Damit kann sichergestellt werden, dass es sich bei dem empfangenen ersten Datenelement um ein korrektes Datenelement handelt bzw. ein Datenbankeintrag mit Datenelementen für die auszustellende Kopie des Dokuments in der zweiten Datenbank gespeichert ist.

Nach Ausführungsformen wird ein Zugriff auf die zweite Datenbank über einen zweiten Server bereitgestellt. Das Abfragen des zweiten Datenbankeintrags umfasst ein Senden einer Abfrage an den zweiten Server und den Empfang des zweiten Datenbankeintrags in Antwort auf die Abfrage.

Ausführungsformen können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Nach Ausführungsformen erfolgt das Abfragen des zweiten Datenbankeintrags unter Verwendung des dem ausgestellten Dokument für das eine Kopie auszustellen ist, zugeordneten ersten Datenelements, welches das ausgestellte Dokument eindeutig identifiziert. Nach Ausführungsformen umfasst die Abfrage des zweiten Datenbankeintrags das erste Datenelement. Das erste Datenelement dient beispielsweise zum Bereitstellen eines Datenbankzugriffsschlüssels, beispielsweise als Primärschlüssel, zum Zugreifen auf den zweiten Datenbankeintrag.

Nach Ausführungsformen erfolgt das Abfragen des zweiten Datenbankeintrags unter Verwendung von Identifikationsdaten aus dem ausgestellten Dokument. Nach Ausführungsformen umfasst die Abfrage des zweiten Datenbankeintrags die entsprechenden Identifikationsdaten. Beispielsweise können auch Identifikationsdaten des identifizierenten Anfragenstellers dazu dienen, einen dem Anfragensteller zugeordneten zweiten Datenbankeintrag in der zweiten Datenbank zu identifizieren.

Nach Ausführungsformen umfasst das Erstellen des angefragten Provisionierungstokens ferner:
- Erzeugen eines dem identifizierenten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des ersten Datenelements in der ersten Datenbank umfasst,
- Berechnen eines zweiten Hashwerts unter Verwendung einer zweiten Kombination des Einmalkennworts und des zweiten Salt-Werts,
- Verwenden des zweiten Hashwerts zum Erstellen des Datensatzes, wobei der Datensatz den zweiten Hashwert umfasst,
- Senden des Einmalkennworts an den identifizierenten Anfragensteller.

Ausführungsformen können den Vorteil haben, dass zusätzlich ein Einmalpasswort für den Anfragensteller bzw. den zukünftigen Nutzer des Provisionierungstokens bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang des auszustellenden digitalen Dokuments mit einem Endgerät und zur kryptographischen Kopplung an das Endgerät im Zuge der Ausstellung der Kopie notwendig.

Nach Ausführungsformen erfolgt das Senden des Einmalkennworts an den identifizierenten Anfragensteller über einen Kanal, welcher unabhängig von demjenigen Kanal ist, über welchen das ausgestellte Provisionierungstoken an den identifizierenten Anfragensteller gesendet wird. Beispielsweise wird das Einmalpasswort per Brief oder per SMS an den Anfragensteller gesendet.

Nach Ausführungsformen umfasst das Erstellen des angefragten Provisionierungstokens ferner:
- Empfangen eines zweiten dem ausgestellten Dokument, für das eine Kopie auszustellen ist, zugeordneten Datenelements,
- Prüfen des zweiten Datenelements unter Verwendung des aus der zweiten Datenbank ausgelesenen zweiten Datenbankeintrags,
- Erzeugen eines dritten Salt-Werts, welcher dem zweiten Datenelementen zugeordnet wird, wobei das Zuordnen ein Speichern einer dritten Zuordnung des dritten Salt-Werts zu dem zweiten Datenelement unter Verwendung des ersten Datenelements in der ersten Datenbank umfasst,
- Berechnen eines dritten Hashwerts unter Verwendung einer dritten Kombination des zweiten Datenelements mit dem dritten Salt-Wert,
- Verwenden des dritten Hashwerts zum Erstellen des Datensatzes, wobei der Datensatz den dritten Hashwert umfasst.

Ausführungsformen können den Vorteil haben, dass neben dem ersten Datenelement ein weiteres Datenelement mit dem Provisionierungstoken zum Identifizieren des Dokuments, für welches eine Kopie auszustellen ist, bereitgestellt werden kann. Beispielsweise handelt es sich bei dem Datenbankzugriffsschlüssel um eine Kombination aus dem ersten und dem zweiten Datenelement.

Nach Ausführungsformen handelt es sich bei dem zweiten Datenelement des ausgestellten Dokuments um ein Datenelement, welches das ausgestellte Dokument, für das eine Kopie auszustellen ist, eindeutig identifiziert.

Nach Ausführungsformen erfolgt das Abfragen des zweiten Datenbankeintrags unter Verwendung des zweiten dem ausgestellten Dokument zugeordneten zweiten Datenelements, welches das ausgestellte Dokument, für das eine Kopie auszustellen ist, eindeutig identifiziert. Nach Ausführungsformen umfasst die Abfrage des zweiten Datenbankeintrags das dem auszustellenden Dokument zugeordnete zweite Datenelement. Das zweite Datenelement dient beispielsweise in Kombination mit dem ersten Datenelement zum Bereitstellen eines Datenbankzugriffsschlüssels, beispielsweise als Primärschlüssel, zum Zugreifen auf den zweiten Datenbankeintrag.

Nach Ausführungsformen wird das zweite Datenelement verwendet zum Bereitstellen des Datenbankzugriffsschlüssels zum Identifizieren des in der ersten Datenbank gespeicherten ersten Datenbankeintrags. Beispielsweise dient das zweite Datenelement in Kombination mit dem ersten Datenelement zum Bereitstellen eines Datenbankzugriffsschlüssels, beispielsweise als Primärschlüssel, zum Zugreifen auf den ersten Datenbankeintrag in der ersten Datenbank.

Nach Ausführungsformen wird das zweite Datenelement von dem Anfragensteller empfangen und das Prüfen umfasst ein Prüfen, ob der zweite Datenbankeintrag das zweite Datenelement umfasst.

Ausführungsformen können den Vorteil haben, dass somit sichergestellt werden kann, dass das von dem Anfragensteller empfangene zweite Datenelement korrekt ist bzw. ein Datenbankeintrag mit Datenelementen für die auszustellende Kopie des Dokuments in der zweiten Datenbank gespeichert ist.

Nach Ausführungsformen wird das zweite Datenelement als Teil des zweiten Datenbankeintrags der zweiten Datenbank empfangen und das Prüfen umfasst ein Prüfen, ob das zweite Datenelement aus dem zweiten Datenbankeintrag stammt.

Ausführungsformen können den Vorteil haben, dass das zweite Datenelement aus dem zweiten Datenbankeintrags der zweiten Datenbank ausgelesen wird. Damit kann sichergestellt werden, dass es sich bei dem empfangenen zweiten Datenelement um ein korrektes Datenelement handelt bzw. ein Datenbankeintrag mit Datenelementen für die auszustellende Kopie des Dokuments in der zweiten Datenbank gespeichert ist.

Nach Ausführungsformen umfasst das Erstellen des angefragten Provisionierungstokens ferner:
- Empfangen einer Angabe einer für die auszustellende Kopie vorgesehene Gültigkeitsdauer,
- Verwenden der Angabe der Gültigkeitsdauer zum Erstellen des Datensatzes, wobei der Datensatz die Angabe der Gültigkeitsdauer umfasst.

Ausführungsformen können den Vorteil haben, dass in dem Provisionierungstoken bereits eine Gültigkeitsdauer für die auszustellende Kopie des Dokuments festgelegt werden kann. So kann der Besitzer des Dokuments effektiv die Gültigkeitsdauer der auszustellenden Kopie des Dokuments beschränken, selbst wenn der Provisionierungstoken zum Anfragen des Ausstellens der Kopie selbständig durch einen anderen Nutzer erfolgt.

Nach Ausführungsformen umfasst das Verwenden der Angabe der Gültigkeitsdauer zum Erstellen des Datensatzes ferner:
- Erzeugen eines vierten Salt-Werts, welcher der Angabe der Gültigkeitsdauer zugeordnet wird, wobei das Zuordnen ein Speichern einer vierten Zuordnung des vierten Salt-Werts zu der Angabe der Gültigkeitsdauer unter Verwendung des ersten Datenelements in der ersten Datenbank umfasst,
- Berechnen eines vierten Hashwerts unter Verwendung einer vierten Kombination der Angabe der Gültigkeitsdauer mit dem vierten Salt-Wert,
- Verwenden des vierten Hashwerts zum Erstellen des Datensatzes, wobei der Datensatz die Angabe der Gültigkeitsdauer in Form des vierten Hashwerts umfasst.

Ausführungsformen können den Vorteil haben, dass die Gültigkeitsdauer in kryptographisch gesicherter Form als Hashwert in dem Provisionierungstoken codiert werden kann.

Nach Ausführungsformen wird der Indikator, welcher anzeigt, dass es sich bei dem Provisionierungstoken um ein Provisionierungstoken für eine Kopie des ausgestellten Dokuments handelt, von dem Datensatz in Form eines fünften Hashwerts umfasst. Das Erstellen des angefragten Provisionierungstokens umfasst ferner:
- Erzeugen eines fünften Salt-Werts, welcher dem Indikator zugeordnet wird, wobei das Zuordnen ein Speichern einer fünften Zuordnung des fünften Salt-Werts zu dem Indikator unter Verwendung des ersten Datenelements in der ersten Datenbank umfasst,
- Berechnen eines fünften Hashwerts unter Verwendung einer fünften Kombination des Indikators mit dem fünften Salt-Wert,
- Verwenden des fünften Hashwerts zum Erstellen des Datensatzes.

Ausführungsformen können den Vorteil haben, dass der Indikator in kryptographisch gesicherter Form als Hashwert in dem Provisionierungstoken codiert werden kann.

Nach Ausführungsformen erfolgt das Signieren des Datensatzes nur unter Voraussetzung eines erfolgreichen Identifizierens des Anfragenstellers, sodass durch die Signatur ein erfolgreiches Identifizieren bestätigt wird.

Ausführungsformen können den Vorteil haben, dass durch das signierte Provisionierungstoken somit das erfolgreiche Identifizieren des Anfragenstellers anhand des ausgestellten Dokuments nachgewiesen werden kann.

Nach Ausführungsformen umfasst das Verfahren ferner ein Revozieren des Provisionierungstokens. Das Revozieren umfasst:
∘ Empfangen einer Revozierungsanfrage zum Revozieren des Provisionierungstokens von einem an das ausgestellte Dokument kryptographisch gebundenen Endgeräts,
∘ Löschen zumindest der dem zu revozierenden Provisionierungstoken zugeordneten Salt-Werte,
∘ Senden einer Revozierungsbestätigung an das Endgerät.

Ausführungsformen können den Vorteil haben, dass eine Möglichkeit zum Revozieren eines ausgegebenen Provisionierungstoken bereitgestellt werden kann. Somit kann der Besitzer des Dokuments, selbst nach einer Übergabe des Provisionierungstokens an einen anderen Nutzer zum Ausstellen der Kopie des Dokuments, noch ein Ausstellen der entsprechenden Kopie unterbinden.

Nach Ausführungsformen werden im Zuge des Löschens alle Daten zum dem zu revozierenden Provisionierungstoken aus der ersten Datenbank gelöscht. In diesem Fall, umfasst die erste Datenbank keine Daten mehr zum Validieren des Provisionierungstokens, weshalb dieses nicht mehr verwendet werden kann.

Sind die Daten für individuelle Provisionierungstoken in der ersten Datenbank individuell identifizierbar, kann ein gezieltes Löschen von Daten für bestimmte Provisionierungstoken erfolgen.

Nach Ausführungsformen werden im Zuge des Löschens Daten zu allen Provisionierungstoken aus der ersten Datenbank gelöscht, welche eine Berechtigung zum Empfang einer digitalen Kopie des vorliegenden digitalen Dokuments nachweisen. Sind die Daten für individuelle Provisionierungstoken in der ersten Datenbank individuell nicht identifizierbar, werden beispielsweise die Daten für alle Provisionierungstoken gelöscht.

Nach Ausführungsformen umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts.

Ausführungsformen können den Vorteil haben, dass ein Revozieren nur unter Nachweis einer entsprechenden Berechtigung in Form des ausgestellten Dokuments ermöglicht wird.

Nach Ausführungsformen ist das von der Revozierungsanfrage umfasste Dokument mit dem privaten kryptographischen Schlüssel des an das ausgestellte Dokument kryptographisch gebundenen Endgeräts signiert. Nach Ausführungsformen ist die das Dokument umfassende Revozierungsanfrage mit dem privaten kryptographischen Schlüssel des an das ausgestellte Dokument kryptographisch gebundenen Endgeräts signiert.

Nach Ausführungsformen handelt es sich bei der auszustellenden Kopie um eine Kopie eines Fahrzeugdokuments, beispielsweise um eine elektronische Zulassungsbescheinigung Teil I. Bei dem ausgestellten Dokument handelt es sich um das entsprechende Fahrzeugdokument.

Ausführungsformen können den Vorteil haben, dass ein Provisionierungstoken zum Nachweis einer Berechtigung zum Empfang einer auszustellenden Kopie einer elektronischen Zulassungsbescheinigung Teil I mit einem Endgerät und zur kryptographischen Kopplung an das Endgerät im Zuge der Ausstellung nachgewiesen werden kann.

Nach Ausführungsformen handelt es sich bei dem ersten Datenelement um eine eindeutige Fahrzeug-ID, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Nach Ausführungsformen handelt es sich bei dem zweiten Datenelement um ein dem Fahrzeug zugeordnetes Datenelement, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Ausführungsformen umfassen ferner einen Server eines Ausstellerdienst zum Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang einer auszustellenden digitalen Kopie eines ausgestellten digitalen Dokuments mit einem Endgerät und zur kryptographischen Kopplung an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung des ausgestellten digitalen Dokuments,
∘ Erstellen des angefragten Provisionierungstokens in Form eines signierten Datensatzes, wobei das Erstellen umfasst:
   - Empfangen eines dem ausgestellten Dokument zugeordneten ersten Datenelements, welches das ausgestellte Dokument, für das eine Kopie auszustellen ist, eindeutig identifiziert,
   - Prüfen des ersten Datenelements unter Verwendung eines aus einer zweiten Datenbank ausgelesenen zweiten Datenbankeintrags, welcher von dem ausgestellten Dokument umfasste Daten umfasst,
   - Erzeugen eines ersten Salt-Werts, welcher dem ersten Datenelement zugeordnet wird, wobei das Zuordnen ein Speichern einer ersten Zuordnung des ersten Salt-Werts zu dem ersten Datenelement in einer ersten Datenbank umfasst,
   - Berechnen eines ersten Hashwerts unter Verwendung einer ersten Kombination des ersten Datenelements und des ersten Salt-Werts,
   - Erstellen eines Datensatzes, welcher den ersten Hashwert sowie einen Indikator umfasst, wobei der Indikator anzeigt, dass es sich um ein Provisionierungstoken für eine Kopie des ausgestellten Dokuments handelt,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierenten Anfragensteller.

Nach Ausführungsformen ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienst nach einer der vorangehend beschriebenen Ausführungsformen sowie einen weiteren Server, welcher einen Zugriff auf eine zweite Datenbank bereitgestellt. Der weitere Server umfasst einen weiteren Prozessor, einen weiteren Speicher mit weiteren Programminstruktionen und eine weiteren Kommunikationsschnittstelle zur Kommunikation über das Netzwerk.

Ein Abfragen des zweiten Datenbankeintrags der zweiten Datenbank umfasst ein Senden einer Abfrage von dem Server an den weiteren Server und das Empfangen des von dem weiteren Server in Antwort auf die Abfrage gesendeten zweiten Datenbankeintrags durch den Server.

Nach Ausführungsformen ist das System dazu konfiguriert jede der zuvor beschrieben Ausführungsformen des Verfahrens zum Erzeugen des digitalen Provisionierungstokens auszuführen.

Ausführungsformen umfassen ferner einen digitalen Provisionierungstoken zum Nachweis einer Berechtigung zum Empfang einer auszustellenden digitalen Kopie eines ausgestellten digitalen Dokuments mit einem Endgerät und zur kryptographischen Kopplung an das Endgerät im Zuge der Ausstellung. Der Provisionierungstoken umfasst einen Datensatz mit einem ersten Hashwert und einem Indikator. Der erste Hashwert ist unter Verwendung einer ersten Kombination eines dem ausgestellten Dokument zugeordneten ersten Datenelements, welches das ausgestellte Dokument, für das eine Kopie auszustellen ist, eindeutig identifiziert, und eines dem ersten Datenelement zugeordneten ersten Salt-Werts erzeugt. Der Indikator zeigt an, dass es sich um ein Provisionierungstoken für eine Kopie des ausgestellten Dokuments handelt. Der Datensatz ist mit einem Signaturschlüssel eines den Provisionierungstoken erzeugenden Ausstellerdienstes signiert.

Nach Ausführungsformen handelt es sich bei dem digitalen Provisionierungstoken um ein Erzeugnis eines der zuvor beschriebenen Ausführungsformen des Verfahrens zum Erzeugen des digitalen Provisionierungstokens.

Nach Ausführungsformen umfasst der signierte Datensatz ferner einen zweiten Hashwert, welcher unter Verwendung einer zweiten Kombination eines dem identifizierenten Anfragensteller zugeordneten Einmalkennworts und eines dem Einmalkennwort zugeordneten zweiten Salt-Werts erzeugt ist.

Nach Ausführungsformen umfasst der signierte Datensatz ferner einen dritten Hashwert, welcher unter Verwendung einer dritten Kombination eines dem ausgestellten Dokument, für das die Kopie auszustellen ist, zugeordneten zweiten Datenelements und eines dritten Salt-Werts erzeugt ist.

Nach Ausführungsformen umfasst der signierte Datensatz ferner eine Angabe einer für die auszustellende Kopie vorgesehene Gültigkeitsdauer.

Nach Ausführungsformen umfasst der Datensatz die Angabe der für die auszustellende Kopie vorgesehenen Gültigkeitsdauer in Form eines vierten Hashwerts, welcher unter Verwendung einer vierten Kombination der Angabe der Gültigkeitsdauer und eines vierten Salt-Werts erzeugt ist.

Nach Ausführungsformen umfasst der Datensatz den Indikator in Form eines fünften Hashwerts, welcher unter Verwendung einer fünften Kombination des Indikators und eines fünften Salt-Werts erzeugt ist.

Ausführungsformen umfassen ein Verfahren zum Ausstellen eines digitalen Dokuments unter Verwendung eines digitalen Provisionierungstokens. Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines dem auszustellenden Dokument zugeordneten ersten Datenelements, welches das auszustellende Dokument eindeutig identifiziert, und eines dem ersten Datenelement zugeordneten ersten Salt-Werts erzeugt ist. Der erste Datensatz ist mit einem ersten Signaturschlüssel eines den Provisionierungstoken erzeugenden Ausstellerdienstes signiert.

In einer ersten Datenbank ist ein erster Datenbankeintrag mit einer ersten Zuordnung des ersten Salt-Werts zu dem ersten Datenelement gespeichert.

In einer zweiten Datenbank ist ein zweiter Datenbankeintrag mit Datenelementen des auszustellenden Dokuments gespeichert.

Das Verfahren umfasst durch einen ersten Server des Ausstellerdienstes:
∘ Empfangen einer Ausstellungsanfrage zum Ausstellen des auszustellenden Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen ersten Datenelements,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen des Dokuments, wobei das Ausstellen des Dokuments umfasst:
   • Auslesen des zweiten Datenbankeintrags aus der zweiten Datenbank,
   • Erstellen eines zweiten Datensatzes, welcher ein oder mehrere der Datenelemente des zweiten Datenbankeintrags, welche dem auszustellenden Dokument zugeordnet sind, in Klartext umfasst,
   • Senden einer Schlüsselabfrage an das Endgerät,
   • Empfangen eines dem Endgerät zugeordneten öffentlichen kryptographischen Schlüssels,
   • Hinzufügen des empfangenen öffentlichen kryptographischen Schlüssels des Endgeräts zu dem zweiten Datensatz zum kryptographischen Binden des zweiten Datensatzes an das Endgerät,
   • Signieren des zweiten Datensatzes mit einem dem Ausstellerdienst zugeordneten zweiten kryptographischen Signaturschlüssel,
   • Bereitstellen des ausgestellten Dokuments in Form des signierten zweiten Datensatzes,
   • Speichern einer Zuordnung des empfangenen öffentlichen kryptographischen Schlüssels des Endgeräts zu dem ausgestellten Dokument in der ersten Datenbank,
∘ Senden des ausgestellten Dokuments an das Endgerät.

Ausführungsformen können den Vorteil haben, dass ein digitales Dokument ausgestellt werden kann, welches kryptographisch an ein Endgerät, insbesondere ein mobiles Endgerät, wie beispielsweise ein Smartphone, gebunden bzw. gekoppelt ist. Eine Berechtigung zur Verwendung des entsprechenden Dokuments kann mit einem dem öffentlichen kryptographischen Schlüssel zugeordneten privaten kryptographischen Schlüssel des Endgeräts nachgewiesen werden, welcher beispielsweise in einem geschützten Speicherbereich des eines Speichers des Endgeräts, beispielsweise einem Sicherheitselement, gespeichert ist. Hierzu wird beispielsweise eine Signatur mit dem entsprechenden privaten kryptographischen Schlüssel erstellt, welche mit dem von dem Dokument umfasst öffentlichen kryptographischen Schlüssel des Endgeräts validiert werden kann.

Zum Nachweis der Berechtigung zum Empfang des auszustellenden digitalen Dokuments mit dem Endgerät und zur kryptographischen Kopplung an das Endgerät im Zuge der Ausstellung ist der Provisionierungstoken notwendig. Wer sich im Besitz des entsprechenden Provisionierungstokens befindet kann das Ausstellen des Dokuments initiieren.

Durch das Löschen zumindest der in dem ersten Datenbankeintrag gespeicherten Salt-Werte kann sichergestellt werden, dass der Provisionierungstoken nur einmal zum Ausstellen des Dokuments verwendet werden kann, d.h. dass das entsprechende Dokument nur einmal ausgestellt wird.

Datenelemente des Dokuments werden in dem Provisionierungstoken beispielsweise nicht in Klartext, sondern nur in gehashter und damit geschützter Form gespeichert. Somit kann sichergestellt werden, dass die entsprechende Datenelemente nicht aus dem Provisionierungstoken abgeleitet werde können. Um das Hashen zusätzlich abzusichern, werden die Datenelemente, z.B. das erste Datenelement, jeweils mit einem Salt-Wert kombiniert und die resultierte Kombination zum Erzeugen der in dem Provisionierungstoken gespeicherten Hashwerte, beispielsweise des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Nach einer Verwendung des Provisionierungstokens zum Nachweis der Berechtigung zum Empfang des auszustellenden digitalen Dokuments, wird der Salt-Wert beispielsweise gelöscht. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang des auszustellenden digitalen Dokuments verwendet werden.

Der Provisionierungstoken stellt ein kryptographisch gesichertes Verbindungsglied zwischen einer Identifizierung eines Anfragenstellers bei Erstellen des Provisionierungstoken und einem Ausstellen des auszustellenden Dokuments dar. Somit kann das Ausstellen über einen von dem Identifizieren unabhängigen Kanal erfolgen.

Zunächst wird der Provisionierungstoken validiert. Das Validieren des Provisionierungstoken umfasst ein Validieren der Signatur des Provisionierungstokens sowie ein Validieren der von dem Provisionierungstoken umfassten Hashwerte.

Auf ein erfolgreiches Validieren des Provisionierungstoken hin, wird das von dem Ausstellerdienst signierte Dokument ausgestellt, welches Datenelemente in Klartext sowie den öffentlichen kryptographischen Schlüssel des Endgeräts zur kryptographischen Bindung bzw. Kopplung an das entsprechende Endgerät umfasst.

Das Senden des Dokuments kann auf verschiedene Weise erfolgen. Beispielsweise kann das Dokument automatisch gesendet werden. Beispielsweise kann ein QR-Code zum Herunterladen des Dokuments bereitgestellt werden. Beispielsweise können Informationen zum Nachweisen einer Berechtigung zum Herunterladen des Dokuments an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Nach Ausführungsformen handelt es sich bei der ersten Datenbank und der zweiten Datenbank um Teile ein und derselben Datenbank. Nach Ausführungsformen handelt es sich bei der ersten Datenbank und der zweiten Datenbank um voneinander unabhängige Datenbanken.

Die erste Datenbank stellt beispielsweise Daten bereit, welche zum Prüfen der Gültigkeit von Provisionierungstoken, Dokument und/oder Dokumentenkopien dienen. In der zweiten Datenbank sind beispielsweise Datenelemente auszustellender Dokumente und/oder Dokumentenkopien gespeichert.

Nach Ausführungsformen umfasst das Verfahren ferner ein Empfangen des ersten Datenelements und ein Verwenden des empfangenen ersten Datenelements zum Auslesen des ersten Datenbankeintrags aus der ersten Datenbank.

Ausführungsformen können den Vorteil haben, dass unter Verwendung des ersten Datenelements der ersten Datenbankeintrag mit den zum Validieren des Provisionierungstoken notwendigen Daten, beispielsweise den Salt-Werten, ausgelesen werden kann.

Nach Ausführungsformen wird die Zuordnung des empfangenen öffentlichen kryptographischen Schlüssels des Endgeräts zu dem ausgestellten Dokument in dem ersten Datenbankeintrags der ersten Datenbank gespeichert.

Ausführungsformen können den Vorteil haben, dass somit die kryptographische Bindung bzw. Kopplung an das entsprechende Endgerät zentral bei dem Ausstellerdient hinterlegt bzw. festgelegt werden kann.

Nach Ausführungsformen umfasst das Validieren des Provisionierungstokens, auf eine erfolgreiche Prüfung hin, ein Löschen aller dem Provisionierungstoken zugeordneter Daten aus dem ersten Datenbankeintrag in der ersten Datenbank.

Ausführungsformen können den Vorteil haben, dass sichergestellt werden kann, dass der Provisionierungstoken kein weiteres Mal zum Ausstellen des Dokuments verwendet werden kann.

Nach Ausführungsformen umfasst der zweite Datensatz alle der Datenelemente des zweiten Datenbankeintrags, welche dem auszustellenden Dokument zugeordnet sind, in Klartext. Ausführungsformen können den Vorteil haben, dass das ausgestellte Dokument alle Datenelemente des Dokuments umfasst, wie sie in dem zweiten Datenbankeintrag hinterlegt sind.

Nach Ausführungsformen handelt es sich bei dem ersten kryptographischen Signaturschlüssel und dem zweiten kryptographischen Signaturschlüssel des Ausstellerdienstes um ein und denselben Signaturschlüssel. Nach Ausführungsformen handelt es sich dem ersten kryptographischen Signaturschlüssel und dem zweiten kryptographischen Signaturschlüssel des Ausstellerdienstes um zwei verschiedene kryptographischen Signaturschlüssel.

Nach Ausführungsformen wird der Provisionierungstoken zusammen mit der Ausstellungsanfrage empfangen. Nach Ausführungsformen wird auf den Empfang der Ausstellungsanfrage hin eine Abfrage des Provisionierungstokens an den Anfragensteller gesendet. In Antwort auf das Senden der Abfrage des Provisionierungstokens wird der Provisionierungstoken von dem Anfragensteller empfangen.

Nach Ausführungsformen wird das erste Datenelement verwendet zum Bereitstellen eines Datenbankzugriffsschlüssels zum Identifizieren des in der ersten Datenbank gespeicherten ersten Datenbankeintrags mit der ersten Zuordnung des erzeugten ersten Salt-Werts zu dem ersten Datenelement.

Ausführungsformen können den Vorteil haben, dass unter Verwendung des ersten Datenelements, welches das auszustellende Dokument eindeutig identifiziert, auf den ersten Datenbankeintrag in der ersten Datenbank zugegriffen werden kann, welcher Daten bereitstellt, die zum Prüfen der Gültigkeit des Provisionierungstokens dienen.

Nach Ausführungsformen umfasst das Verfahren ferner ein Empfangen eines zweiten Datenelements des auszustellenden Dokuments, welches zum Auslesen des ersten Datenbankeintrags aus der ersten Datenbank verwendet wird. Das zweite Datenelement wird zum Bereitstellen des Datenbankzugriffsschlüssels zum Identifizieren des in der ersten Datenbank gespeicherten ersten Datenbankeintrags verwendet.

Beispielsweise dient das zweite Datenelement in Kombination mit dem ersten Datenelement zum Bereitstellen eines Datenbankzugriffsschlüssels, beispielsweise als Primärschlüssel, zum Zugreifen auf den ersten Datenbankeintrag in der ersten Datenbank.

Nach Ausführungsformen handelt es sich bei dem zweiten Datenelement des auszustellenden Dokuments um ein Datenelement, welches das auszustellende Dokument eindeutig identifiziert.

Nach Ausführungsformen wird ein Zugriff auf die zweite Datenbank über einen zweiten Server bereitgestellt. Das Abfragen des zweiten Datenbankeintrags umfasst ein Senden einer Abfrage an den zweiten Server und einen Empfang des zweiten Datenbankeintrags in Antwort auf die Abfrage.

Ausführungsformen können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Nach Ausführungsformen erfolgt das Abfragen des zweiten Datenbankeintrags unter Verwendung des dem auszustellenden Dokument zugeordneten ersten Datenelements, welches das auszustellende Dokument eindeutig identifiziert. Nach Ausführungsformen umfasst die Abfrage des zweiten Datenbankeintrags das dem auszustellenden Dokument zugeordnete erste Datenelement, welches das auszustellende Dokument eindeutig identifiziert. Das erste Datenelement dient beispielsweise zum Bereitstellen eines Datenbankzugriffsschlüssels, beispielsweise als Primärschlüssel, zum Zugreifen auf den zweiten Datenbankeintrag.

Nach Ausführungsformen erfolgt das Abfragen des zweiten Datenbankeintrags unter Verwendung des zweiten dem auszustellenden Dokument zugeordneten Datenelements, welches das auszustellende Dokument beispielsweise eindeutig identifiziert. Nach Ausführungsformen umfasst die Abfrage des zweiten Datenbankeintrags das dem auszustellenden Dokument zugeordnete zweite Datenelement. Beispielsweise können auch Identifikationsdaten des identifizierenten Anfragenstellers dazu dienen, einen dem Anfragensteller zugeordneten zweiten Datenbankeintrag in der zweiten Datenbank zu identifizieren.

Nach Ausführungsformen umfasst der erste Datensatz des Provisionierungstokens ferner einen zweiten Hashwert, welcher unter Verwendung einer zweiten Kombination eines Einmalkennworts und eines dem Einmalkennwort zugeordneten zweiten Salt-Werts erzeugt ist. In dem ersten Datenbankeintrag der ersten Datenbank ist eine zweite Zuordnung des zweiten Salt-Werts zu dem Einmalkennwort gespeichert.

Das Validieren des Provisionierungstokens umfasst ferner ein Empfangen des Einmalkennworts und Prüfen des zweiten Hashwerts unter Verwendung des empfangenen Einmalkennworts sowie des ausgelesenen ersten Datenbankeintrags.

Ausführungsformen können den Vorteil haben, dass zusätzlich zu dem Besitz des Provisionierungstoken das entsprechende Einmalkennwort, etwa eine TAN, zum erfolgreichen Nachweis der Berechtigung zum Empfang des auszustellenden digitalen Dokuments mit einem Endgerät und zur kryptographischen Kopplung an das Endgerät im Zuge der Ausstellung notwendig.

Nach Ausführungsformen umfasst der zweite Datensatz des ausgestellten Dokuments ferner eine Angabe eines Zeitpunkts der Ausstellung des Dokuments.

Ausführungsformen können den Vorteil haben, dass dem Ausstellen des Dokuments ein Zeitpunkt zugeordnet wird. Bei der Angabe des Zeitpunkts handelt es sich beispielsweise um ein Ausstelldatum. Beispielsweise umfasst die Angabe des Zeitpunkts zusätzlich zu dem Ausstelldatum eine Angabe von Stunde, Minute und/oder Sekunde. Anhand der Angabe eines Zeitpunkts der Ausstellung des Dokuments kann beispielsweise geprüft werden, ob es sich bei dem entsprechenden Dokument um eine aktuelle Version mit aktuellen Datenelementen handelt oder ob eine Aktualisierung notwendig ist.

Nach Ausführungsformen umfasst das Verfahren ferner ein Aktualisieren des ausgestellten Dokuments. Das Aktualisieren umfasst:
∘ Empfangen einer Aktualisierungsanfrage zum Aktualisieren des ausgestellten Dokuments von dem Endgerät, wobei die Aktualisierungsanfrage das ausgestellte Dokument umfasst,
∘ Auslesen des zweiten Datenbankeintrags aus der zweiten Datenbank unter Verwendung des ersten Datenelements des empfangenen Dokuments, wobei der zweite Datenbankeintrag eine Angabe eines Zeitpunkts einer letzten Aktualisierung des zweiten Datenbankeintrags umfasst,
∘ Vergleichen der Angabe des Zeitpunkts der Ausstellung des empfangenen Dokuments mit der Angabe des Zeitpunkts der letzten Aktualisierung des zweiten Datenbankeintrags,
∘ Feststellen, dass die letzte Aktualisierung des zweiten Datenbankeintrags nach dem Ausstellen des Dokuments erfolgt ist,
∘ Ausstellen eines aktualisierten Dokuments, wobei das Ausstellen des aktualisierten Dokuments umfasst:
   - Erstellen eines vierten Datensatzes, welcher ein oder mehrere der Datenelemente des ausgelesenen zweiten Datenbankeintrags, welche dem auszustellenden Dokument zugeordnet sind, in Klartext umfasst,
   - Hinzufügen des öffentlichen kryptographischen Schlüssels des Endgeräts aus dem empfangenen Dokument zu dem vierten Datensatz zum kryptographischen Binden des vierten Datensatzes an das Endgerät,
   - Signieren des vierten Datensatzes mit dem zweiten kryptographischen Signaturschlüssel des Ausstellerdienstes,
   - Bereitstellen des aktualisierten Dokuments in Form des signierten vierten Datensatzes,
∘ Senden des aktualisierten Dokuments an das Endgerät.

Ausführungsformen können den Vorteil haben, dass so basierend auf einem Vergleich der Angabe des Zeitpunkts der Ausstellung des Dokuments mit der Angabe des Zeitpunkts der letzten Aktualisierung des zweiten Datenbankeintrags geprüft werden kann, ob das Dokument aktuell ist, d.h. die letzte Aktualisierung des zweiten Datenbankeintrags in der zweiten Datenbank berücksichtigt. Wird festgestellt, dass die letzte Aktualisierung des zweiten Datenbankeintrags nach dem Ausstellen des Dokuments erfolgt ist, wird ein aktualisiertes Dokument ausgestellt. Somit kann sichergestellt werden, dass stets eine aktuelle Version des Dokuments zur Verfügung steht.

Nach Ausführungsformen ist das empfangene ausgestellte Dokument mit einem dem Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des Endgeräts unter Verwendung des von dem empfangenen Dokument umfassten öffentlichen kryptographischen Schlüssels des Endgeräts.

Ausführungsformen können den Vorteil haben, dass das Dokument als Voraussetzung für eine Aktualisierung zunächst validiert wird. Somit kann sichergestellt werden, dass nur für ein authentisches Dokument bzw. ein gültiges Dokument eine Aktualisierung ausgeführt wird.

Nach Ausführungsformen ist das von der Aktualisierungsanfrage umfasste Dokument mit dem privaten kryptographischen Schlüssel des Endgeräts signiert. Nach Ausführungsformen ist die das Dokument umfassende Aktualisierungsanfrage mit dem privaten kryptographischen Schlüssel des Endgeräts signiert.

Nach Ausführungsformen, falls basierend auf dem Vergleichen der Angabe des Zeitpunkts der Ausstellung des Dokuments mit der Angabe des Zeitpunkts der letzten Aktualisierung des zweiten Datenbankeintrags festgestellt wird, dass die letzte Aktualisierung des zweiten Datenbankeintrags vor dem Ausstellen des Dokuments erfolgt ist, wird eine Information an den Anfragensteller gesendet, welche angibt, dass es sich bei dem ausgestellten Dokument um ein aktuelles Dokument mit aktuellen Datenelementen handelt.

Nach Ausführungsformen handelt es sich bei dem ausgestellten Dokument um ein Fahrzeugdokument, beispielsweise um eine elektronische Zulassungsbescheinigung Teil I.

Ausführungsformen können den Vorteil haben, dass eine Zulassungsbescheinigung Teil I in Form eines digitalen Dokuments ausgestellt werden kann.

Nach Ausführungsformen handelt es sich bei dem ersten Datenelement um eine eindeutige Fahrzeug-ID, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Nach Ausführungsformen handelt es sich bei dem zweiten Datenelement um ein dem Fahrzeug zugeordnetes Datenelement, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Ausführungsformen umfassen ferner einen Server eines Ausstellerdienst zum Ausstellen eines digitalen Dokuments unter Verwendung eines Provisionierungstokens. Der Server umfasst einen Prozessor, einen Speicher mit Programminstruktionen und eine Kommunikationsschnittstelle zur Kommunikation über ein Netzwerk.

Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines dem auszustellenden Dokument zugeordneten ersten Datenelements, welches das auszustellende Dokument eindeutig identifiziert, und eines dem ersten Datenelement zugeordneten ersten Salt-Werts erzeugt ist. Der erste Datensatz ist mit einem ersten Signaturschlüssel eines den Provisionierungstoken erzeugenden Ausstellerdienstes signiert.

Der Server besitzt Zugriff auf eine erste Datenbank, in der ein erster Datenbankeintrag mit einer ersten Zuordnung des ersten Salt-Werts zu dem ersten Datenelement gespeichert ist.

Der Server besitzt ferner Zugriff auf eine zweite Datenbank, in der ein zweiter Datenbankeintrag mit Datenelementen des auszustellenden Dokuments gespeichert ist.

Ein Ausführen der Programminstruktionen durch den Prozessor veranlasst den Prozessor dazu, den Server zu steuern zum:
∘ Empfangen einer Ausstellungsanfrage zum Ausstellen des auszustellenden Dokuments von einem Endgerät eines Anfragenstellers,
∘ Empfangen des Provisionierungstokens von dem Endgerät,
∘ Validieren des Provisionierungstokens, wobei das Validieren des Provisionierungstokens umfasst:
   - Validieren der Signatur des Provisionierungstokens unter Verwendung eines ersten Signaturprüfschlüssels des Ausstellerdienstes,
   - Auslesen des ersten Datenbankeintrags aus der ersten Datenbank unter Verwendung des empfangenen ersten Datenelements,
   - Prüfen der in dem Provisionierungstoken eingetragenen Hashwerte unter Verwendung des ausgelesenen ersten Datenbankeintrags,
   - auf eine erfolgreiche Prüfung hin, Löschen zumindest der in dem ersten Datenbankeintrag gespeicherten Salt-Werte in der ersten Datenbank,
∘ Ausstellen des Dokuments, wobei das Ausstellen des Dokuments umfasst:
   • Auslesen des zweiten Datenbankeintrags aus der zweiten Datenbank,
   • Erstellen eines zweiten Datensatzes, welcher ein oder mehrere der Datenelemente des zweiten Datenbankeintrags, welche dem auszustellenden Dokument zugeordnet sind, in Klartext umfasst,
   • Senden einer Schlüsselabfrage an das Endgerät,
   • Empfangen eines dem Endgerät zugeordneten öffentlichen kryptographischen Schlüssels,
   • Hinzufügen des empfangenen öffentlichen kryptographischen Schlüssels des Endgeräts zu dem zweiten Datensatz zum kryptographischen Binden des zweiten Datensatzes an das Endgerät,
   • Signieren des zweiten Datensatzes mit einem dem Ausstellerdienst zugeordneten zweiten kryptographischen Signaturschlüssel,
   • Bereitstellen des ausgestellten Dokuments in Form des signierten zweiten Datensatzes,
   • Speichern einer Zuordnung des empfangenen öffentlichen kryptographischen Schlüssels des Endgeräts zu dem ausgestellten Dokument in der ersten Datenbank,
∘ Senden des ausgestellten Dokuments an das Endgerät.

Nach Ausführungsformen ist der Server dazu konfiguriert jede der zuvor beschrieben Ausführungsformen des Verfahrens zum Ausstellen des digitalen Dokuments auszuführen.

Ausführungsformen umfassen ferner ein System umfassend einen Server eines Ausstellerdienst nach einer der vorangehend beschriebenen Ausführungsformen sowie einen weiteren Server, welcher den Zugriff auf die zweite Datenbank bereitgestellt. Der zweite Server umfasst einen weiteren Prozessor, einen weiteren Speicher mit weiteren Programminstruktionen und eine weiteren Kommunikationsschnittstelle zur Kommunikation über das Netzwerk.

Das Abfragen des zweiten Datenbankeintrags umfasst ein Senden einer Abfrage von dem Server an den weiteren Server und einen Empfang des von dem weiteren Server in Antwort auf die Abfrage gesendeten zweiten Datenbankeintrags durch den Server.

Nach Ausführungsformen ist das System dazu konfiguriert jede der zuvor beschrieben Ausführungsformen des Verfahrens zum Ausstellen des digitalen Dokuments auszuführen.

Nach Ausführungsformen umfasst das System ferner das Endgerät.

Ausführungsformen umfassen ferner ein digitales Dokument, welches einen Datensatz mit Datenelementen in Klartext umfasst. Der Datensatz ist mit einem Signaturschlüssel eines das Dokument ausstellenden Ausstellerdienstes signiert. Der Datensatz umfasst ferner einen öffentlichen kryptographischen Schlüssel eines Endgeräts zum kryptographischen Binden des Dokuments an das Endgerät.

Nach Ausführungsformen handelt es sich bei dem digitalen Dokument um ein Erzeugnis eines der zuvor beschriebenen Ausführungsformen des Verfahrens zum Ausstellen des digitalen Provisionierungstokens.

Nach Ausführungsformen umfasst der signierte Datensatz ferner eine Angabe eines Zeitpunkts der Ausstellung des Dokuments.

Nach Ausführungsformen handelt es sich bei dem Dokument um ein Fahrzeugdokument, beispielsweise um eine elektronische Zulassungsbescheinigung Teil I.

Ausführungsformen umfassen ein Verfahren zum Erzeugen eines digitalen Provisionierungstokens durch einen Ausstellerdienst. Der Provisionierungstoken weist eine Berechtigung zum Empfang eines auszustellenden digitalen Dokuments mit einem Endgerät und zur kryptographischen Kopplung an das Endgerät im Zuge der Ausstellung nach.

Das Verfahren umfasst durch einen ersten Server des Ausstellerdienstes:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erstellen des angefragten Provisionierungstokens in Form eines signierten Datensatzes, wobei das Erstellen umfasst:
   - Empfangen eines dem auszustellenden Dokument zugeordneten ersten Datenelements, welches das auszustellende Dokument eindeutig identifiziert,
   - Prüfen des ersten Datenelements unter Verwendung eines aus einer zweiten Datenbank ausgelesenen zweiten Datenbankeintrags, welcher von dem auszustellenden Dokument zu umfassende Daten umfasst,
   - Erzeugen eines ersten Salt-Werts, welcher dem ersten Datenelement zugeordnet wird, wobei das Zuordnen ein Speichern einer ersten Zuordnung des ersten Salt-Werts zu dem ersten Datenelement in einer ersten Datenbank umfasst,
   - Berechnen eines ersten Hashwerts unter Verwendung einer ersten Kombination des ersten Datenelements und des ersten Salt-Werts,
   - Erstellen eines Datensatzes, welcher den ersten Hashwert umfasst,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierenten Anfragensteller.

Ausführungsformen können den Vorteil haben, dass in kryptographisch gesicherter Weise ein Provisionierungstoken bereitgestellt wird. Der Provisionierungstoken weist eine Berechtigung zum Empfang eines auszustellenden digitalen Dokuments mit einem Endgerät und zur kryptographischen Kopplung an das Endgerät im Zuge der Ausstellung nach. Diese Berechtigung wird durch die Signatur des Datensatzes mit dem dem Ausstellerdienst zugeordneten kryptographischen Signaturschlüssel bestätigt. Bei dem kryptographischen Signaturschlüssel handelt es sich beispielsweise um einen privaten kryptographischen Schlüssel eines dem Ausstellerdienst zugeordneten asymmetrischen kryptographischen Schlüsselpaars.

Zunächst wird der Anfragensteller identifiziert. Beispielsweise sind die Datenelemente des zweiten Datenbankeintrags bzw. der zweite Datenbankeintrag einer bestimmten Person oder Entität zugeordnet. Durch das Identifizieren des Anfragenstellers kann sichergestellt werden, dass sich bei dem Anfragensteller um die entsprechende berechtigte Person oder Entität handelt. Beispielsweise umfasst der zweite Datenbankeintrag Referenzdaten oder dem zweiten Datenbankeintrag sind Referenzdaten zugeordnet, anhand derer geprüft werden kann, ob es sich bei der identifizierten Person bzw. Entität tatsächlich um die berechtigte Person bzw. Entität zum Verfügen über die Datenelemente des zweiten Datenbankeintrages bzw. des zweiten Datenbankeintrages handelt.

Ferner wird geprüft, ob es sich bei dem empfangenen Datenelement tatsächlich um ein in dem zweiten Datenbankeintrag gespeichertes Datenelement und damit um ein korrektes Datenelement handelt. Beispielsweise werden zusätzlich zu dem ersten Datenelement noch ein oder mehrere weitere Datenelemente empfangen, welche unter Verwendung des zweiten Datenbankeintrags geprüft werden.

Das erste Datenelement wird zum Identifizieren des auszustellenden Dokuments verwendet. Somit kann anhand des in dem Provisionierungstoken gespeicherten ersten Hashwerts, welcher von dem ersten Datenelement abhängt, das auszustellende Dokument bzw. der zum Ausstellen des entsprechenden Dokuments zu verwendende Datenbankeintrag der zweiten Datenbank, nämlich der zweite Datenbankeintrag, identifiziert werden. Das ersten Datenelement dient beispielsweise selbst als ein Datenbankzugriffsschlüssel, z.B. ein Primärschlüssel, oder zum Ableiten eines Datenbankzugriffsschlüssels, z.B. eines Primärschlüssels. Beispielsweise kann anhand des ersten Datenelements der zum Prüfen zu verwendende zweite Datenbankeintrag identifiziert werden.

Datenelemente des Dokuments werden in dem Provisionierungstoken beispielsweise nicht in Klartext, sondern nur in gehashter und damit geschützter Form gespeichert. Somit kann sichergestellt werden, dass die entsprechende Datenelemente nicht aus dem Provisionierungstoken abgeleitet werde können. Um das Hashen zusätzlich abzusichern, werden die Datenelemente, z.B. das erste Datenelement, jeweils mit einem Salt-Wert kombiniert und die resultierte Kombination zum Erzeugen der in dem Provisionierungstoken gespeicherten Hashwerte, beispielsweise des ersten Hashwerts, verwendet. Unter einem Salt-Wert wird in der Kryptographie eine zufällig gewählte Zeichenfolge, etwa eine Zufallswert, verstanden, die an einen gegebenen Klartext, beispielsweise ein Datenelement des Dokuments, vor dessen weiterer Verarbeitung, beispielsweise eine Eingabe in eine Hashfunktion, angehängt wird, um die Entropie der Eingabe zu erhöhen.

Der Salt-Wert wird in der ersten Datenbank gespeichert. Somit kann sichergestellt werden, dass der Provisionierungstoken nur einmal verwendet werden kann. Nach einer Verwendung des Provisionierungstokens zum Nachweis der Berechtigung zum Empfang des auszustellenden digitalen Dokuments, wird der Salt-Wert beispielsweise gelöscht. Da der Salt-Wert zum Validieren des entsprechenden Hashwerts in dem Provisionierungstoken benötigt wird, kann der Hashwert nach dem Löschen des Salt-Werts beispielsweise nicht mehr validiert werden. Somit kann der Provisionierungstoken nach dem Löschen beispielsweise nicht mehr zum erfolgreichen Nachweis der Berechtigung zum Empfang des auszustellenden digitalen Dokuments verwendet werden.

Der Provisionierungstoken stellt somit ein kryptographisch gesichertes Verbindungsglied zwischen einer Identifizierung eines Anfragenstellers und einem Ausstellen des auszustellenden Dokuments dar. Somit kann das Identifizieren über einen von dem Ausstellen unabhängigen Kanal erfolgen.

Das Senden des Provisionierungstoken kann auf verschiedene Weise erfolgen. Beispielsweise kann der Provisionierungstoken automatisch gesendet werden. Beispielsweise kann ein QR-Code zum Herunterladen des Provisionierungstoken bereitgestellt werden. Beispielsweise können Informationen zum Nachweisen einer Berechtigung zum Herunterladen des Provisionierungstoken an den Anfragensteller gesendet werden. Beispielsweise umfassen die Informationen eine PIN und/oder TAN. Beispielsweise werden PIN und/oder TAN über einen unabhängigen Kanal, etwa mittels eines Briefes oder einer SMS versendet.

Nach Ausführungsformen handelt es sich bei der ersten Datenbank und der zweiten Datenbank um Teile ein und derselben Datenbank. Nach Ausführungsformen handelt es sich bei der ersten Datenbank und der zweiten Datenbank um voneinander unabhängige Datenbanken.

Die erste Datenbank stellt beispielsweise Daten bereit, welche zum Prüfen der Gültigkeit von Provisionierungstoken, Dokument und/oder Dokumentenkopien dienen. In der zweiten Datenbank sind beispielsweise Datenelemente auszustellender Dokumente und/oder Dokumentenkopien gespeichert.

Nach Ausführungsformen wird das erste Datenelement verwendet zum Bereitstellen eines Datenbankzugriffsschlüssels zum Identifizieren eines in der ersten Datenbank gespeicherten ersten Datenbankeintrags mit der ersten Zuordnung des erzeugten ersten Salt-Werts zu dem ersten Datenelement.

Ausführungsformen können den Vorteil haben, dass unter Verwendung des ersten Datenelements, welches das auszustellende Dokument eindeutig identifiziert, auf den ersten Datenbankeintrag in der ersten Datenbank zugegriffen werden kann, welcher Daten bereitstellt, die zum Prüfen der Gültigkeit des Provisionierungstokens dienen.

Nach Ausführungsformen wird das erste Datenelement von dem Anfragensteller empfangen und das Prüfen umfasst ein Prüfen, ob der zweite Datenbankeintrag das erste Datenelement umfasst.

Ausführungsformen können den Vorteil haben, dass somit sichergestellt werden kann, dass das von dem Anfragensteller empfangene erste Datenelement korrekt ist bzw. ein Datenbankeintrag mit Datenelementen für das auszustellende Dokument in der zweiten Datenbank gespeichert ist.

Nach Ausführungsformen wird das erste Datenelement als Teil des zweiten Datenbankeintrags der zweiten Datenbank empfangen und das Prüfen umfasst ein Prüfen, ob das erste Datenelement aus dem zweiten Datenbankeintrag stammt.

Ausführungsformen können den Vorteil haben, dass das erste Datenelement aus dem zweiten Datenbankeintrags der zweiten Datenbank ausgelesen wird. Damit kann sichergestellt werden, dass es sich bei dem empfangenen ersten Datenelement um ein korrektes Datenelement handelt bzw. ein Datenbankeintrag mit Datenelementen für das auszustellende Dokument in der zweiten Datenbank gespeichert ist.

Nach Ausführungsformen wird ein Zugriff auf die zweite Datenbank über einen zweiten Server bereitgestellt. Ein Abfragen des zweiten Datenbankeintrags umfasst ein Senden einer Abfrage an den zweiten Server und den Empfang des zweiten Datenbankeintrags in Antwort auf die Abfrage.

Ausführungsformen können den Vorteil haben, dass die erste und die zweite Datenbank beispielsweise von zwei unterschiedlichen Diensten und insbesondere unabhängig voneinander verwaltet werden können. Beispielsweise kann der die erste Datenbank verwaltende erste Server im Bedarfsfall über den zweiten Server auf die zweite Datenbank zugreifen.

Nach Ausführungsformen erfolgt das Abfragen des zweiten Datenbankeintrags unter Verwendung des dem auszustellenden Dokument zugeordneten ersten Datenelements, welches das auszustellende Dokument eindeutig identifiziert. Nach Ausführungsformen umfasst die Abfrage des zweiten Datenbankeintrags das dem auszustellenden Dokument zugeordnete erste Datenelement, welches das auszustellende Dokument eindeutig identifiziert. Das erste Datenelement dient beispielsweise zum Bereitstellen eines Datenbankzugriffsschlüssels, beispielsweise als Primärschlüssel, zum Zugreifen auf den zweiten Datenbankeintrag.

Nach Ausführungsformen erfolgt das Abfragen des zweiten Datenbankeintrags unter Verwendung von Identifikationsdaten des identifizierenten Anfragenstellers. Nach Ausführungsformen umfasst die Abfrage des zweiten Datenbankeintrags die entsprechenden Identifikationsdaten des Anfragenstellers. Beispielsweise können auch Identifikationsdaten des identifizierenten Anfragenstellers dazu dienen, einen dem Anfragensteller zugeordneten zweiten Datenbankeintrag in der zweiten Datenbank zu identifizieren.

Nach Ausführungsformen umfasst das Erstellen des angefragten Provisionierungstokens ferner:
- Erzeugen eines dem identifizierenten Anfragensteller zugeordneten Einmalkennworts für den Provisionierungstoken,
- Erzeugen eines zweiten Salt-Werts, welcher dem Einmalkennwort zugeordnet wird, wobei das Zuordnen ein Speichern einer zweiten Zuordnung des zweiten Salt-Werts zu dem Einmalkennwort unter Verwendung des ersten Datenelements in der ersten Datenbank umfasst,
- Berechnen eines zweiten Hashwerts unter Verwendung einer zweiten Kombination des Einmalkennworts und des zweiten Salt-Werts,
- Verwenden des zweiten Hashwerts zum Erstellen des Datensatzes, wobei der Datensatz den zweiten Hashwert umfasst,
- Senden des Einmalkennworts an den identifizierenten Anfragensteller.

Ausführungsformen können den Vorteil haben, dass zusätzlich ein Einmalpasswort für den Anfragensteller bereitgestellt und kryptographisch an den Provisionierungstoken gebunden werden kann. Somit ist zusätzlich zu dem Besitz des Provisionierungstoken das entsprechende Einmalkennwort, etwa eine TAN, zum erfolgreichen Nachweis der Berechtigung zum Empfang des auszustellenden digitalen Dokuments mit einem Endgerät und zur kryptographischen Kopplung an das Endgerät im Zuge der Ausstellung notwendig.

Nach Ausführungsformen erfolgt das Senden des Einmalkennworts an den identifizierenten Anfragensteller über einen Kanal, welcher unabhängig von demjenigen Kanal ist, über welchen das ausgestellte Provisionierungstoken an den identifizierenten Anfragensteller gesendet wird. Beispielsweise wird das Einmalpasswort per Brief oder per SMS an den Anfragensteller gesendet.

Nach Ausführungsformen umfasst das Erstellen des angefragten Provisionierungstokens ferner:
- Empfangen eines zweiten dem auszustellenden Dokument zugeordneten Datenelements,
- Prüfen des zweiten Datenelements unter Verwendung des aus der zweiten Datenbank ausgelesenen zweiten Datenbankeintrags,
- Erzeugen eines dritten Salt-Werts, welcher dem zweiten Datenelementen zugeordnet wird, wobei das Zuordnen ein Speichern einer dritten Zuordnung des dritten Salt-Werts zu dem zweiten Datenelement unter Verwendung des ersten Datenelements in der ersten Datenbank umfasst,
- Berechnen eines dritten Hashwerts unter Verwendung einer dritten Kombination des zweiten Datenelements mit dem dritten Salt-Wert,
- Verwenden des dritten Hashwerts zum Erstellen des Datensatzes, wobei der Datensatz den dritten Hashwert umfasst.

Ausführungsformen können den Vorteil haben, dass neben dem ersten Datenelement ein weiteres Datenelement mit dem Provisionierungstoken zum Identifizieren des auszustellenden Dokuments bereitgestellt werden kann. Beispielsweise handelt es sich bei dem Datenbankzugriffsschlüssel um eine Kombination aus dem ersten und dem zweiten Datenelement.

Nach Ausführungsformen handelt es sich bei dem zweiten Datenelement des auszustellenden Dokuments um ein Datenelement, welches das auszustellende Dokument eindeutig identifiziert.

Nach Ausführungsformen erfolgt das Abfragen des zweiten Datenbankeintrags unter Verwendung des zweiten dem auszustellenden Dokument zugeordneten Datenelements, welches das auszustellende Dokument beispielsweise eindeutig identifiziert. Nach Ausführungsformen umfasst die Abfrage des zweiten Datenbankeintrags das dem auszustellenden Dokument zugeordnete zweite Datenelement. Das zweite Datenelement dient beispielsweise in Kombination mit dem ersten Datenelement zum Bereitstellen eines Datenbankzugriffsschlüssels, beispielsweise als Primärschlüssel, zum Zugreifen auf den zweiten Datenbankeintrag.

Nach Ausführungsformen wird das zweite Datenelement verwendet zum Bereitstellen des Datenbankzugriffsschlüssels zum Identifizieren des in der ersten Datenbank gespeicherten ersten Datenbankeintrags. Beispielsweise dient das zweite Datenelement in Kombination mit dem ersten Datenelement zum Bereitstellen eines Datenbankzugriffsschlüssels, beispielsweise als Primärschlüssel, zum Zugreifen auf den ersten Datenbankeintrag in der ersten Datenbank.

Nach Ausführungsformen wird das zweite Datenelement von dem Anfragensteller empfangen und das Prüfen umfasst ein Prüfen, ob der zweite Datenbankeintrag das zweite Datenelement umfasst.

Ausführungsformen können den Vorteil haben, dass somit sichergestellt werden kann, dass das von dem Anfragensteller empfangene zweite Datenelement korrekt ist bzw. ein Datenbankeintrag mit Datenelementen für das auszustellende Dokument in der zweiten Datenbank gespeichert ist.

Nach Ausführungsformen wird das zweite Datenelement als Teil des zweiten Datenbankeintrags der zweiten Datenbank empfangen und das Prüfen umfasst ein Prüfen, ob das zweite Datenelement aus dem zweiten Datenbankeintrag stammt.

Ausführungsformen können den Vorteil haben, dass das zweite Datenelement aus dem zweiten Datenbankeintrags der zweiten Datenbank ausgelesen wird. Damit kann sichergestellt werden, dass es sich bei dem empfangenen zweiten Datenelement um ein korrektes Datenelement handelt bzw. ein Datenbankeintrag mit Datenelementen für das auszustellende Dokument in der zweiten Datenbank gespeichert ist.

Nach Ausführungsformen umfassen die Identifikationsdaten des Anfragenstellers ein oder mehrere der folgenden Daten: einen Nutzernamen, ein Passwort, eine mit einem Signaturschlüssel des Anfragenstellers erstellte Signatur in Kombination mit einem Zertifikat mit einem Signaturprüfschlüssels des Anfragenstellers, ein oder mehrere aus einem ID-Token des Anfragenstellers ausgelesene Attribute des Anfragenstellers, welche mit einem Signaturschlüssel eines ID-Provider-Dienst signiert sind, Attribute des Anfragenstellers, welche von einem Computersystem einer zum Identifizieren des Nutzers autorisierten Entität empfangen werden.

Ausführungsformen können den Vorteil haben, dass der Anfragensteller auf unterschiedliche Weise identifiziert werden kann. Beispielsweise kann ein dem Anfragensteller zugeordneter Account bestehen, bei welchem sich der Anfragensteller mit Nutzernamen und Passwort oder anderen Authentifizierungsfaktoren anmelden kann. In dem Account sind beispielsweise geprüfte Identifikationsdaten hinterlegt, welche den Anfragensteller identifizieren.

Beispielsweise kann ein entsprechendes Zertifikat geprüfte Identifikationsdaten umfassen, welche den Anfragensteller identifizieren. Mit einer unter Verwendung des Signaturschlüssels des Anfragenstellers erstellten Signatur kann der Anfragensteller nachweisen, dass das entsprechende Zertifikat mit zugehörigen Signaturprüfschlüssels und damit die entsprechenden Identifikationsdaten dem Anfragensteller zugeordnet sind.

Beispielsweise befindet sich der Anfragensteller im Besitz eines dem Anfragensteller zugeordneten ID-Tokens mit Identifikationsdaten in Form Attributen des Anfragenstellers. Ein oder mehrere dieser Attribute des Anfragenstellers werde beispielsweise von einem ID-Provider-Dienst, welcher eine Leseberechtigung zum Auslesen der entsprechenden Attribute besitzt ausgelesen und mit einem Signaturschlüssel eines ID-Provider-Dienst signiert. Mit der Signatur garantiert der ID-Provider-Dienst, dass es sich bei den entsprechenden Attributen um aus dem ID-Token ausgelesene Attribute handelt.

Beispielsweise können Attribute des Anfragenstellers auch von einem Computersystem einer zum Identifizieren des Nutzers autorisierten Entität empfangen werden. Hierbei kann es sich beispielsweise um eine Identifikation des Anfragenstellers in einer Filiale vor Ort oder remote, etwa über ein Video-Ident-Verfahren, handeln.

Nach Ausführungsformen erfolgt das Signieren des Datensatzes nur unter Voraussetzung eines erfolgreichen Identifizierens des Anfragenstellers, sodass durch die Signatur ein erfolgreiches Identifizieren bestätigt wird.

Ausführungsformen können den Vorteil haben, dass durch das signierte Provisionierungstoken somit das erfolgreiche Identifizieren des Anfragenstellers nachgewiesen werden kann.

Nach Ausführungsformen handelt es sich bei dem auszustellenden Dokument um ein Fahrzeugdokument, beispielsweise um eine elektronische Zulassungsbescheinigung Teil I.

Ausführungsformen können den Vorteil haben, dass ein Provisionierungstoken zum Nachweis einer Berechtigung zum Empfang einer auszustellenden elektronischen Zulassungsbescheinigung Teil I mit einem Endgerät und zur kryptographischen Kopplung an das Endgerät im Zuge der Ausstellung nachgewiesen werden kann.

Die Zulassungsbescheinigung ist in Deutschland und in Österreich eine amtliche Urkunde über die Zulassung von Fahrzeugen zum Straßenverkehr. Die Zulassungsbescheinigung umfasst beispielsweise Datenelemente zum Individualisieren des Fahrzeugs, in aller Regel anhand der vom Hersteller vergebenen Fahrzeug-Identifizierungsnummer, auch als Fahrgestellnummer bezeichnet, zum Zuteilen eines Kraftfahrzeugkennzeichens an eine bestimmte Person oder Entität, und zum Nachweisen, dass das Fahrzeug technische Zulassungsvorschriften, d.h. eine Bauartzulassung, erfüllt. Die in der Zulassungsbescheinigung eingetragene Person oder Entität ist der Halter des Fahrzeugs, welcher mit dem Eigentümer oder Besitzer identisch sein kann, aber nicht muss.

Im Detail umfasst eine elektronische Zulassungsbescheinigung Teil I beispielsweise die folgenden Datenelement: (B) Datum der Erstzulassung des Fahrzeugs; (2.1) Code zu 2; (2.2) Code zu D.2 mit Prüfziffer; (J) Fahrzeugklasse; (4) Art des Aufbaus; (E) Fahrzeug-Identifizierungsnummer; (3) Prüfziffer der Fahrzeug-Identifizierungsnummer, (D.1) Marke, (D.2) Typ/Variante/Version; (D.3) Handelsbezeichnung(en); (2) Hersteller-Kurzbezeichnung; (5) Bezeichnung der Fahrzeugklasse und des Aufbaus; (V.9) für die EG-Typgenehmigung maßgebliche Schadstoffklasse; (14) Bezeichnung der nationalen Emissionsklasse; (P.3) Kraftstoffart oder Energiequelle; (10) Code zu P.3; (14.1) Code zu V.9 oder 14; (P.1) Hubraum in cm³; (22) Bemerkungen und Ausnahmen; (L) Anzahl der Achsen; (9) Anzahl der Antriebsachsen; (P.2/P.4) Nennleistung in kW/ Nenndrehzahl bei min⁻¹; (T) Höchstgeschwindigkeit in km/h; (18) Länge in mm; (19) Breite in mm ohne Spiegel und Anbauteile; (20) Höhe in mm; (G) Masse des in Betrieb befindlichen Fahrzeugs in kg Leermasse; (12) Rauminhalt des Tanks bei Tankfahrzeugen in m³; (13) Stützlast in kg; (Q) Leistungsgewicht in kW/kg (nur bei Krafträdern); (V.7) CO₂ (in g/km) kombinierter Wert; (F.1) technisch zulässige Gesamtmasse in kg; (F.2) im Zulassungsmitgliedstaat zulässige Gesamtmasse in kg; (7.1) Max. Achslast Achse 1 in kg; (7.2) Max. Achslast Achse 2 in kg; (7.3) max. Achslast Achse 3 in kg; (8.1) max. Achslast Achse 1 in kg; (8.2) max. Achslast Achse 2 in kg; (8.3) max. Achslast Achse 3 in kg; (U.1) Standgeräusch in dB(A); (U.2) Drehzahl in min⁻¹ zu U.1; (U.3) Fahrgeräusch in dB(A); (O.1) technisch zulässige Anhängelast gebremst in kg; (O.2) technisch zulässige Anhängelast ungebremst in kg; (S.1) Sitzplätze einschließlich Fahrersitz; (S.2) Stehplätze; (15.1) Bereifung auf Achse 1; (15.2) Bereifung auf Achse 2; (15.3) Bereifung auf Achse 3; (R) Farbe des Fahrzeugs; (11) Code zu R; (K) Nummer der EG-Typgenehmigung oder ABE; (6) Datum zu K; (17) Merkmal zur Betriebserlaubnis; (16) Nummer der Zulassungsbescheinigung Teil II; (21) Sonstige Vermerke; (H) Gültigkeitsdauer; (I) Datum dieser Zulassung; (7) technisch zulässige maximale Achslast/ Masse je Achsgruppe in kg; (7.1) Achse 1 bis (7.3) Achse 3, (8) zulässige maximale Achslast im Zulassungsmitgliedstaat in kg, (8.1) Achse 1 bis (8.3) Achse 3; und/oder (15) Bereifung.

Nach Ausführungsformen handelt es sich bei dem ersten Datenelement um eine eindeutige Fahrzeug-ID, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Nach Ausführungsformen handelt es sich bei dem zweiten Datenelement um ein dem Fahrzeug zugeordnetes Datenelement, beispielsweise ein Fahrzeugkennzeichen oder eine Fahrgestellnummer.

Ausführungsformen können den Vorteil haben, dass eine eindeutige Fahrzeug-ID, etwa in Form des Fahrzeugkennzeichens und/oder einer Fahrgestellnummer.

Ausführungsformen umfassen ferner einen Server eines Ausstellerdienst zum Erzeugen eines digitalen Provisionierungstokens. Der Server umfasst einen Prozessor, einen Speicher mit Programminstruktionen und eine Kommunikationsschnittstelle zur Kommunikation über ein Netzwerk. Der Provisionierungstoken weist eine Berechtigung zum Empfang eines auszustellenden digitalen Dokuments mit einem Endgerät und zur kryptographischen Kopplung an das Endgerät im Zuge der Ausstellung nach.

Ein Ausführen der Programminstruktionen durch den Prozessor veranlasst den Prozessor dazu, den Server zu steuern zum:
∘ Empfangen einer Erstellungsanfrage zum Erstellen des Provisionierungstokens,
∘ Identifizieren des Anfragenstellers unter Verwendung empfangener Identifikationsdaten des Anfragenstellers,
∘ Erstellen des angefragten Provisionierungstokens in Form eines signierten Datensatzes, wobei das Erstellen umfasst:
   - Empfangen eines dem auszustellenden Dokument zugeordneten ersten Datenelements, welches das auszustellende Dokument eindeutig identifiziert,
   - Prüfen des ersten Datenelements unter Verwendung eines aus einer zweiten Datenbank ausgelesenen zweiten Datenbankeintrags, welcher von dem auszustellenden Dokument zu umfassende Daten umfasst,
   - Erzeugen eines ersten Salt-Werts, welcher dem ersten Datenelement zugeordnet wird, wobei das Zuordnen ein Speichern einer ersten Zuordnung des ersten Salt-Werts zu dem ersten Datenelement in einer ersten Datenbank umfasst,
   - Berechnen eines ersten Hashwerts unter Verwendung einer ersten Kombination des ersten Datenelements und des ersten Salt-Werts,
   - Erstellen eines Datensatzes, welcher den ersten Hashwert umfasst,
   - Signieren des Datensatzes mit einem dem Ausstellerdienst zugeordneten kryptographischen Signaturschlüssel,
   - Bereitstellen des angefragten Provisionierungstokens in Form des signierten Datensatzes,
∘ Senden des Provisionierungstokens an den identifizierenten Anfragensteller.

Nach Ausführungsformen ist der Server dazu konfiguriert jede der zuvor beschrieben Ausführungsformen des Verfahrens zum Erzeugen des digitalen Provisionierungstokens auszuführen.

Ausführungsformen umfassen ferner ein System umfassend einen Server eines Ausstellerdienst nach einer der zuvor beschriebenen Ausführungsformen sowie einen weiteren Server, welcher einen Zugriff auf eine zweite Datenbank bereitgestellt. Der zweite Server umfasst einen weiteren Prozessor, einen weiteren Speicher mit weiteren Programminstruktionen und eine weiteren Kommunikationsschnittstelle zur Kommunikation über das Netzwerk.

Ein Abfragen des zweiten Datenbankeintrags der zweiten Datenbank umfasst ein Senden einer Abfrage von dem Server an den weiteren Server und das Empfangen des von dem weiteren Server in Antwort auf die Abfrage gesendeten zweiten Datenbankeintrags durch den Server.

Nach Ausführungsformen ist das System dazu konfiguriert jede der zuvor beschrieben Ausführungsformen des Verfahrens zum Erzeugen des digitalen Provisionierungstokens auszuführen.

Ausführungsformen umfassen ferner einen digitalen Provisionierungstoken zum Nachweis einer Berechtigung zum Empfang eines auszustellenden digitalen Dokuments mit einem Endgerät und zur kryptographischen Kopplung an das Endgerät im Zuge der Ausstellung. Der Provisionierungstoken umfasst einen Datensatz mit einem ersten Hashwert, welcher unter Verwendung einer ersten Kombination eines dem auszustellenden Dokument zugeordneten ersten Datenelements, welches das auszustellende Dokument eindeutig identifiziert, und eines dem ersten Datenelement zugeordneten ersten Salt-Werts erzeugt ist. Der Datensatz ist mit einem Signaturschlüssel eines den Provisionierungstoken erzeugenden Ausstellerdienstes signiert.

Nach Ausführungsformen handelt es sich bei dem digitalen Provisionierungstoken um ein Erzeugnis eines der zuvor beschriebenen Ausführungsformen des Verfahrens zum Erzeugen des digitalen Provisionierungstokens.

Nach Ausführungsformen umfasst der signierte Datensatz ferner einen zweiten Hashwert, welcher unter Verwendung einer zweiten Kombination eines dem identifizierenten Anfragensteller zugeordneten Einmalkennworts und eines dem Einmalkennwort zugeordneten zweiten Salt-Werts erzeugt ist.

Nach Ausführungsformen umfasst der signierte Datensatz ferner einen dritten Hashwert, welcher unter Verwendung einer dritten Kombination eines dem auszustellenden Dokument zugeordneten zweiten Datenelements und eines dritten Salt-Werts erzeugt ist.

Im Weiteren werden Ausführungsformen der Erfindung mit Bezugnahme auf die Zeichnungen näher erläutert. Es zeigen:
- Figur 1: ein Flussdiagramm eines exemplarischen Verfahrens zum Erstellen eines Provisionierungstokens für ein digitales Dokument,
- Figur 2: ein Flussdiagramm eines exemplarischen Verfahrens zum Ausstellen eines digitalen Dokuments,
- Figur 3: ein Flussdiagramm eines exemplarischen Verfahrens zum Aktualisieren eines digitalen Dokuments,
- Figur 4: ein Flussdiagramm eines exemplarischen Verfahrens zum Erstellen eines Provisionierungstokens für eine Kopie eines digitalen Dokuments,
- Figur 5: ein Flussdiagramm eines exemplarischen Verfahrens zum Ausstellen einer Kopie eines digitalen Dokuments,
- Figur 6: ein Flussdiagramm eines exemplarischen Verfahrens zum Aktualisieren einer Kopie eines digitalen Dokuments,
- Figur 7: ein Flussdiagramm eines exemplarischen Verfahrens zum Revozieren einer Kopie eines digitalen Dokuments,
- Figur 8: ein Flussdiagramm eines exemplarischen Verfahrens zum Erstellen eines Provisionierungstokens für ein digitales Dokument,
- Figur 9: ein Flussdiagramm eines exemplarischen Verfahrens zum Erstellen eines Provisionierungstokens für ein digitales Dokument,
- Figur 10: ein Flussdiagramm eines exemplarischen Verfahrens zum Erstellen eines Provisionierungstokens für eine Kopie eines digitalen Dokuments,
- Figur 11: ein Flussdiagramm eines exemplarischen Verfahrens zum Erstellen eines Provisionierungstokens für ein digitales Dokument,
- Figur 12: ein Flussdiagramm eines exemplarischen Verfahrens zum Ausstellen eines digitalen Dokuments,
- Figur 13: ein Flussdiagramm eines exemplarischen Verfahrens zum Ausstellen einer Kopie eines digitalen Dokuments,
- Figur 14: ein Flussdiagramm eines exemplarischen Verfahrens zum Aktualisieren eines digitalen Dokuments,
- Figur 15: ein Flussdiagramm eines exemplarischen Verfahrens zum Aktualisieren einer Kopie eines digitalen Dokuments,
- Figur 16: ein Flussdiagramm eines exemplarischen Verfahrens zum Revozieren eines Provisionierungstokens oder einer Kopie eines digitalen Dokuments,
- Figur 17: ein exemplarisches System zum Erstellen eines Provisionierungstokens für ein digitales Dokument,
- Figur 18: ein exemplarisches System zum Ausstellen eines digitalen Dokuments,
- Figur 19: ein exemplarisches System zum Erstellen eines Provisionierungstokens für eine Kopie eines digitalen Dokuments,
- Figur 20: ein exemplarisches System zum Ausstellen einer Kopie eines digitalen Dokuments,
- Figur 21: ein exemplarisches Provisionierungstoken für ein digitales Dokument,
- Figur 22: ein exemplarisches digitales Dokument,
- Figur 23: ein exemplarisches Provisionierungstoken für eine Kopie eines digitalen Dokuments und
- Figur 24: eine exemplarische Kopie eines digitalen Dokuments.

Elemente der nachfolgenden Ausführungsformen, die einander entsprechen, werden mit denselben Bezugszeichen gekennzeichnet.

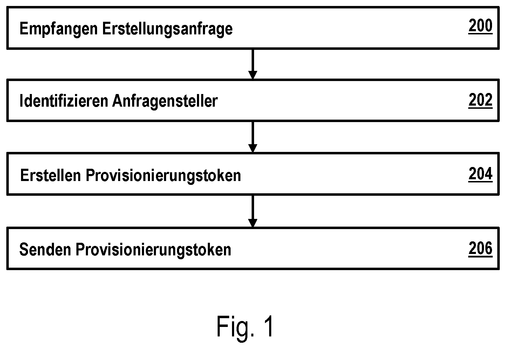

Figur 1 zeigt ein exemplarisches Verfahren zum Erzeugen eines digitalen Provisionierungstokens durch einen Ausstellerdienst. Der Provisionierungstoken weist eine Berechtigung zum Empfang eines auszustellenden digitalen Dokuments mit einem Endgerät und zur kryptographischen Kopplung an das Endgerät im Zuge der Ausstellung nach.

In Block 200 empfängt der erste Server des Ausstellerdienstes eine Erstellungsanfrage zum Erstellen des Provisionierungstokens. In Block 202 wird der Anfragensteller unter Verwendung empfangener Identifikationsdaten des Anfragenstellers identifiziert. In Block 204 wird das angefragte Provisionierungstokens in Form eines signierten Datensatzes erstellt. Das Erstellen des signierten Datensatzes umfasst ein Empfangen eines dem auszustellenden Dokument zugeordneten ersten Datenelements, welches das auszustellende Dokument eindeutig identifiziert. Das erste Datenelement wird unter Verwendung eines aus einer zweiten Datenbank ausgelesenen zweiten Datenbankeintrags, welcher von dem auszustellenden Dokument zu umfassende Daten umfasst, geprüft. Es wird auf eine erfolgreiche Prüfung hin ein erster Salt-Wert erzeugt, welcher dem ersten Datenelement zugeordnet wird. Das Zuordnen umfasst ein Speichern einer ersten Zuordnung des ersten Salt-Werts zu dem ersten Datenelement in einer ersten Datenbank. Es wird ein erster Hashwert unter Verwendung einer ersten Kombination des ersten Datenelements und des ersten Salt-Werts berechnet. Es wird der Datensatz erstellt, welcher den ersten Hashwert umfasst. Der Datensatz wird mit einem dem Ausstellerdienst zugeordneten kryptographischen Signaturschlüssel signiert. Der angefragte Provisionierungstokens in Form des signierten Datensatzes bereitgestellt. In Block 206 wird der Provisionierungstoken an den identifizierenten Anfragensteller gesendet.

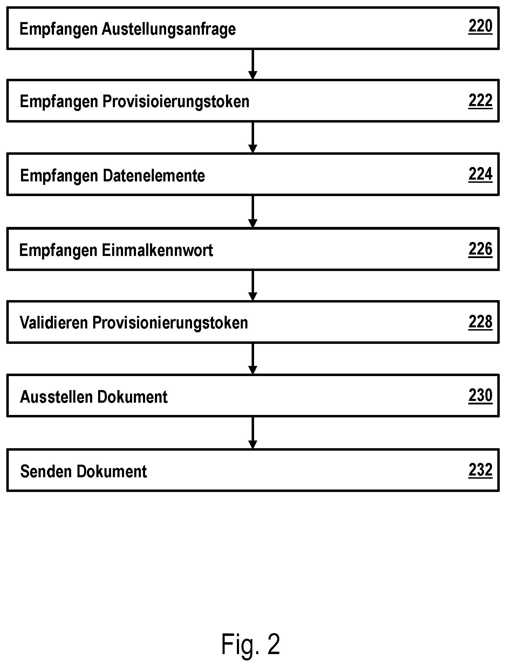

Figur 2 zeigt ein exemplarisches Verfahren zum Ausstellen eines digitalen Dokuments unter Verwendung eines digitalen Provisionierungstokens, wie er etwa unter Verwendung des Verfahrens nach Figur 1 erstellt werden kann. Der Provisionierungstoken weist eine Berechtigung zum Empfang des auszustellenden digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert, welcher unter Verwendung einer ersten Kombination eines dem auszustellenden Dokument zugeordneten ersten Datenelements, welches das auszustellende Dokument eindeutig identifiziert, und eines dem ersten Datenelement zugeordneten ersten Salt-Werts erzeugt ist. Beispielsweise kann der Datensatz noch weitere Hashwerte von Datenelementen umfassen, welche unter Verwendung weiterer Salt-Werte erzeugt sind. Zudem kann der Datensatz beispielsweise einen Hashwert eines Einmalkennworts umfassen, welcher beispielsweise ebenfalls unter Verwendung eines Salt-Werts erzeugt ist. Der erste Datensatz ist mit einem ersten Signaturschlüssel eines den Provisionierungstoken erzeugenden Ausstellerdienstes signiert.

In einer ersten Datenbank ist ein erster Datenbankeintrag mit einer ersten Zuordnung des ersten Salt-Werts zu dem ersten Datenelement gespeichert. Zudem können in dem ersten Datenbankeintrag Zuordnungen weiterer Salt-Werte zu weiteren Datenelementen und/oder eine Zuordnung eines Salt-Werts zu einem Einmalkennwort gespeichert sein. In einer zweiten Datenbank ist ein zweiter Datenbankeintrag mit Datenelementen des auszustellenden Dokuments gespeichert.

In Block 220 wird durch einen ersten Server des Ausstellerdienstes eine Ausstellungsanfrage zum Ausstellen des auszustellenden Dokuments von einem Endgerät eines Anfragenstellers empfangen. In Block 222 wird der Provisionierungstoken von dem Endgerät empfangen. In Block 224 werden Datenelemente, deren Hashwerte in dem Provisionierungstoken gespeichert sind, empfangen. In Block 226 wird ferner ein Einmalkennwort empfangen. In Block 228 wird der Provisionierungstoken unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung des ersten Datenelements wird der erste Datenbankeintrag aus der ersten Datenbank ausgelesen. Die in dem Provisionierungstoken eingetragenen Hashwerte, beispielsweise Hashwerte von Datenelementen und/oder des Einmalkennworts, werden unter Verwendung des ausgelesenen ersten Datenbankeintrags geprüft. Hierzu werden die in dem ersten Datenbankeintrag gespeicherten Salt-Werte verwendet. Auf eine erfolgreiche Prüfung hin, werden zumindest die in dem ersten Datenbankeintrag gespeicherten Salt-Werte in der ersten Datenbank gelöscht. Beispielsweise werden alle dem entsprechenden Provisionierungstoken zugeordneten Daten in dem ersten Datenbankeintrag gelöscht.

In Block 230 wird das Dokument ausgestellt. Das Ausstellen des Dokuments umfasst beispielsweise ein Auslesen des zweiten Datenbankeintrags mit den Datenelementen des auszustellenden Dokuments aus der zweiten Datenbank. Ein zweiter Datensatz wird erstellt, welcher ein oder mehrere der Datenelemente des zweiten Datenbankeintrags, welche dem auszustellenden Dokument zugeordnet sind, in Klartext umfasst. Eine Schlüsselabfrage wird an das Endgerät des Anfragenstellers gesendet. Ein dem Endgerät zugeordneter öffentlicher kryptographischer Schlüssel wird empfangen. Der empfangene öffentliche kryptographische Schlüssel des Endgeräts wird zu dem zweiten Datensatz hinzugefügt zum kryptographischen Binden des zweiten Datensatzes an das Endgerät. Der zweite Datensatz wird mit einem dem Ausstellerdienst zugeordneten zweiten kryptographischen Signaturschlüssel signiert. Das ausgestellte Dokument wird in Form des signierten zweiten Datensatzes gespeichert. Zudem wird eine Zuordnung des empfangenen öffentlichen kryptographischen Schlüssels des Endgeräts zu dem ausgestellten Dokument in der ersten Datenbank, beispielsweise in dem ersten Datenbankeintrag, gespeichert. In Block 232 wird schließlich das in Block 230 ausgestellte Dokument an das Endgerät gesendet.

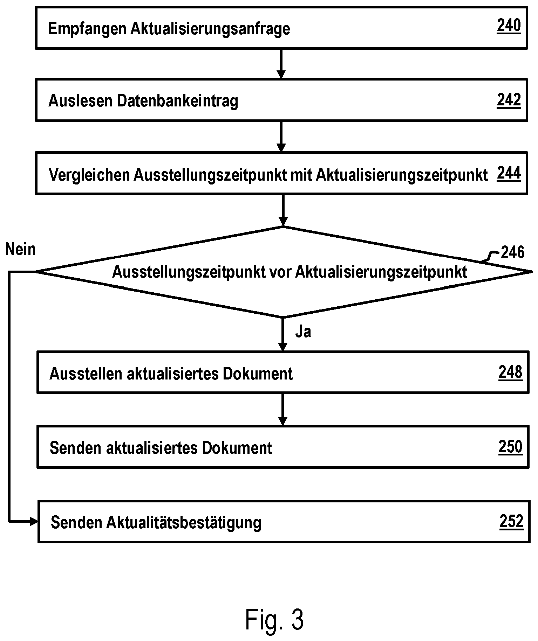

Figur 3 zeigt ein exemplarisches Verfahren zum Aktualisieren eines ausgestellten Dokuments. Das Dokument umfasst eine Angabe eines Zeitpunkts einer Ausstellung des Dokuments. In Block 240 umfasst das Aktualisieren ein Empfangen einer Aktualisierungsanfrage zum Aktualisieren des ausgestellten Dokuments von einem Endgerät eines Anfragenstellers, wobei die Aktualisierungsanfrage das ausgestellte Dokument umfasst. In Block 242 wird der zweite Datenbankeintrag aus der zweiten Datenbank ausgelesen unter Verwendung eines Datenelements des empfangenen Dokuments. Das entsprechenden Datenelement wird beispielsweise zum Bereitstellen eines Datenbankzugriffsschlüssels zum Zugreifen auf den zweiten Datenbankeintrag verwendet. Der zweite Datenbankeintrag umfasst eine Angabe eines Zeitpunkts einer letzten Aktualisierung des zweiten Datenbankeintrags. In Block 244 wird die Angabe des Zeitpunkts der Ausstellung des empfangenen Dokuments mit der Angabe des Zeitpunkts der letzten Aktualisierung des zweiten Datenbankeintrags verglichen. In Block 246 wird geprüft, ob das Ausstellen des Dokuments vor einer letzten Aktualisierung des zweiten Datenbankeintrags erfolgt ist. Falls dies nicht der Fall, wird das Verfahren mit Block 252 fortgesetzt, in welchem eine Aktualitätsbestätigung, d.h. eine Information, an den Anfragensteller gesendet, welche angibt, dass es sich bei dem ausgestellten Dokument um ein aktuelles Dokument mit aktuellen Datenelementen handelt.

Falls das Ausstellen des Dokuments nach der letzten Aktualisierung des zweiten Datenbankeintrags erfolgt ist, wird das Verfahren mit Block 248 fortgesetzt. In Block 248 wird ein aktualisiertes Dokument ausgestellt. Das Ausstellen des aktualisierten Dokuments umfasst ein Erstellen eines Datensatzes, welcher ein oder mehrere der Datenelemente des ausgelesenen zweiten Datenbankeintrags, welche dem auszustellenden Dokument zugeordnet sind, in Klartext umfasst. Es wird der öffentliche kryptographische Schlüssel des Endgeräts aus dem empfangenen Dokument zu dem Datensatz zum kryptographischen Binden des Datensatzes an das Endgerät hinzugefügt. Der resultierende Datensatz wird mit dem zweiten kryptographischen Signaturschlüssel des Ausstellerdienstes signiert. Das aktualisierte Dokument wird in Form des signierten Datensatzes bereitgestellt und in Block 250 an das Endgerät gesendet.

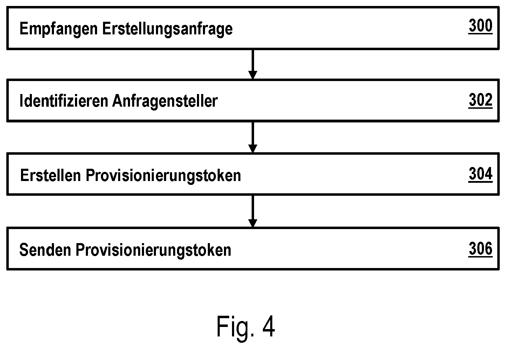

Figur 4 zeigt ein exemplarisches Verfahren zum Erzeugen eines digitalen Provisionierungstokens durch einen Ausstellerdienst. Der Provisionierungstoken weist eine Berechtigung zum Empfang einer auszustellenden digitalen Kopie eines ausgestellten digitalen Dokuments mit einem Endgerät und zur kryptographischen Kopplung an das Endgerät im Zuge der Ausstellung nach. In Block 300 wird durch einen ersten Server des Ausstellerdienstes eine Erstellungsanfrage zum Erstellen des Provisionierungstokens empfangen. In Block 302 wird der Anfragensteller unter Verwendung des ausgestellten digitalen Dokuments identifiziert. Beispielsweise sendet der Anfragensteller mit der Anfrage das entsprechende Dokument und signiert die Anfrage und/oder das gesendete Dokument. Die entsprechende Signatur kann unter Verwendung des von dem Dokument umfasst öffentlichen kryptographischen Schlüssels validiert werden. Durch die entsprechende Validierung wird beispielsweise auch der Anfragensteller identifiziert.

In Block 304 wird das angefragte Provisionierungstoken in Form eines signierten Datensatzes erstellt. Das Erstellen umfasst ein Empfangen eines dem ausgestellten Dokument zugeordneten ersten Datenelements, welches das ausgestellte Dokument, für das eine Kopie auszustellen ist, eindeutig identifiziert. Ein ersten Datenelement wird unter Verwendung eines aus einer zweiten Datenbank ausgelesenen zweiten Datenbankeintrags, welcher von dem auszustellen Dokument zu umfassende Daten umfasst, geprüft. Beispielsweise werden zusätzlich ein oder mehr weitere Datenelemente geprüft. Ein erster Salt-Wert wird erzeugt, welcher dem ersten Datenelement zugeordnet wird. Das Zuordnen umfasst ein Speichern einer ersten Zuordnung des ersten Salt-Werts zu dem ersten Datenelement in einer ersten Datenbank. Beispielsweise werden für die weiteren Datenelemente ebenfalls Salt-Werte erzeugt und Zuordnung in der ersten Datenbank gespeichert. Es wird ein erster Hashwert unter Verwendung einer ersten Kombination des ersten Datenelements und des ersten Salt-Werts berechnet. Beispielsweise werden für die weiteren Datenelemente ebenfalls Hashwerte berechnet. Es wird ein Datensatz erstellt, welcher den ersten Hashwert sowie einen Indikator umfasst. Der Indikator zeigt an, dass es sich um ein Provisionierungstoken für eine Kopie des ausgestellten Dokuments handelt. Beispielsweise umfasst der Datensatz zusätzlich die Hashwerte der weiteren Datenelement. Der Datensatz wird mit einem dem Ausstellerdienst zugeordneten kryptographischen Signaturschlüssel signiert. Das angefragte Provisionierungstoken wird in Form des signierten Datensatzes bereitgestellt. In Block 306 wird der Provisionierungstoken schließlich an den identifizierenten Anfragensteller gesendet.

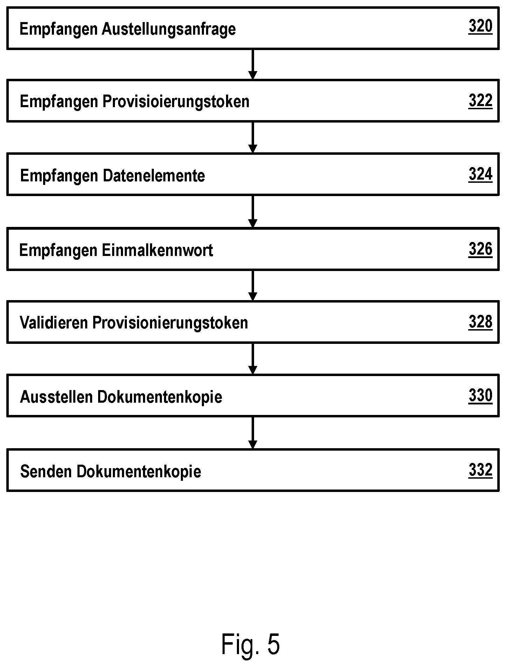

Figur 5 zeigt ein exemplarisches Verfahren zum Ausstellen einer digitalen Kopie eines ausgestellten digitalen Dokuments unter Verwendung eines digitalen Provisionierungstokens, wie er etwa unter Verwendung des Verfahrens nach Figur 4 erstellt werden kann. Der Provisionierungstoken weist eine Berechtigung zum Empfang der auszustellenden digitalen Kopie des ausgestellten digitalen Dokuments mit einem Endgerät und zur kryptographischen Kopplung an das Endgerät im Zuge der Ausstellung nach. Der Provisionierungstoken umfasst einen ersten Datensatz mit einem ersten Hashwert und einem Indikator. Der erste Hashwert ist unter Verwendung einer ersten Kombination eines dem ausgestellten Dokument zugeordneten ersten Datenelements, welches das ausgestellte Dokument, für das eine Kopie auszustellen ist, eindeutig identifiziert, und eines dem ersten Datenelement zugeordneten ersten Salt-Werts erzeugt. Der Indikator zeigt an, dass es sich um ein Provisionierungstoken für eine Kopie des ausgestellten Dokuments handelt. Beispielsweise kann der Datensatz noch weitere Hashwerte von Datenelementen umfassen, welche unter Verwendung weiterer Salt-Werte erzeugt sind. Zudem kann der Datensatz beispielsweise einen Hashwert eines Einmalkennworts umfassen, welcher beispielsweise ebenfalls unter Verwendung eines Salt-Werts erzeugt ist. Der erste Datensatz ist mit einem ersten Signaturschlüssel eines den Provisionierungstoken erzeugenden Ausstellerdienstes signiert ist.

In einer ersten Datenbank ist ein erster Datenbankeintrag mit einer ersten Zuordnung des ersten Salt-Werts zu dem ersten Datenelement gespeichert. Zudem können in dem ersten Datenbankeintrag Zuordnungen weiterer Salt-Werte zu weiteren Datenelementen und/oder eine Zuordnung eines Salt-Werts zu einem Einmalkennwort gespeichert sein. In einer zweiten Datenbank ist ein zweiter Datenbankeintrag mit Datenelementen des ausgestellten Dokuments gespeichert.

In Block 320 wird durch einen ersten Server des Ausstellerdienstes eine Ausstellungsanfrage zum Ausstellen zum Ausstellen der auszustellenden Kopie des ausgestellten Dokuments von einem Endgerät eines Anfragenstellers empfangen. In Block 222 wird der Provisionierungstoken von dem Endgerät empfangen. In Block 324 werden Datenelemente, deren Hashwerte in dem Provisionierungstoken gespeichert sind, empfangen. In Block 326 wird ferner ein Einmalkennwort empfangen. In Block 328 wird der Provisionierungstoken unter Verwendung der empfangenen Datenelemente und des Einmalkennworts validiert.

Das Validieren des Provisionierungstokens umfasst ein Validieren der Signatur des Provisionierungstokens unter Verwendung eines ersten Signaturprüfschlüssels des Ausstellerdienstes. Unter Verwendung des ersten Datenelements wird der erste Datenbankeintrag aus der ersten Datenbank ausgelesen. Die in dem Provisionierungstoken eingetragenen Hashwerte, beispielsweise Hashwerte von Datenelementen und/oder des Einmalkennworts, werden unter Verwendung des ausgelesenen ersten Datenbankeintrags geprüft. Hierzu werden die in dem ersten Datenbankeintrag gespeicherten Salt-Werte verwendet. Auf eine erfolgreiche Prüfung hin, werden zumindest die in dem ersten Datenbankeintrag gespeicherten Salt-Werte in der ersten Datenbank gelöscht. Beispielsweise werden alle dem entsprechenden Provisionierungstoken zugeordneten Daten in dem ersten Datenbankeintrag gelöscht.

In Block 330 wird die Kopie des Dokuments ausgestellt. Das Ausstellen der Kopie des Dokuments umfasst beispielsweise ein Auslesen des zweiten Datenbankeintrags aus der zweiten Datenbank. Ein zweiter Datensatz wird erstellt, welcher ein oder mehrere der Datenelemente des zweiten Datenbankeintrags, welche dem auszustellenden Dokument zugeordnet sind, in Klartext umfasst. Der zweite Datensatz umfasst ferner einen Indikator in Klartext, welcher anzeigt, dass es sich um einen Datensatz einer Kopie des ausgestellten Dokuments handelt. Eine Schlüsselabfrage wird an das Endgerät des Anfragenstellers gesendet. Ein dem Endgerät zugeordneter öffentlicher kryptographischer Schlüssel wird empfangen. Der empfangene öffentliche kryptographische Schlüssel des Endgeräts wird zu dem zweiten Datensatz hinzugefügt zum kryptographischen Binden des zweiten Datensatzes an das Endgerät. Der zweite Datensatz wird mit einem dem Ausstellerdienst zugeordneten zweiten kryptographischen Signaturschlüssel signiert. Die ausgestellte Kopie des Dokuments wird in Form des signierten zweiten Datensatzes bereitgestellt. Zudem wird eine Zuordnung des empfangenen öffentlichen kryptographischen Schlüssels des Endgeräts zu der ausgestellten Kopie des Dokuments in der ersten Datenbank, beispielsweise in dem ersten Datenbankeintrag, gespeichert. In Block 332 wird schließlich die in Block 330 ausgestellte Kopie des Dokuments an das Endgerät gesendet.

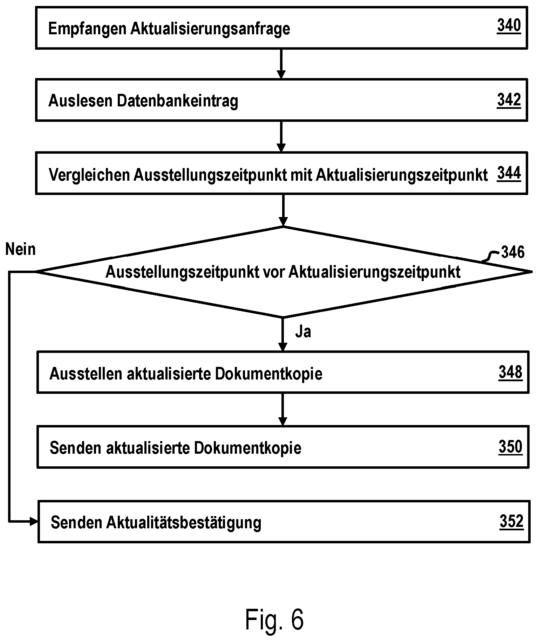

Figur 6 zeigt ein exemplarisches Verfahren zum Aktualisieren einer ausgestellten Dokumentenkopie. Die Dokumentenkopie umfasst eine Angabe eines Zeitpunkts einer Ausstellung der Dokumentenkopie. In Block 340 umfasst das Aktualisieren ein Empfangen einer Aktualisierungsanfrage zum Aktualisieren der ausgestellten Dokumentenkopie von einem Endgerät eines Anfragenstellers, wobei die Aktualisierungsanfrage die ausgestellte Dokumentenkopie umfasst. In Block 342 wird der zweite Datenbankeintrag aus der zweiten Datenbank ausgelesen unter Verwendung eines Datenelements der empfangenen Dokumentenkopie. Das entsprechenden Datenelement wird beispielsweise zum Bereitstellen eines Datenbankzugriffsschlüssels zum Zugreifen auf den zweiten Datenbankeintrag verwendet. Der zweite Datenbankeintrag umfasst eine Angabe eines Zeitpunkts einer letzten Aktualisierung des zweiten Datenbankeintrags. In Block 344 wird die Angabe des Zeitpunkts der Ausstellung der empfangenen Dokumentenkopie mit der Angabe des Zeitpunkts der letzten Aktualisierung des zweiten Datenbankeintrags verglichen. In Block 346 wird geprüft, ob das Ausstellen der Dokumentenkopie vor einer letzten Aktualisierung des zweiten Datenbankeintrags erfolgt ist. Falls dies nicht der Fall, wird das Verfahren mit Block 352 fortgesetzt, in welchem eine Aktualitätsbestätigung, d.h. eine Information, an den Anfragensteller gesendet, welche angibt, dass es sich bei der ausgestellten Dokumentenkopie um eine aktuelles Dokumentenkopie mit aktuellen Datenelementen handelt.

Falls das Ausstellen der Dokumentenkopie nach der letzten Aktualisierung des zweiten Datenbankeintrags erfolgt ist, wird das Verfahren mit Block 348 fortgesetzt. In Block 348 wird eine aktualisierte Dokumentenkopie ausgestellt. Das Ausstellen der aktualisierten Dokumentenkopie umfasst ein Erstellen eines Datensatzes, welcher ein oder mehrere der Datenelemente des ausgelesenen zweiten Datenbankeintrags, welche der auszustellenden Dokumentenkopie zugeordnet sind, in Klartext umfasst. Der Datensatz umfasst ferner einen Indikator in Klartext, welcher anzeigt, dass es sich um einen Datensatz einer Kopie des ausgestellten Dokuments handelt. Es wird der öffentliche kryptographische Schlüssel des Endgeräts aus der empfangenen Dokumentenkopie zu dem Datensatz zum kryptographischen Binden des Datensatzes an das Endgerät hinzugefügt. Der resultierende Datensatz wird mit dem zweiten kryptographischen Signaturschlüssel des Ausstellerdienstes signiert. Die aktualisierte Dokumentenkopie wird in Form des signierten Datensatzes bereitgestellt und in Block 350 an das Endgerät gesendet.

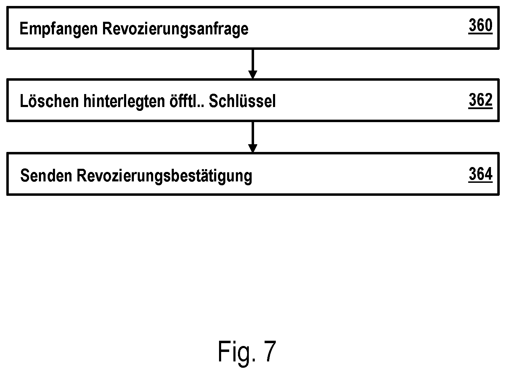

Figur 7 zeigt ein exemplarisches Verfahren zum Revozieren der in Figur 5 ausgestellten Kopie des Dokuments umfasst. In Block 360 empfängt der Server des Ausstellerdienstes eine Revozierungsanfrage zum Revozieren der ausgestellten Kopie des Dokuments von einem an das ausgestellte Dokument kryptographisch gebundenen Endgerät. Beispielsweise umfasst die Revozierungsanfrage das ausgestellte Dokument. Das empfangene ausgestellte Dokument ist mit einem dem an das ausgestellte Dokument kryptographisch gebundenen Endgerät zugeordneten privaten kryptographischen Schlüssel signiert. Das Verfahren umfasst ferner ein Validieren des empfangenen Dokuments. Das Validieren umfasst ein Prüfen der Signatur des empfangenen Dokuments mit dem privaten kryptographischen Schlüssel des an das ausgestellte Dokument kryptographisch gebundenen Endgeräts unter Verwendung des von dem empfangenen Dokument umfassten öffentlichen kryptographischen Schlüssels des an das ausgestellte Dokument kryptographisch gebundenen Endgeräts. In Block 362 wird zumindest eine Zuordnung des öffentlichen kryptographischen Schlüssels des an die zu revozierende Kopie des Dokuments kryptographisch gebundenen Endgeräts aus der ersten Datenbank gelöscht. Beispielsweise können alle der zu revozierenden Kopie des Dokuments zugeordneten Daten aus der ersten Datenbank gelöscht. In Block 364 senden der Server eine Revozierungsbestätigung an das Endgerät.

Auf analoge Weise kann auch ein Provisionierungstoken zum Empfang einer auszustellenden digitalen Kopie eines ausgestellten digitalen Dokuments revoziert werden, bevor die entsprechende Kopie ausgestellt wurde. In diesem Fall werden beispielsweise in der ersten Datenbank für den zu revozierenden Provisionierungstoken gespeicherte Salt-Werte gelöscht. Beispielsweise werden in der ersten Datenbank alle dem zu revozierenden Provisionierungstoken zugeordnete Daten gelöscht.

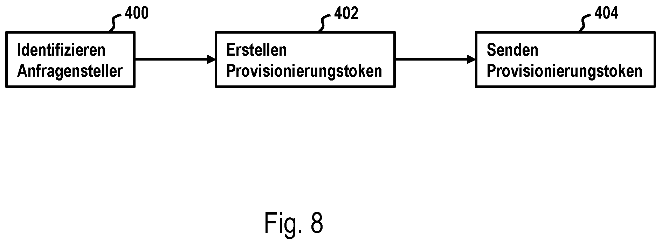

Figur 8 zeigt ein exemplarisches Verfahren zum Erstellen eines digitalen Provisionierungstokens für ein auszustellendes digitales Dokument. In Block 400 wird der Anfragenstellen, welcher eine Anfrage zum Erstellen des Provisionierungstokens stellt, identifiziert. In Block 402 wird das entsprechende Provisionierungstoken erstellt. In Block 404 wird der Provisionierungstoken an den Anfragensteller gesendet.

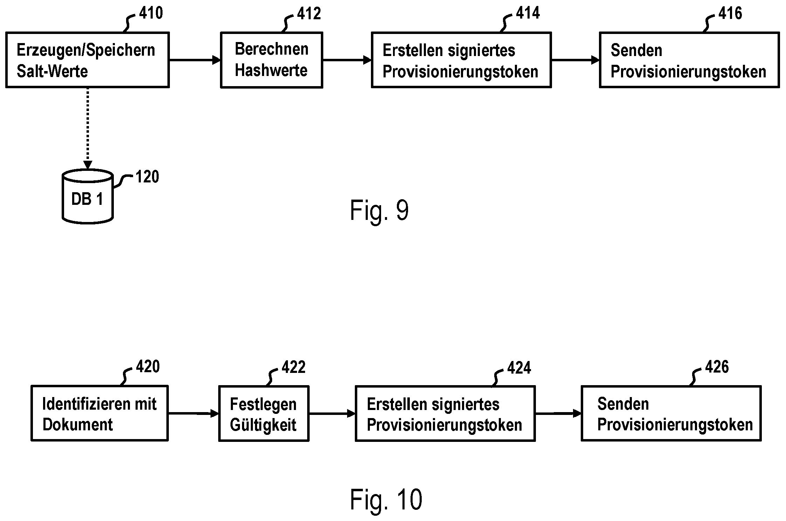

Figur 9 zeigt das Erstellen des Provisionierungstokens gemäß Block 402 der Figur 8 detaillierter. In Block 410 werden Salt-Werte erzeugt und einer ersten Datenbank 120 gespeichert. In Block 412 werden unter Verwendung der in Block 410 erzeugten Salt-Werte Hashwerte zum Speichern in dem Provisionierungstoken berechnet. In Block 414 wird das signierte Provisionierungstoken unter Verwendung der Hashwerte aus Block 412 erstellt und in Block 416 an den Anfragensteller gesendet.

Figur 10 zeigt ein exemplarisches Verfahren zum Erstellen eines digitalen Provisionierungstokens für eine digitale Kopie eines digitalen Dokuments. In Block 420 wird ein Anfragensteller, welcher eine Anfrage zum Erstellen des entsprechenden Provisionierungstokens an den Server eines Ausstellerdienstes stellt, unter Verwendung des Dokuments, welches sich in seinem Besitz befindet identifiziert. In Block 422 wird eine Gültigkeitsdauer für die mit dem Provisionierungstoken zu erlangende Dokumentenkopie definiert. In Block 424 wird das signierte Provisionierungstoken erstellt und in Block 426 an den Anfragensteller gesendet.

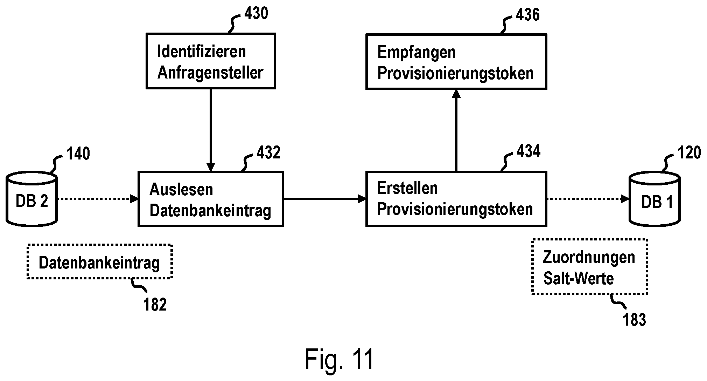

Figur 11 zeigt ein weiteres exemplarisches Verfahren zum Erstellen eines digitalen Provisionierungstokens für ein auszustellendes digitales Dokument. In Block 430 wird der Anfragenstellen, welcher eine Anfrage zum Erstellen des Provisionierungstokens stellt, identifiziert. In Block 432 wird ein Datenbankeintrag 182 mit Datenelementen des auszustellenden Dokuments aus der zweiten Datenbank 140 ausgelesen. Dieser Datenbankeintrag 182 wird zur Prüfung verwendet, dass Hashwerte, die in den Provisionierungstoken eingetragen werden, auf korrekten, existierenden Datenelementen beruhen. In Block 434 wird der Provisionierungstoken erstellt. Im Zuge der Erstellung des Provisionierungstokens werden Hashwerte unter Verwendung der Datenelemente sowie Salt-Werten erzeugt. Eine Zuordnung der Datenelemente zu den Salt-Werten wird in einer ersten Datenbank 120 gespeichert. In Block 436 wird der erstellte Provisionierungstoken an den Anfragensteller gesendet, welcher diesen empfängt.

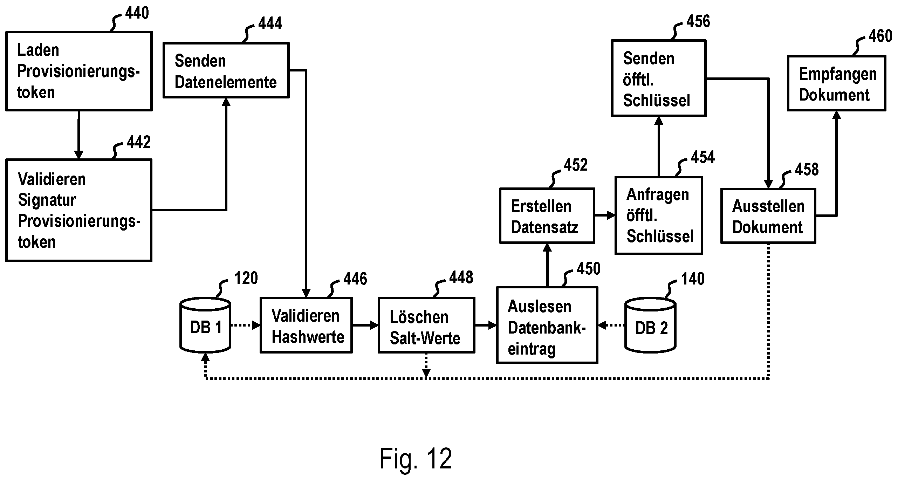

Figur 12 zeigt ein exemplarisches Verfahren zum Ausstellen eines digitalen Dokuments unter Verwendung eines Provisionierungstokens. In Block 440 wird der digitale Provisionierungstoken auf einem Endgerät, beispielsweise in einer App, geladen. In Block 442 wird der Provisionierungstoken an einen Server eines Ausstellerdienstes gesendet, welcher eine Signatur des Provisionierungstokens validiert. In Block 444 werden von dem Anfragensteller Datenelemente zum Validieren der von dem Provisionierungstoken umfassten Hashwerten abgefragt. Beispielsweise wird dabei auch ein Einmalkennwort des Anfragensteller abgefragt. In Block 446 werden die Hashwerte des Provisionierungstokens unter Verwendung der von der ersten Datenbank 120 bereitgestellten Salt-Werten validiert. Auf eine erfolgreiche Validierung hin, werden in Block 448 die in der ersten Datenbank 120 für den Provisionierungstoken gespeicherten Salt-Werte gelöscht, sodass der Provisionierungstoken nicht erneut zum Ausstellen des Dokuments verwendet werden kann. In Block 450 werden Datenelemente für das auszustellende Dokument aus einem Datenbankeintrag in einer zweiten Datenbank 140 ausgelesen. In Block 452 wird mit den von dem ausgelesenen Datenbankeintrag umfassten Datenelementen ein Datensatz für das Dokument erstellt. In Block 454 wird von dem Anfragensteller ein öffentlicher kryptographischer Schlüssel eines Endgeräts des Anfragensteller angefragt, um das Dokument kryptographisch an das entsprechende Endgerät binden zu können. In Block 456 wird der angefragte öffentliche kryptographische Schlüssel des Endgeräts an den Server des Ausstellerdienstes gesendet, welcher in Block 458 das Dokument ausstellt. In Block 460 wird das ausgestellte, d.h., signierte Dokument mit den Datenelementen aus dem ausgelesenen Datenbankeintrag und dem öffentlichen kryptographischen Schlüssel des Endgeräts an den Anfragensteller gesendet, welcher das Dokument empfängt.

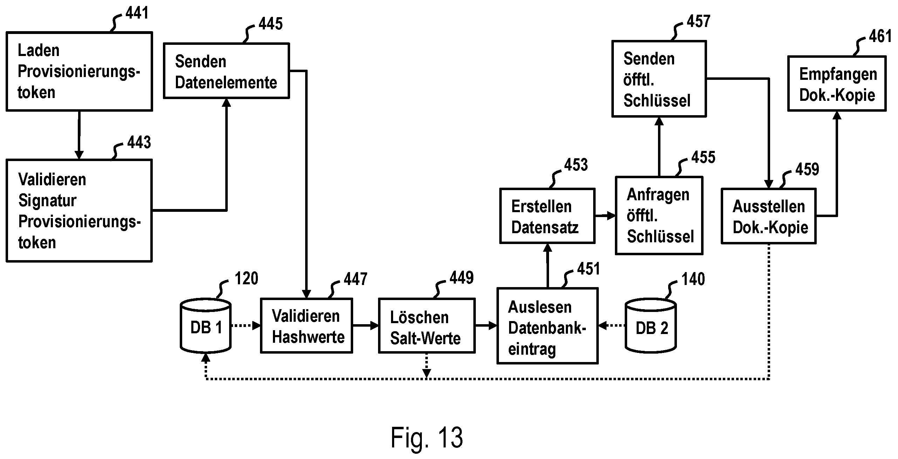

Figur 13 zeigt ein exemplarisches Verfahren zum Ausstellen einer digitalen Kopie eines Dokuments unter Verwendung eines Provisionierungstokens. In Block 441 wird der digitale Provisionierungstoken auf einem Endgerät, beispielsweise in einer App, geladen. In Block 443 wird der Provisionierungstoken an einen Server eines Ausstellerdienstes gesendet, welcher eine Signatur des Provisionierungstokens validiert. In Block 445 werden von dem Anfragensteller Datenelemente zum Validieren der von dem Provisionierungstoken umfassten Hashwerten abgefragt. Beispielsweise wird dabei auch ein Einmalkennwort des Anfragensteller abgefragt. In Block 447 werden die Hashwerte des Provisionierungstokens unter Verwendung der von der ersten Datenbank 120 bereitgestellten Salt-Werten validiert. Auf eine erfolgreiche Validierung hin, werden in Block 449 die in der ersten Datenbank 120 für den Provisionierungstoken gespeicherten Salt-Werte gelöscht, sodass der Provisionierungstoken nicht erneut zum Ausstellen einer Kopie des Dokuments verwendet werden kann. In Block 451 werden Datenelemente für die auszustellende Kopie des Dokuments aus einem Datenbankeintrag in einer zweiten Datenbank 140 ausgelesen. In Block 453 wird mit den von dem ausgelesenen Datenbankeintrag umfassten Datenelementen ein Datensatz für die Kopie des Dokuments erstellt. In Block 455 wird von dem Anfragensteller ein öffentlicher kryptographischer Schlüssel eines Endgeräts des Anfragensteller angefragt, um die Kopie des Dokuments kryptographisch an das entsprechende Endgerät binden zu können. In Block 457 wird der angefragte öffentliche kryptographische Schlüssel des Endgeräts an den Server des Ausstellerdienstes gesendet, welcher in Block 459 die Kopie des Dokuments ausstellt. In Block 461 wird die ausgestellte, d.h., signierte Dokumentkopie mit den Datenelementen aus dem ausgelesenen Datenbankeintrag und dem öffentlichen kryptographischen Schlüssel des Endgeräts an den Anfragensteller gesendet, welcher die Kopie empfängt.

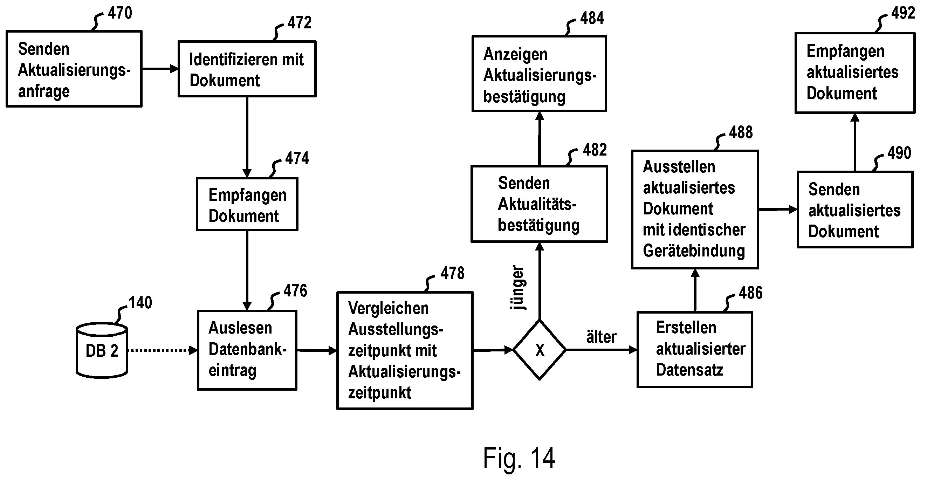

Figur 14 zeigt ein exemplarisches Verfahren zum Aktualisieren eines ausgestellten Dokuments. In Block 470 sendet ein Anfragensteller eine Aktualisierungsanfrage unter Verwendung eines Endgeräts, beispielsweise eines mobilen Endgeräts und einer darauf laufenden App an einen Server eines Austellerdienstes. Hierbei identifiziert sich der Anfragensteller in Block 472 mit dem ausgestellten Dokument. Beispielsweise wird das entsprechende Dokument mit der Aktualisierungsanfrage mitgesendet. In Block 474 wird das Dokument von dem Server empfangen. In Block 476 wird ein Datenbankeintrag mit aktuellen Datenelementen für das Dokument aus der Datenbank 140 ausgelesen. In Block 478 wird ein Ausstellzeitpunkt des Dokuments mit einem Aktualisierungszeitpunkt einer letzten Aktualisierung des ausgelesenen Datenbankeintrags verglichen. Ist der Ausstellerzeitpunkt jünger, bedeutet diese, dass das Dokument auf dem aktuellsten Stand ist. In Block 482 wird eine Aktualitätsbestätigung an das Endgerät des Anfragenstellers gesendet, welche bestätigt, dass das Dokument auf dem aktuellsten Stand ist. In Block 484 wird die Aktualitätsbestätigung beispielsweise auf dem Endgerät des Anfragenstellers angezeigt.

Ist der Ausstellerzeitpunkt älter, bedeutet diese, dass das Dokument nicht auf dem aktuellsten Stand ist. In Block 486 wird ein aktualisierter Datensatz mit den aktuellen Datenelementen aus dem ausgelesenen Datenbankeintrag erstellt. In Block 488 wird ein aktualisiertes mit identischer Gerätebindung, wie das bisherige Dokument, d.h. mit demselben öffentlichen kryptographischen Schlüssel des Endgeräts des Anfragenstellers ausgestellt. In Block 490 wird das aktualisierte Dokument an den Anfragensteller gesendet, welcher das aktualisierte Dokument in Block 492 auf seinem Endgerät empfängt.

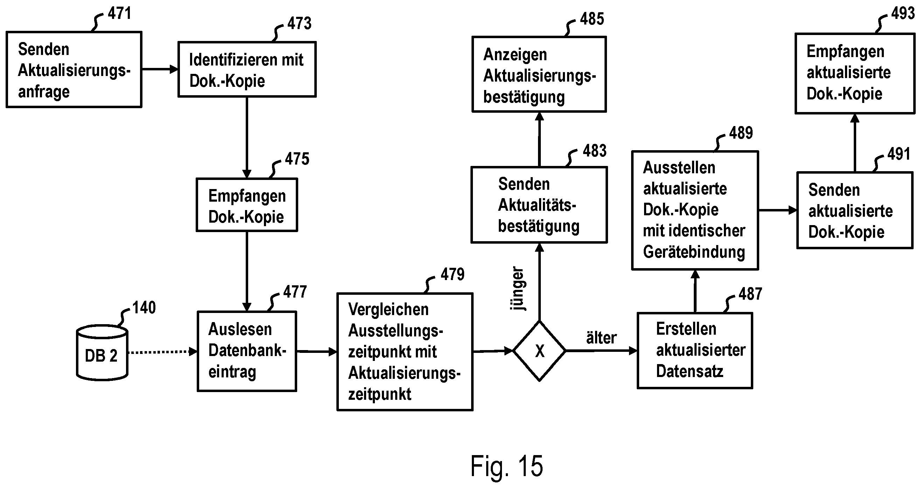

Figur 15 zeigt ein exemplarisches Verfahren zum Aktualisieren einer ausgestellten Kopie eines Dokuments. In Block 471 sendet ein Anfragensteller eine Aktualisierungsanfrage unter Verwendung eines Endgeräts, beispielsweise eines mobilen Endgeräts und einer darauf laufenden App an einen Server eines Austellerdienstes. Hierbei identifiziert sich der Anfragensteller in Block 473 mit der ausgestellten Kopie des Dokuments. Beispielsweise wird die entsprechende Kopie mit der Aktualisierungsanfrage mitgesendet. In Block 475 wird die Dokumentkopie von dem Server empfangen. In Block 477 wird ein Datenbankeintrag mit aktuellen Datenelementen für die Kopie des Dokuments aus der Datenbank 140 ausgelesen. In Block 479 wird ein Ausstellzeitpunkt der Dokumentenkopie mit einem Aktualisierungszeitpunkt einer letzten Aktualisierung des ausgelesenen Datenbankeintrags verglichen. Ist der Ausstellerzeitpunkt jünger, bedeutet diese, dass die Kopie auf dem aktuellsten Stand ist. In Block 483 wird eine Aktualitätsbestätigung an das Endgerät des Anfragenstellers gesendet, welche bestätigt, dass die Kopie des Dokuments auf dem aktuellsten Stand ist. In Block 485 wird die Aktualitätsbestätigung beispielsweise auf dem Endgerät des Anfragenstellers angezeigt.

Ist der Ausstellerzeitpunkt älter, bedeutet diese, dass die Kopie des Dokuments nicht auf dem aktuellsten Stand ist. In Block 487 wird ein aktualisierter Datensatz mit den aktuellen Datenelementen aus dem ausgelesenen Datenbankeintrag erstellt. In Block 489 wird ein aktualisiertes mit identischer Gerätebindung, wie die bisherige Dokumentenkopie, d.h. mit demselben öffentlichen kryptographischen Schlüssel des Endgeräts des Anfragenstellers ausgestellt. In Block 491 wird die aktualisierte Kopie des Dokuments an den Anfragensteller gesendet, welcher die aktualisierte Kopie des Dokuments in Block 493 auf seinem Endgerät empfängt.

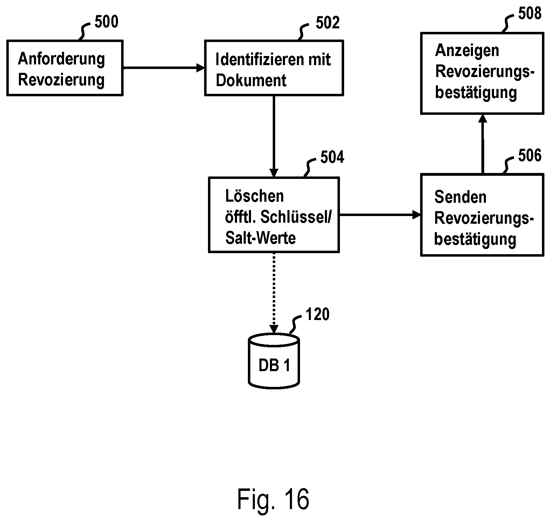

Figur 16 zeigt ein exemplarisches Verfahren zum Revozieren eines digitalen Provisionierungstokens zum Ausstellen einer digitalen Kopie eines digitalen Dokuments oder der ausgestellten Kopie des Dokuments. In Block 500 wird eine Revozierungsanforderung von einem Anfragensteller, welcher sich im Besitz des Dokuments befindet, gestellt. In Block 502 identifiziert sich der Anfragensteller mit dem Dokument, beispielsweise wird das Dokument mit der Revozierungsanforderung zusammen von einem Endgerät des Anfragenstellers an einen Server eines Ausstellerdienstes gesendet. In Block 504 werden in der ersten Datenbank 120 Daten gelöscht, welche dem Provisionierungstoken oder der ausgestellten Kopie des Dokuments zugeordnet sind. Im ersten Fall beispielsweise Salt-Werte, im zweiten Fall beispielsweise der öffentliche kryptographische Schlüssel des Endgeräts, an welches die Kopie kryptographisch gebunden ist. Durch das Löschen der entsprechenden Daten können der Provisionierungstoken bzw. die Dokumentenkopie nicht mehr validiert und somit nicht mehr verwendet werden. In Block 506 wird daher eine Revozierungsbestätigung an den Anfragensteller gesendet, welcher die in Block 508 mit seinem Endgerät empfängt und sich beispielsweise auf demselben anzeigt.

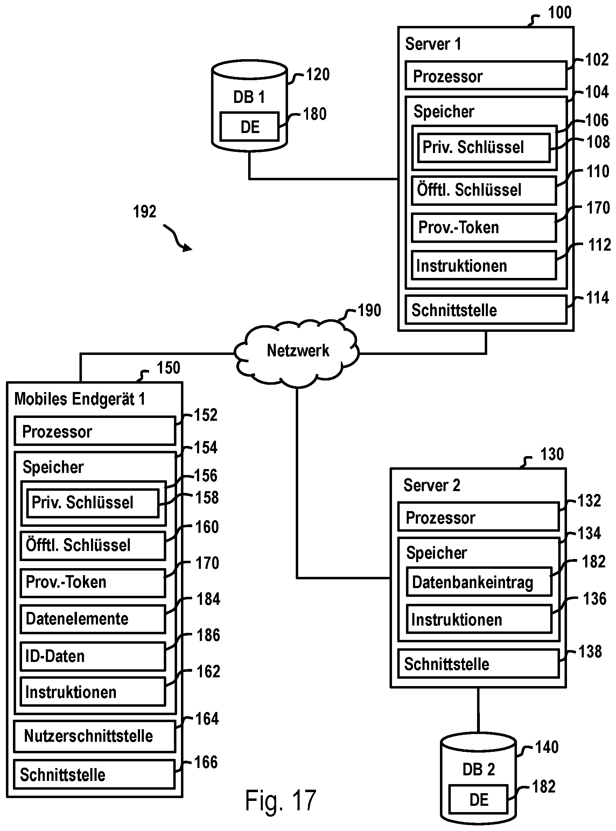

Figur 17 zeigt ein exemplarisches System 192 zum Erzeugen eines digitalen Provisionierungstokens 170 für ein digitales Dokument durch einen Ausstellerdienst. Das System 192 umfasst einen erste Server 100 des Ausstellerdienstes. Der Server 100 umfasst einen Prozessor 102, einen Speicher 104 mit Programminstruktionen 112 und eine Kommunikationsschnittstelle 114 zur Kommunikation über ein Netzwerk 190. Ferner besitzt der Server 100 beispielsweise Zugriff auf eine erste Datenbank 120. Ein Ausführen der Programminstruktionen 112 durch den Prozessor 102 veranlasst den Prozessor 102 dazu, den Server 100 zu steuern zum Ausführen eines Verfahrens zum Erzeugen eines digitalen Provisionierungstokens 170. Beispielsweise handelt es sich um das Verfahren nach Figur 1.

Das System 192 umfasst beispielsweise ferner einen zweiten Server 130, welche für den ersten Server 100 des Ausstellerdienstes einen Zugriff auf eine zweite Datenbank 140 bereitstellt. In der Datenbank 140 ist ein Datenbankeintrag 182 mit Datenelementen für ein digitales Dokument gespeichert. Der zweite Server 130 umfasst einen Prozessor 132, einen Speicher 134 mit Programminstruktionen 136 und eine Kommunikationsschnittstelle 138 zur Kommunikation über das Netzwerk 190. Ein Ausführen der Programminstruktionen 136 durch den Prozessor 132 veranlasst den Prozessor 132 dazu, den Server 130 zu steuern zum Bereitstellen des Datenbankeintrag 182 für den ersten Server 100.

Ferner umfasst das System 192 beispielsweise ein Endgerät 150, insbesondere ein mobiles Endgerät, wie etwa ein Smartphone. Das Endgerät 150 umfasst einen Prozessor 152, einen Speicher 154 mit Programminstruktionen 162 und eine Kommunikationsschnittstelle 166 zur Kommunikation über das Netzwerk 190. Zudem umfasst das Endgerät 150 beispielsweise eine Nutzerschnittstelle 164, über welche ein Nutzer das Endgerät 150 steuern kann, beispielsweise zum Anfragen eines Erstellens eines Provisionierungstokens 170 für ein digitales Dokument. Ein Ausführen der Programminstruktionen 162, welche beispielsweise eine entsprechende App auf dem Endgerät 150 implementieren, durch den Prozessor 152 veranlasst den Prozessor 152 dazu, das Endgerät 150 zum Anfragen des Provisionierungstokens 170 über das Netzwerk 190 bei dem Server 100 des Ausstellerdienstes zu steuern.

Beispielsweise identifiziert sich der Anfragesteller zunächst mit dem Endgerät 150 unter Verwendung der Identifikations-Daten 186 gegenüber dem Server 100. Ferner kann das Endgerät 150 ein oder mehrere Datenelemente 184 des auszustellenden Dokuments an den Server 100 senden. Anhand der empfangenen Datenelemente kann der Server 100 den Datenbankeintrag 182 identifizieren, welchen er über den Server 130 aus der zweiten Datenbank 140 ausliest. Mit diesem Datenbankeintrag 182 kann der Server 100 die Korrektheit der Datenelemente 184 prüfen und aus den Datenelementen 182 Hashwerte für Provisionierungstoken 170 berechnen. Hierzu werden den Datenelementen 182 Salt-Werte zugeordnet und die entsprechenden Zuordnungen in der ersten Datenbank 120 in einem ersten Datenbankeintrag 180 gespeichert. Der Server 100 signiert den erstellten Provisionierungstokens 170 unter Verwendung des privaten kryptographischen Schlüssels 108, welcher als Signaturschlüssel verwendet wird. Der private kryptographische Schlüssels 108 ist beispielsweise in einem geschützten Speicherbereich 106 des Speichers 104 gespeichert. Die resultierende Signatur kann mit einem öffentlichen kryptographischen Schlüssel 110 des Servers 100 als Signaturprüfschlüssel geprüft werden. Der so erstellte Provisionierungstokens 170 wird dem Endgerät 150 über das Netzwerk 190 zur Verfügung gestellt.

Beispielsweise umfasst auch das Endgerät 150 ein symmetrisches kryptographisches Schlüsselpaar, welches dem Endgerät 150 zugeordnet ist. Dieses asymmetrische kryptographische Schlüsselpaar umfasst einen privaten kryptographischen Schlüssel 158 und einen öffentlichen kryptographischen Schlüssel 160. Der private kryptographische Schlüssel 158 ist beispielsweise in einem geschützten Speicherbereich 156 des Speichers 154 gespeichert.

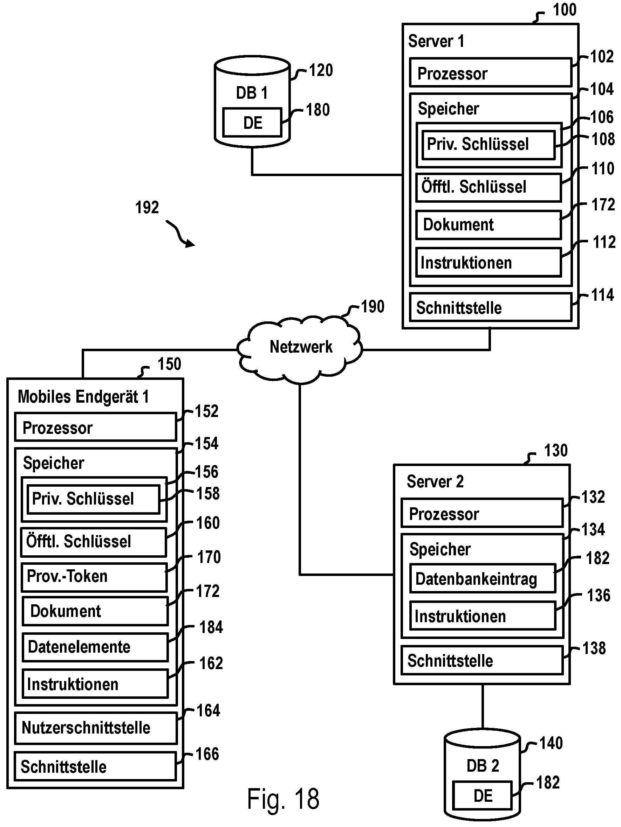

Figur 18 zeigt ein exemplarisches System 192 zum Ausstellen eines digitalen Dokuments unter Verwendung des Provisionierungstokens 170. Das System 192 in Figur 18 entspricht dem System 192 in Figur 17. Das Endgerät 150 verwendet den Provisionierungstoken 170 zum Anfragen eines Ausstellens des digitalen Dokuments 172 durch den Server 100. Der Server 100 validiert den Provisionierungstoken 170. Die Validierung umfasst beispielsweise eine Signaturprüfung unter Verwendung des öffentlichen kryptographischen Schlüssels 110 sowie der von dem Provisionierungstoken 170 umfassten Hashwerten. Hierfür werden beispielsweise die Salt-Werte aus dem ersten Datenbankeintrag 180 und Datenelemente aus dem zweiten Datenbankeintrag 182 verwendet. Auf eine erfolgreiche Validierung hin werden die Salt-Werte aus dem ersten Datenbankeintrag 180 gelöscht, sodass der Provisionierungstoken 170 nicht noch einmal verwendet werden kann.

Ferner wird das Dokument 172 erstellt, welches Datenelemente des Dokuments aus dem zweiten Datenbankeintrag 182 umfasst und beispielsweise mit dem privaten kryptographischen Schlüssel 108 signiert wird. Für eine kryptographische Bindung des Dokuments 172 an das Endgerät 150 wird zusätzlich der öffentliche kryptographische Schlüssel 160 des Endgeräts 150 zu dem Dokument 172 hinzugefügt. Das resultierende Dokument wird dem Endgerät 150 beispielsweise über das Netzwerk 190 zugesendet.

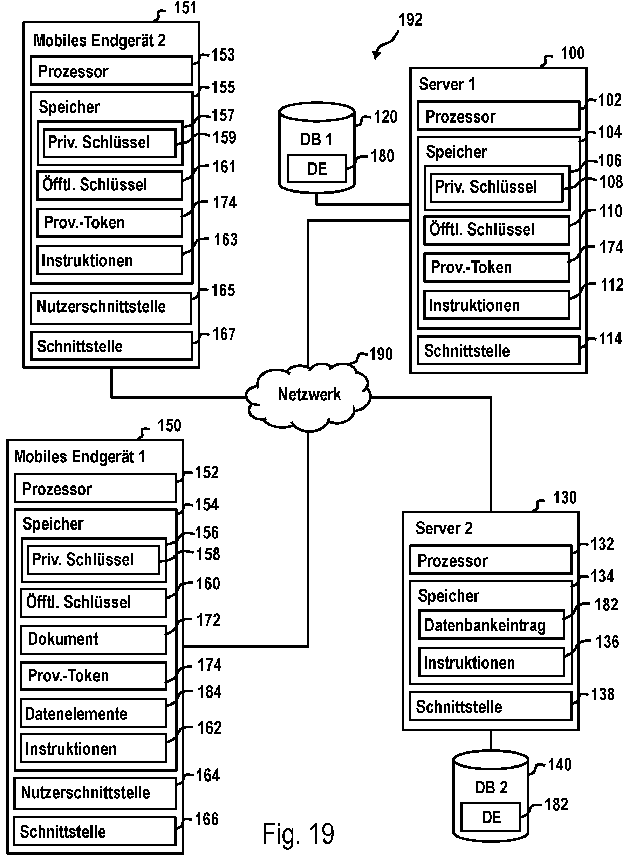

Figur 19 zeigt ein exemplarisches System 192 zum Erzeugen eines digitalen Provisionierungstokens 174 für eine Kopie des digitalen Dokuments 172 durch den Ausstellerdienst. Das System 192 in Figur 19 entspricht dem System 192 in Figur 18. Ein Nutzer verwendet das Endgerät um einen digitalen Provisionierungstokens 174 für eine Kopie eines ausgestellten Dokuments, beispielsweise des Dokuments 172, zu beantragen. Das Endgerät 150 identifiziert den Anfragensteller gegenüber dem Server 100 beispielsweise unter Verwendung des Dokuments 172. Der Server 100 erstellt ein Provisionierungstokens 174 für eine Kopie des digitalen Dokuments 172. Das Erstellen des Provisionierungstokens 174 entspricht beispielsweise dem Erstellen des Provisionierungstokens 170 in Figur 17. Von dem Provisionierungstokens 170 unterscheidet sich der Provisionierungstoken 174 beispielsweise dadurch, dass es einen Indikator umfasst, welcher anzeigt, dass es sich um ein Provisionierungstoken für eine Kopie eines Dokuments handelt. Ferner umfasst der Provisionierungstoken 174 beispielsweise eine Angabe einer Gültigkeitsdauer der auszustellenden Kopie des Dokuments. Diese Gültigkeitsdauer kann beispielsweise der Nutzer des Endgeräts 150 festlegen. Der erstellte Provisionierungstoken 174 wird von dem Server 100 an das Endgerät 150 gesendet. Das Endgerät 150 kann den Provisionierungstoken 174 beispielsweise an ein weiteres Endgerät 151 eines anderen Nutzers weiterleiten. Somit wird der andere Nutzer dazu in die Lage versetzt sich eine Kopie des Dokuments 172 ausstellen zulassen, ohne dass dafür eine weitere Tätigkeit seitens des Nutzers des Endgeräts 150, d.h. des Besitzers des Dokuments 172, nötig wäre.

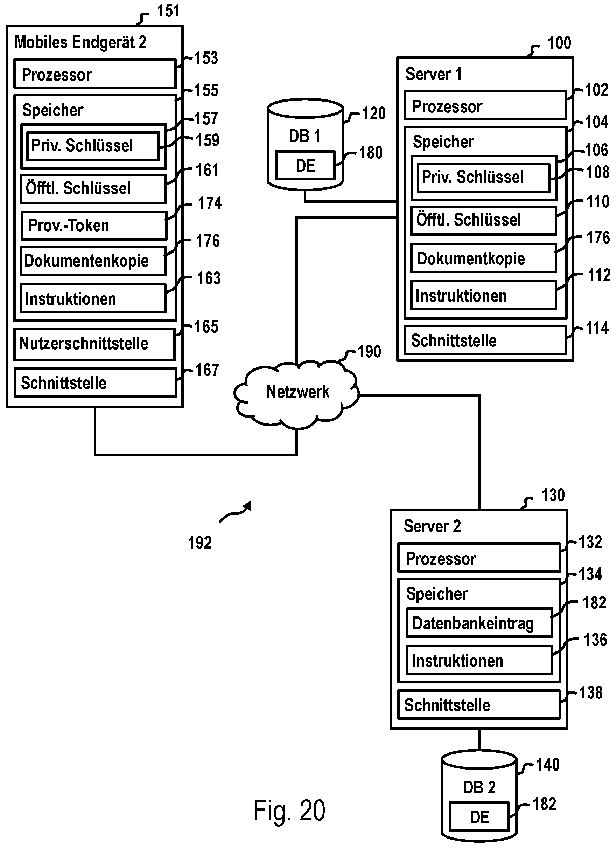

Bei dem Endgerät 151 handelt es sich beispielsweise um ein mobiles Endgerät, wie etwa ein Smartphone. Das Endgerät 151 umfasst einen Prozessor 153, einen Speicher 155 mit Programminstruktionen 163 und eine Kommunikationsschnittstelle 167 zur Kommunikation über das Netzwerk 190. Zudem umfasst das Endgerät 151 beispielsweise eine Nutzerschnittstelle 165, über welche ein Nutzer das Endgerät 151 steuern kann, beispielsweise zum Anfragen eines Ausstellens einer Kopie des Dokuments 172 unter Verwendung des von dem Endgerät 150 empfangenen Provisionierungstokens 174. Ein Ausführen der Programminstruktionen 163, welche beispielsweise eine entsprechende App auf dem Endgerät 151 implementieren, durch den Prozessor 153 veranlasst den Prozessor 153 dazu, das Endgerät 151 zum Anfragen eines Ausstellens einer Kopie des Dokuments 172 über das Netzwerk 190 bei dem Server 100 des Ausstellerdienstes zu steuern. Dies ist in Figur 20 dargestellt.

Figur 20 zeigt ein exemplarisches System 192 zum Ausstellen einer Kopie eines digitalen Dokuments unter Verwendung des Provisionierungstokens 174. Das System 192 in Figur 20 entspricht beispielsweise dem System in Figur 19 ohne das Endgerät 150, welches beim Ausstellen der Kopie des Dokuments beispielsweise keine weitere Rolle spielt.

Das Endgerät 151 verwendet den Provisionierungstoken 174 zum Anfragen eines Ausstellens der digitalen Kopie 176 des Dokuments durch den Server 100. Der Server 100 validiert den Provisionierungstoken 174. Die Validierung umfasst beispielsweise eine Signaturprüfung unter Verwendung des öffentlichen kryptographischen Schlüssels 110 sowie der von dem Provisionierungstoken 174 umfassten Hashwerte. Hierfür werden beispielsweise die Salt-Werte aus dem ersten Datenbankeintrag 180 und Datenelemente aus dem zweiten Datenbankeintrag 182 verwendet. Auf eine erfolgreiche Validierung hin werden die Salt-Werte aus dem ersten Datenbankeintrag 180 gelöscht, sodass der Provisionierungstoken 174 nicht noch einmal verwendet werden kann.

Ferner wird die Kopie 176 des Dokuments erstellt, welche Datenelemente des Dokuments aus dem zweiten Datenbankeintrag 182 umfasst und beispielsweise mit dem privaten kryptographischen Schlüssel 108 signiert wird. Für eine kryptographische Bindung der Dokumentenkopie 176 an das Endgerät 151 wird zusätzlich der öffentliche kryptographische Schlüssel 161 des Endgeräts 151 zu der Dokument 176 hinzugefügt. Die resultierende Dokumentkopie 176 wird dem Endgerät 151 beispielsweise über das Netzwerk 190 zugesendet.

Die Dokumentenkopie 176 umfasst einen Indikator, welcher sie als eine Kopie identifiziert, d.h. welcher anzeigt, dass es sich um eine Kopie eines Dokuments handelt. Ferner umfasst die Dokumentenkopie 176 beispielsweise eine Angabe einer Gültigkeitsdauer der ausgestellten Kopie des Dokuments.

Beispielsweise umfasst auch das Endgerät 151 ein symmetrisches kryptographisches Schlüsselpaar, welches dem Endgerät 151 zugeordnet ist. Dieses asymmetrische kryptographische Schlüsselpaar umfasst einen privaten kryptographischen Schlüssel 159 und einen öffentlichen kryptographischen Schlüssel 161. Der private kryptographische Schlüssel 159 ist beispielsweise in einem geschützten Speicherbereich 157 des Speichers 155 gespeichert.

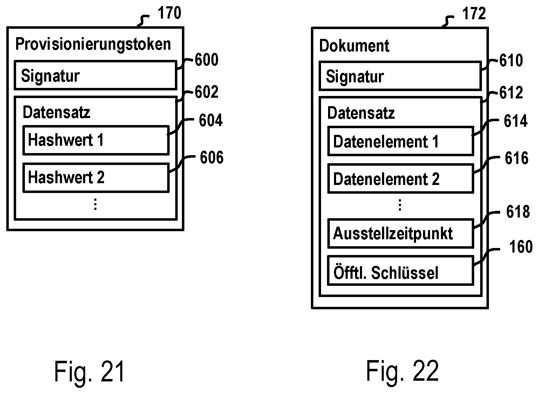

Figur 21 zeigt einen exemplarischen digitalen Provisionierungstoken 170 zum Nachweis einer Berechtigung zum Empfang eines auszustellenden digitalen Dokuments mit einem Endgerät und zur kryptographischen Kopplung an das Endgerät im Zuge der Ausstellung. Ein entsprechender Provisionierungstoken 170 kann beispielsweise mit dem Verfahren nach Figur 1 erstellt werden. Der Provisionierungstoken 170 umfasst einen Datensatz 602 mit einem Hashwerten 604, 606, welche unter Verwendung von Kombinationen aus dem auszustellenden Dokument zugeordneten Datenelementen, welches das auszustellende Dokument eindeutig identifiziert, und den Datenelementen jeweils zugeordneten Salt-Werten erzeugt sind. Der Datensatz 602 ist mit einem Signaturschlüssel eines den Provisionierungstoken 170 erzeugenden Ausstellerdienstes signiert, d.h. mit der Signatur 600.

Figur 22 zeigt ein exemplarisches digitales Dokument 172, welches einen Datensatz 612 mit Datenelementen 614, 615 in Klartext umfasst. Ein entsprechendes Dokument 172 kann beispielsweise mit dem Verfahren nach Figur 2 ausgestellt werden. Der Datensatz 612 ist mit einem Signaturschlüssel eines das Dokument ausstellenden Ausstellerdienstes signiert, d.h. mit der Signatur 610. Der Datensatz 610 umfasst ferner einen öffentlichen kryptographischen Schlüssel 160 eines Endgeräts zum kryptographischen Binden des Dokuments 172 an das entsprechende Endgerät. Zusätzlich umfasst der Datensatz 610 beispielsweise noch eine Angabe 618 eines Ausstellzeitpunkts des Dokument 172.

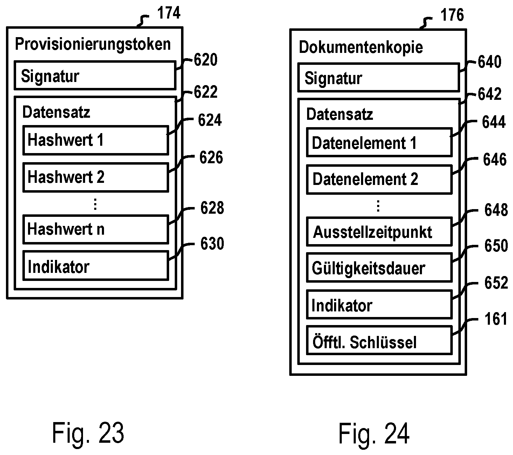

Figur 23 zeigt einen exemplarischen digitalen Provisionierungstoken 174 zum Nachweis einer Berechtigung zum Empfang einer auszustellenden digitalen Kopie eines ausgestellten digitalen Dokuments mit einem Endgerät und zur kryptographischen Kopplung an das Endgerät im Zuge der Ausstellung. Ein entsprechender Provisionierungstoken 174 kann beispielsweise mit dem Verfahren nach Figur 4 erstellt werden. Der Provisionierungstoken 174 umfasst einen Datensatz 622 mit Hashwerten 624, 626, 628 und einem Indikator 630. Die Hashwerte 624, 626 sind unter Verwendung von Kombination aus dem ausgestellten Dokument zugeordneten Datenelement, welches das ausgestellte Dokument, für das eine Kopie auszustellen ist, eindeutig identifizieren, und den Datenelementen jeweils zugeordneten Salt-Werten erzeugt. Der Hashwert 628 ist beispielsweise ein Hashwert einer Angabe einer Gültigkeitsdauer der auszustellenden Dokumentenkopie, welcher unter Verwendung eines Salt-Werts erzeugt ist. Der Indikator 630 zeigt an, dass es sich um ein Provisionierungstoken 174 für eine Kopie des ausgestellten Dokuments handelt. Der Datensatz 620 ist mit einem Signaturschlüssel eines den Provisionierungstoken 174 erzeugenden Ausstellerdienstes signiert, d.h. mit der Signatur 620.

Figur 24 zeigt eine exemplarische digitale Kopie 176 eines ausgestellten Dokuments. Ein entsprechende Dokumentenkopie 176 kann beispielsweise mit dem Verfahren nach Figur 5 ausgestellt werden. Die Kopie 176 umfasst einen Datensatz 642 mit Datenelementen 644, 645 und einen Indikator 652 in Klartext. Der Indikator 652 zeigt an, dass es sich um eine Dokumentenkopie handelt. Der Datensatz 642 ist mit einem Signaturschlüssel eines die Kopie 176 des Dokuments ausstellenden Ausstellerdienstes signiert, d.h. mit der Signatur 640. Der Datensatz 642 umfasst ferner einen öffentlichen kryptographischen Schlüssel 161 eines Endgeräts zum kryptographischen Binden der Kopie 174 des Dokuments an das Endgerät. Schließlich umfasst der Datensatz 642 beispielsweise noch eine Angabe 648 eines Ausstellzeitpunkts der Dokumentenkopie 176 und eine Angabe 650 einer Gültigkeitsdauer der Dokumentenkopie 176.

### Bezugszeichenliste

- 100: erster Server
- 102: Prozessor
- 104: Speicher
- 106: geschützter Speicherbereich
- 108: privater Schlüssel
- 110: öffentlicher Schlüssel
- 112: Programminstruktionen
- 114: Kommunikationsschnittstelle
- 120: erste Datenbank
- 130: zweiter Server
- 132: Prozessor
- 134: Speicher
- 136: Programminstruktionen
- 138: Kommunikationsschnittstelle
- 140: zweite Datenbank
- 150: mobiles Endgerät
- 151: mobiles Endgerät
- 152: Prozessor
- 153: Prozessor
- 154: Speicher
- 155: Speicher
- 156: geschützter Speicherbereich
- 157: geschützter Speicherbereich
- 158: privater Schlüssel
- 159: privater Schlüssel
- 160: öffentlicher Schlüssel
- 161: öffentlicher Schlüssel
- 162: Programminstruktionen
- 163: Programminstruktionen
- 164: Nutzerschnittstelle
- 165: Nutzerschnittstelle
- 166: Kommunikationsschnittstelle
- 167: Kommunikationsschnittstelle
- 170: Provisionierungstoken
- 172: Dokument
- 174: Provisionierungstoken
- 176: Dokumentenkopie
- 180: erster Datenbankeintrag
- 182: zweiter Datenbankeintrag
- 183: Zuordnung Salt-Wert
- 184: Datenelemente
- 186: Identifikationsdaten
- 190: Netzwerk
- 192: System
- 600: Signatur
- 602: Datensatz
- 604: Hashwert
- 606: Hashwert
- 610: Signatur
- 612: Datensatz
- 614: Datenelement
- 616: Datenelement
- 618: Angabe Ausstellzeitpunkt
- 620: Signatur
- 622: Datensatz
- 624: Hashwert
- 626: Hashwert
- 628: Hashwert
- 630: Indikator
- 640: Signatur
- 642: Datensatz
- 644: Datenelement
- 646: Datenelement
- 648: Angabe Ausstellzeitpunkt
- 650: Angabe Gültigkeitsdauer
- 652: Indikator

## Patentansprüche

1. Verfahren zum Ausstellen einer digitalen Kopie (174) eines ausgestellten digitalen Dokuments unter Verwendung eines digitalen Provisionierungstokens (174),
wobei der Provisionierungstoken (174) eine Berechtigung zum Empfang der auszustellenden digitalen Kopie (174) des ausgestellten digitalen Dokuments mit einem Endgerät (151) und zur kryptographischen Kopplung an das Endgerät (151) im Zuge der Ausstellung nachweist, wobei der Provisionierungstoken (174) einen ersten Datensatz (622) mit einem ersten Hashwert (624) und einem Indikator umfasst, wobei der erste Hashwert (624) unter Verwendung einer ersten Kombination eines dem ausgestellten Dokument (172) zugeordneten ersten Datenelements (644), welches das ausgestellte Dokument (172), für das eine Kopie (174) auszustellen ist, eindeutig identifiziert, und eines dem ersten Datenelement (644) zugeordneten ersten Salt-Werts erzeugt ist, wobei der Indikator (630) anzeigt, dass es sich um ein Provisionierungstoken (174) für eine Kopie (174) des ausgestellten Dokuments handelt, wobei der erste Datensatz (622) mit einem ersten Signaturschlüssel (108) eines den Provisionierungstoken (174) erzeugenden Ausstellerdienstes signiert ist,
wobei in einer ersten Datenbank (120) ein erster Datenbankeintrag (180) mit einer ersten Zuordnung des ersten Salt-Werts zu dem ersten Datenelement (644) gespeichert ist,
wobei in einer zweiten Datenbank (140) ein zweiter Datenbankeintrag (182) mit Datenelementen (644) des ausgestellten Dokuments (172) gespeichert ist,
wobei das Verfahren durch einen ersten Server (100) des Ausstellerdienstes umfasst:
∘ Empfangen einer Ausstellungsanfrage zum Ausstellen der auszustellenden Kopie (174) des ausgestellten Dokuments von einem Endgerät (151) eines Anfragenstellers,
∘ Empfangen des Provisionierungstokens (174) von dem Endgerät (151),
∘ Validieren des Provisionierungstokens (174), wobei das Validieren des Provisionierungstokens (174) umfasst:
• Validieren der Signatur des Provisionierungstokens (174) unter Verwendung eines ersten Signaturprüfschlüssels (110) des Ausstellerdienstes,
• Auslesen des ersten Datenbankeintrags (180) aus der ersten Datenbank (120) unter Verwendung des empfangenen ersten Datenelements (644),
• Prüfen der in dem Provisionierungstoken (174) eingetragenen Hashwerte (624, 626, 628) unter Verwendung des ausgelesenen ersten Datenbankeintrags (180),
• auf eine erfolgreiche Prüfung hin, Löschen zumindest der in dem ersten Datenbankeintrag (180) gespeicherten Salt-Werte in der ersten Datenbank (120),
∘ Ausstellen der Kopie (174) des Dokuments, wobei das Ausstellen der Kopie (174) des Dokuments umfasst:
• Auslesen des zweiten Datenbankeintrags (182) aus der zweiten Datenbank (140),
• Erstellen eines zweiten Datensatzes (642), welcher ein oder mehrere der Datenelemente des zweiten Datenbankeintrags (182), welche dem ausgestellten Dokument (172) zugeordnet sind, in Klartext umfasst, wobei der zweite Datensatz (642) ferner einen Indikator (652) in Klartext umfasst, welcher anzeigt, dass es sich um einen Datensatz einer Kopie (174) des ausgestellten Dokuments handelt,
• Senden einer Schlüsselabfrage an das Endgerät (151),
• Empfangen eines dem Endgerät (151) zugeordneten öffentlichen kryptographischen Schlüssel (161),
• Hinzufügen des empfangenen öffentlichen kryptographischen Schlüssels (161) des Endgeräts (151) zu dem zweiten Datensatz (642) zum kryptographischen Binden des zweiten Datensatzes (642) an das Endgerät (151),
• Signieren des zweiten Datensatzes (642) mit einem dem Ausstellerdienst zugeordneten zweiten kryptographischen Signaturschlüssel (108),
• Bereitstellen der ausgestellten Kopie (174) des Dokuments in Form des signierten zweiten Datensatzes (642),
• Speichern einer Zuordnung des empfangenen öffentlichen kryptographischen Schlüssels (161) des Endgeräts (151) zu der ausgestellten Kopie (174) des Dokuments in der ersten Datenbank (120),
∘ Senden der ausgestellten Kopie (174) des Dokuments an das Endgerät (151).

2. Verfahren nach Anspruch 1, wobei das Verfahren ferner ein Empfangen des ersten Datenelements (644) und ein Verwenden des empfangenen ersten Datenelements (644) zum Auslesen des ersten Datenbankeintrags (180) aus der ersten Datenbank (120) umfasst, und/oder
wobei die Zuordnung des empfangenen öffentlichen kryptographischen Schlüssels (161) des Endgeräts (151) zu der ausgestellten Kopie (174) des Dokuments in dem ersten Datenbankeintrags (180) der ersten Datenbank (120) gespeichert wird, und/oder
wobei das Validieren des Provisionierungstokens (174), auf eine erfolgreiche Prüfung hin, ein Löschen aller dem Provisionierungstoken (174) zugeordneter Daten aus dem ersten Datenbankeintrag (180) in der ersten Datenbank (120) umfasst, und/oder
wobei der zweite Datensatz (642) alle der Datenelemente des zweiten Datenbankeintrags (182), welche dem ausgestellten Dokument (172) zugeordnet sind, in Klartext umfasst, und/oder
wobei das erste Datenelement (644) verwendet wird zum Bereitstellen eines Datenbankzugriffsschlüssels zum Identifizieren des in der ersten Datenbank (120) gespeicherten ersten Datenbankeintrags (180) mit der ersten Zuordnung des erzeugten ersten Salt-Werts zu dem ersten Datenelement (644), und/oder
wobei das Verfahren ferner ein Empfangen eines zweiten Datenelements (646) des ausgestellten Dokuments (172) umfasst, welches zum Auslesen des ersten Datenbankeintrags (180) aus der ersten Datenbank (120) verwendet wird, wobei das zweite Datenelement (646) zum Bereitstellen des Datenbankzugriffsschlüssels zum Identifizieren des in der ersten Datenbank (120) gespeicherten ersten Datenbankeintrags (180) verwendet wird, und/oder
wobei ein Zugriff auf die zweite Datenbank (140) über einen zweiten Server (130) bereitgestellt wird, wobei das Abfragen des zweiten Datenbankeintrags (182) ein Senden einer Abfrage an den zweiten Server (130) und einen Empfang des zweiten Datenbankeintrags (182) in Antwort auf die Abfrage umfasst, und/oder
wobei der erste Datensatz (622) des Provisionierungstokens (174) ferner einen zweiten Hashwert umfasst, welcher unter Verwendung einer zweiten Kombination eines Einmalkennworts und eines dem Einmalkennwort zugeordneten zweiten Salt-Werts erzeugt ist, wobei in dem ersten Datenbankeintrag (180) der ersten Datenbank (120) eine zweite Zuordnung des zweiten Salt-Werts zu dem Einmalkennwort gespeichert ist,
wobei das Validieren des Provisionierungstokens (174) ferner ein Empfangen des Einmalkennworts und Prüfen des zweiten Hashwerts unter Verwendung des empfangenen Einmalkennworts sowie des ausgelesenen ersten Datenbankeintrags (180) umfasst.

3. Verfahren nach einem der vorangehenden Ansprüche, wobei der zweite Datensatz (642) der ausgestellten Kopie (174) des Dokuments ferner eine Angabe (648) eines Zeitpunkts der Ausstellung der Kopie (174) umfasst.

4. Verfahren nach Anspruch 3, wobei das Verfahren ferner ein Aktualisieren der ausgestellten Kopie (174) des Dokuments umfasst, wobei das Aktualisieren umfasst:
∘ Empfangen einer Aktualisierungsanfrage zum Aktualisieren der ausgestellten Kopie (174) des Dokuments von dem Endgerät (151), wobei die Aktualisierungsanfrage die ausgestellte Kopie (174) umfasst,
∘ Auslesen des zweiten Datenbankeintrags (182) aus der zweiten Datenbank (140) unter Verwendung des ersten Datenelements (644) der empfangenen Kopie (174) des Dokuments, wobei der zweite Datenbankeintrag (182) eine Angabe eines Zeitpunkts einer letzten Aktualisierung des zweiten Datenbankeintrags (182) umfasst,
∘ Vergleichen der Angabe (648) des Zeitpunkts der Ausstellung der empfangenen Kopie (174) des Dokuments mit der Angabe des Zeitpunkts der letzten Aktualisierung des zweiten Datenbankeintrags (182),
∘ Feststellen, dass die letzte Aktualisierung des zweiten Datenbankeintrags (182) nach dem Ausstellen der Kopie (174) des Dokuments erfolgt ist,
∘ Ausstellen einer aktualisierten Kopie des Dokuments, wobei das Ausstellen der aktualisierten Kopie des Dokuments umfasst:
• Erstellen eines vierten Datensatzes, welcher ein oder mehrere der Datenelemente des ausgelesenen zweiten Datenbankeintrags (182), welche der auszustellenden Kopie (174) des Dokuments zugeordnet sind, in Klartext umfasst, wobei der vierte Datensatz ferner einen Indikator (652) in Klartext umfasst, welcher anzeigt, dass es sich um einen Datensatz einer Kopie des ausgestellten Dokuments handelt,
• Hinzufügen des öffentlichen kryptographischen Schlüssels (161) des Endgeräts (151) aus der empfangenen Kopie (174) des Dokuments zu dem vierten Datensatz zum kryptographischen Binden des vierten Datensatzes an das Endgerät (151),
• Signieren des vierten Datensatzes mit dem zweiten kryptographischen Signaturschlüssel (108) des Ausstellerdienstes,
• Bereitstellen der aktualisierten Kopie des Dokuments in Form des signierten vierten Datensatzes,
∘ Senden der aktualisierten Kopie des Dokuments an das Endgerät (151).

5. Verfahren nach Anspruch 4, wobei die empfangene ausgestellte Kopie (174) des Dokuments mit einem dem Endgerät (151) zugeordneten privaten kryptographischen Schlüssel (159) signiert ist, wobei das Verfahren ferner ein Validieren der empfangenen Kopie (174) des Dokuments umfasst, wobei das Validieren ein Prüfen der Signatur der empfangenen Kopie (174) des Dokuments mit dem privaten kryptographischen Schlüssel (159) des Endgeräts (151) unter Verwendung des von der empfangenen Kopie (174) des Dokuments umfassten öffentlichen kryptographischen Schlüssels (161) des Endgeräts (151) umfasst.

6. Verfahren nach einem der vorangehenden Ansprüche, wobei der zweite Datensatz (642) ferner eine Angabe (650) einer für die ausgestellte Kopie (174) vorgesehene Gültigkeitsdauer im Klartext umfasst,
wobei der Provisionierungstoken (174) beispielsweise ferner einen dritten Hashwert (626) umfasst, welcher eine dritte Kombination der Angabe (650) der Gültigkeitsdauer mit einem dritten Salt-Wert umfasst, wobei in dem ersten Datenbankeintrag (180) in der ersten Datenbank (120) eine dritte Zuordnung des dritten Salt-Werts zu der Angabe (650) der Gültigkeitsdauer gespeichert ist,
wobei das Prüfen der in dem Provisionierungstoken eingetragenen Hashwerte beispielsweise ein Prüfen des dritten Hashwerts (626) umfasst.

7. Verfahren nach einem der vorangehenden Ansprüche, wobei das Verfahren ferner ein Revozieren der ausgestellten Kopie (174) des Dokuments umfasst, wobei das Revozieren umfasst:
∘ Empfangen einer Revozierungsanfrage zum Revozieren der ausgestellten Kopie (174) des Dokuments von einem an das ausgestellte Dokument (172) kryptographisch gebundenen Endgerät (150),
∘ Löschen zumindest der Zuordnung des öffentlichen kryptographischen Schlüssels (161) des an die zu revozierende Kopie (174) des Dokuments kryptographisch gebundenen Endgeräts (151) aus der ersten Datenbank (120),
∘ Senden einer Revozierungsbestätigung an das Endgerät (150).

8. Verfahren nach Anspruch 7, wobei die Revozierungsanfrage das ausgestellte Dokument (172) umfasst, wobei das empfangene ausgestellte Dokument (172) mit einem dem an das ausgestellte Dokument (172) kryptographisch gebundenen Endgerät (150) zugeordneten privaten kryptographischen Schlüssel (158) signiert ist, wobei das Verfahren ferner ein Validieren des empfangenen Dokuments (172) umfasst, wobei das Validieren ein Prüfen der Signatur des empfangenen Dokuments (172) mit dem privaten kryptographischen Schlüssel (158) des an das ausgestellte Dokument (172) kryptographisch gebundenen Endgeräts (150) unter Verwendung des von dem empfangenen Dokument (172) umfassten öffentlichen kryptographischen Schlüssels (160) des an das ausgestellte Dokument (172) kryptographisch gebundenen Endgeräts (150) umfasst.

9. Verfahren nach einem der vorangehenden Ansprüche, wobei es sich bei der ausgestellten Kopie (174) des Dokuments (172) um eine Kopie eines Fahrzeugdokuments handelt, beispielsweise um eine Kopie einer elektronischen Zulassungsbescheinigung Teil I.

10. Verfahren nach Anspruch 9, wobei es sich bei dem ersten Datenelement (644) um eine eindeutige Fahrzeug-ID handelt, beispielsweise ein Fahrzeugkennzeichen oder eine Fahrgestellnummer, und/oder
wobei es sich bei dem zweiten Datenelement (646) um ein dem Fahrzeug zugeordnetes Datenelement handelt, beispielsweise ein Fahrzeugkennzeichen oder eine Fahrgestellnummer.

11. Server (100) eines Ausstellerdienst zum Ausstellen einer digitalen Kopie (174) eines ausgestellten digitalen Dokuments unter Verwendung eines digitalen Provisionierungstokens (174), wobei der Server (100) einen Prozessor (102), einen Speicher (104) mit Programminstruktionen (112) und eine Kommunikationsschnittstelle (114) zur Kommunikation über ein Netzwerk (190) umfasst,
wobei der Provisionierungstoken (174) eine Berechtigung zum Empfang der auszustellenden digitalen Kopie (174) des ausgestellten digitalen Dokuments mit einem Endgerät (151) und zur kryptographischen Kopplung an das Endgerät (151) im Zuge der Ausstellung nachweist, wobei der Provisionierungstoken (174) einen ersten Datensatz (622) mit einem ersten Hashwert (624) und einem Indikator umfasst, wobei der erste Hashwert (624) unter Verwendung einer ersten Kombination eines dem ausgestellten Dokument (172) zugeordneten ersten Datenelements (644), welches das ausgestellte Dokument (172), für das eine Kopie (174) auszustellen ist, eindeutig identifiziert, und eines dem ersten Datenelement (644) zugeordneten ersten Salt-Werts erzeugt ist, wobei der Indikator (630) anzeigt, dass es sich um ein Provisionierungstoken (174) für eine Kopie (174) des ausgestellten Dokuments handelt, wobei der erste Datensatz (622) mit einem ersten Signaturschlüssel (108) eines den Provisionierungstoken (174) erzeugenden Ausstellerdienstes signiert ist,
wobei der Server (100) Zugriff auf eine erste Datenbank (120) besitzt, in der ein erster Datenbankeintrag (180) mit einer ersten Zuordnung des ersten Salt-Werts zu dem ersten Datenelement (644) gespeichert ist,
wobei der Server (100) ferner Zugriff auf eine zweite Datenbank (140) besitzt, in der ein zweiter Datenbankeintrag (140) mit Datenelementen des ausgestellten Dokuments (172) gespeichert ist,
wobei ein Ausführen der Programminstruktionen (112) durch den Prozessor (102) den Prozessor (102) dazu veranlasst, den Server (100) zu steuern zum:
∘ Empfangen einer Ausstellungsanfrage zum Ausstellen der auszustellenden Kopie (174) des ausgestellten Dokuments von einem Endgerät (151) eines Anfragenstellers,
∘ Empfangen des Provisionierungstokens (174) von dem Endgerät (151),
∘ Validieren des Provisionierungstokens (174), wobei das Validieren des Provisionierungstokens (174) umfasst:
• Validieren der Signatur des Provisionierungstokens (174) unter Verwendung eines ersten Signaturprüfschlüssels (110) des Ausstellerdienstes,
• Auslesen des ersten Datenbankeintrags (180) aus der ersten Datenbank (120) unter Verwendung des empfangenen ersten Datenelements (644),
• Prüfen der in dem Provisionierungstoken (174) eingetragenen Hashwerte (624, 626, 628) unter Verwendung des ausgelesenen ersten Datenbankeintrags (180),
• auf eine erfolgreiche Prüfung hin, Löschen zumindest der in dem ersten Datenbankeintrag (180) gespeicherten Salt-Werte in der ersten Datenbank (120),
∘ Ausstellen der Kopie (174) des Dokuments, wobei das Ausstellen der Kopie (174) des Dokuments umfasst:
• Auslesen des zweiten Datenbankeintrags (182) aus der zweiten Datenbank (140),
• Erstellen eines zweiten Datensatzes (642), welcher ein oder mehrere der Datenelemente des zweiten Datenbankeintrags (182), welche dem ausgestellten Dokument (172) zugeordnet sind, in Klartext umfasst, wobei der zweite Datensatz (642) ferner einen Indikator (652) in Klartext umfasst, welcher anzeigt, dass es sich um einen Datensatz einer Kopie (174) des ausgestellten Dokuments handelt,
• Senden einer Schlüsselabfrage an das Endgerät (151),
• Empfangen eines dem Endgerät (151) zugeordneten öffentlichen kryptographischen Schlüssel (161),
• Hinzufügen des empfangenen öffentlichen kryptographischen Schlüssels (161) des Endgeräts (151) zu dem zweiten Datensatz (642) zum kryptographischen Binden des zweiten Datensatzes (642) an das Endgerät (151),
• Signieren des zweiten Datensatzes (642) mit einem dem Ausstellerdienst zugeordneten zweiten kryptographischen Signaturschlüssel (108),
• Bereitstellen der ausgestellten Kopie (174) des Dokuments in Form des signierten zweiten Datensatzes (642),
• Speichern einer Zuordnung des empfangenen öffentlichen kryptographischen Schlüssels (161) des Endgeräts (151) zu der ausgestellten Kopie (174) des Dokuments in der ersten Datenbank (120),
∘ Senden der ausgestellten Kopie (174) des Dokuments an das Endgerät (151).

12. System (192) umfassend einen Server (100) eines Ausstellerdienst nach Anspruch 11 sowie einen weiteren Server (130), welcher den Zugriff auf die zweite Datenbank (140) bereitgestellt, wobei der weitere Server (130) einen weiteren Prozessor (132), einen weiteren Speicher (134) mit weiteren Programminstruktionen (136) und eine weiteren Kommunikationsschnittstelle (138) zur Kommunikation über das Netzwerk (190) umfasst,
wobei das Abfragen des zweiten Datenbankeintrags (182) ein Senden einer Abfrage von dem Server (100) an den weiteren Server (130) und einen Empfang des von dem weiteren Server (130) in Antwort auf die Abfrage gesendeten zweiten Datenbankeintrags (182) durch den Server (100) umfasst.

13. System (192) nach Anspruch 12, wobei das System (192) ferner das Endgerät (150, 151) umfasst.

## Claims

1. A method for issuing a digital copy (174) of an issued digital document using a digital provisioning token (174),
wherein the provisioning token (174) evidences an authorization to receive, with a terminal device (151), the digital copy (174) to be issued of the issued digital document and to cryptographically couple the digital copy to the terminal device (151) in the course of the issuing, wherein the provisioning token (174) comprises a first data record (622) with a first hash value (624) and an indicator, wherein the first hash value (624) is generated using a first combination of a first data element (644) assigned to the issued document (172), which uniquely identifies the issued document (172) for which a copy (174) is to be issued, and a first salt value assigned to the first data element (644), wherein the indicator (630) indicates that it is a provisioning token (174) for a copy (174) of the issued document, wherein the first data record (622) is signed with a first signature key (108) of an issuer service that generates the provisioning token (174),
wherein in a first database (120) a first database entry (180) with a first assignment of the first salt value to the first data element (644) is stored,
wherein in a second database (140) a second database entry (182) with data elements (644) of the issued document (172) is stored,
wherein the method comprises by a first server (100) of the issuer service:
∘ receiving an issuance request for issuing the digital copy (174) to be issued of the issued document from a terminal device (151) of a requester,
∘ receiving the provisioning token (174) from the terminal device (151),
∘ validating the provisioning token (174), wherein validating the provisioning token (174) comprises:
• validating the signature of the provisioning token (174) using a first signature verification key (110) of the issuer service,
• reading the first database entry (180) from the first database (120) using the received first data element (644),
• checking the hash values (624, 626, 628) recorded in the provisioning token (174) using the read first database entry (180),
• upon a successful checking, deleting at least the salt values stored in the first database entry (180) in the first database (120),
∘ issuing the copy (174) of the document, wherein the issuing of the copy (174) of the document comprises:
• reading the second database entry (182) from the second database (140),
• creating a second data record (642) which comprises one or more of the data elements of the second database entry (182) in plain text that are assigned to the issued document (172), wherein the second data record (642) further comprises, in plain text, an indicator (652) indicating that it is a data record of a copy (174) of the issued document,
• sending a key request to the terminal device (151),
• receiving a public cryptographic key (161) assigned to the terminal device (151),
• adding the received public cryptographic key (161) of the terminal device (151) to the second data record (642) in order to cryptographically bind the second data record (642) to the terminal device (151),
• signing the second data record (642) with a second cryptographic signature key (108) assigned to the issuer service,
• providing the issued copy (174) of the document in the form of the signed second data record (642),
• storing, in the first database (120), an assignment of the received public cryptographic key (161) of the terminal device (151) to the issued copy (174) of the document, and
∘ sending the issued copy (174) of the document to the terminal device (151).

2. The method according to claim 1, wherein the method further comprises a receiving of the first data element (644) and a using of the received first data element (644) to read the first database entry (180) from the first database (120), and/or
wherein the assignment of the received public cryptographic key (161) of the terminal device (151) to the issued copy (174) of the document is stored in the first database entry (180) of the first database (120), and/or
wherein the validating of the provisioning token (174), upon a successful checking, comprises a deleting of all data assigned to the provisioning token (174) from the first database entry (180) in the first database (120), and/or
wherein the second data record (642) comprises all of the data elements of the second database entry (182) that are assigned to the issued document (172) in plain text, and/or
wherein the first data element (644) is used to provide a database access key for identifying the first database entry (180) stored in the first database (120) with the first assignment of the generated first salt value to the first data element (644), and/or
wherein the method further comprises receiving a second data element (646) of the issued document (172), which is used to read the first database entry (180) from the first database (120), wherein the second data element (646) is used to provide the database access key for identifying the first database entry (180) stored in the first database (120), and/or
wherein an access to the second database (140) is provided via a second server (130), wherein the querying of the second database entry (182) comprises a sending of a query to the second server (130) and a receiving of the second database entry (182) in response to the query, and/or
wherein the first data record (622) of the provisioning token (174) further comprises a second hash value, which is generated using a second combination of a one-time password and a second salt value assigned to the one-time password, wherein a second assignment of the second salt value to the one-time password is stored in the first database entry (180) of the first database (120),
wherein the validating of the provisioning token (174) further comprises a receiving of the one-time password and a checking of the second hash value using the received one-time password and the read first database entry (180).

3. The method according to any of the preceding claims, wherein the second data record (642) of the issued copy (174) of the document further comprises an indication (648) of a time of the issuing of the copy (174).

4. The method according to claim 3, wherein the method further comprises an updating of the issued copy (174) of the document, wherein the updating comprises:
∘ receiving an update request for updating the issued copy (174) of the document from the terminal device (151), wherein the update request comprises the issued copy (174),
∘ reading the second database entry (182) from the second database (140) using the first data element (644) of the received copy (174) of the document, wherein the second database entry (182) comprises an indication of a time of a last update of the second database entry (182),
∘ comparing the indication (648) of the time of the issuing of the received copy (174) of the document with the indication of the time of the last update of the second database entry (182),
∘ determining that the last update of the second database entry (182) occurred after the issuing of the copy (174) of the document,
∘ issuing an updated copy of the document, wherein the issuing of the updated copy of the document comprises:
• creating a fourth data record which comprises one or more of the data elements of the read second database entry (182) in plain text that are assigned to the updated copy (174) to be issued of the document, wherein the fourth data record further comprises, in plain text, an indicator (652) indicating that it is a data record of a copy of the issued document,
• adding the public cryptographic key (161) of the terminal device (151) from the received copy (174) of the document to the fourth data record in order to cryptographically bind the fourth data record to the terminal device (151),
• signing the fourth data record with the second cryptographic signature key (108) of the issuer service,
• providing the updated copy of the document in the form of the signed fourth data record, and
∘ sending the updated copy of the document to the terminal device (151).

5. The method according to claim 4, wherein the received issued copy (174) of the document is signed with a private cryptographic key (159) assigned to the terminal device (151), wherein the method further comprises a validating of the received copy (174) of the document, wherein the validating comprises a checking of the signature of the received copy (174) of the document with the private cryptographic key (159) of the terminal device (151) using the public cryptographic key (161) of the terminal device (151) comprised by the received copy (174) of the document.

6. The method according to any of the preceding claims, wherein the second data record (642) further comprises, in plain text, an indication (650) of a validity period scheduled for the issued copy (174),
wherein the provisioning token (174), for example, further comprises a third hash value (626), which comprises a third combination of the indication (650) of the validity period with a third salt value, wherein in the first database entry (180) in the first database (120) a third assignment of the third salt value to the indication (650) of the validity period is stored,
wherein the checking of the hash values recorded in the provisioning token, for example, comprises a checking of the third hash value (626).

7. The method according to any of the preceding claims, wherein the method further comprises a revoking of the issued copy (174) of the document, wherein revoking comprises:
∘ receiving a revocation request for revoking the issued copy (174) of the document from a terminal device (150) cryptographically bound to the issued document (172),
∘ deleting at least the assignment of the public cryptographic key (161) of the terminal device (151) cryptographically bound to the copy (174) to be revoked of the document from the first database (120), and
∘ sending a revocation confirmation to the terminal device (150).

8. The method according to claim 7, wherein the revocation request comprises the issued document (172), wherein the received issued document (172) is signed with a private cryptographic key (158) assigned to the terminal device (150) cryptographically bound to the issued document (172), wherein the method further comprises a validating of the received document (172), wherein the validating comprises a checking of the signature of the received document (172) with the private cryptographic key (158) of the terminal device (150) cryptographically bound to the issued document (172) using the public cryptographic key (160) of the terminal device (150) cryptographically bound to the issued document (172), which is comprised by the received document (172).

9. The method according to any of the preceding claims, wherein the issued copy (174) of the document (172) is a copy of a vehicle document, for example a copy of an electronic registration certificate part I.

10. The method according to claim 9, wherein the first data element (644) is a unique vehicle ID, for example a license plate number or a vehicle identification number, and/or
wherein the second data element (646) is a data element assigned to the vehicle, for example a license plate number or a vehicle identification number.

11. A server (100) of an issuer service for issuing a digital copy (174) of an issued digital document using a digital provisioning token (174), wherein the server (100) comprises a processor (102), a memory (104) with program instructions (112) and a communication interface (114) for communication over a network (190),
wherein the provisioning token (174) evidences an authorization to receive, with a terminal device (151), the digital copy (174) to be issued of the issued digital document and to cryptographically couple the digital copy to the terminal device (151) in the course of the issuing, wherein the provisioning token (174) comprises a first data record (622) with a first hash value (624) and an indicator, wherein the first hash value (624) is generated using a first combination of a first data element (644) assigned to the issued document (172), which uniquely identifies the issued document (172) for which a copy (174) is to be issued, and a first salt value assigned to the first data element (644), wherein the indicator (630) indicates that it is a provisioning token (174) for a copy (174) of the issued document, wherein the first data record (622) is signed with a first signature key (108) of an issuer service that generates the provisioning token (174),
wherein the server (100) has access to a first database (120) in which a first database entry (180) with a first assignment of the first salt value to the first data element (644) is stored,
wherein the server (100) further has access to a second database (140) in which a second database entry (140) with data elements of the issued document (172) is stored,
wherein execution of the program instructions (112) by the processor (102) causes the processor (102) to control the server (100) to:
∘ receive an issuance request for issuing the digital copy (174) to be issued of the issued document from a terminal device (151) of a requester,
∘ receive the provisioning token (174) from the terminal device (151),
∘ validate the provisioning token (174), wherein validating the provisioning token (174) comprises:
• validating the signature of the provisioning token (174) using a first signature verification key (110) of the issuer service,
• reading the first database entry (180) from the first database (120) using the received first data element (644),
• checking the hash values (624, 626, 628) recorded in the provisioning token (174) using the read first database entry (180),
• upon a successful checking, deleting at least the salt values stored in the first database entry (180) in the first database (120),
∘ issue the copy (174) of the document, wherein the issuing of the copy (174) of the document comprises:
• reading the second database entry (182) from the second database (140),
• creating a second data record (642) which comprises one or more of the data elements of the second database entry (182) in plain text that are assigned to the issued document (172), wherein the second data record (642) further comprises, in plain text, an indicator (652) indicating that it is a data record of a copy (174) of the issued document,
• sending a key request to the terminal device (151),
• receiving a public cryptographic key (161) assigned to the terminal device (151),
• adding the received public cryptographic key (161) of the terminal device (151) to the second data record (642) in order to cryptographically bind the second data record (642) to the terminal device (151),
• signing the second data record (642) with a second cryptographic signature key (108) assigned to the issuer service,
• providing the issued copy (174) of the document in the form of the signed second data record (642),
• storing, in the first database (120), an assignment of the received public cryptographic key (161) of the terminal device (151) to the issued copy (174) of the document, and
∘ send the issued copy (174) of the document to the terminal device (151).

12. A system (192) comprising a server (100) of an issuer service according to claim 11 and a further server (130) which provides the access to the second database (140), wherein the further server (130) comprises a further processor (132), a further memory (134) with further program instructions (136) and a further communication interface (138) for communication over the network (190),
wherein the querying of the second database entry (182) comprises a sending of a query from the server (100) to the further server (130) and a receiving, by the server (100), of the second database entry (182) sent by the further server (130) in response to the query.

13. The system (192) according to claim 12, wherein the system (192) further comprises the terminal device (150, 151).

## Revendications

1. Procédé d'émission d'une copie numérique (174) d'un document numérique émis en utilisant un jeton d'approvisionnement numérique (174),
dans lequel le jeton d'approvisionnement (174) prouve une autorisation pour recevoir la copie numérique (174) à émettre du document numérique émis avec un terminal (151) pour coupler cryptographiquement la copie numérique au terminal (151) au cours de l'émission, dans lequel le jeton d'approvisionnement (174) comprend un premier ensemble de données (622) avec une première valeur de hachage (624) et un indicateur, dans lequel la première valeur de hachage (624) est générée en utilisant une première combinaison d'un premier élément de données (644) associé au document émis (172), lequel identifie de manière univoque le document émis (172) pour lequel une copie (174) doit être émise, et d'une première valeur de sel associée au premier élément de données (644), dans lequel l'indicateur (630) indique qu'il s'agit d'un jeton d'approvisionnement (174) pour une copie (174) du document émis, dans lequel le premier ensemble de données (622) est signé avec une première clé de signature (108) d'un service d'émetteur générant le jeton d'approvisionnement (174),
dans lequel une première entrée de base de données (180) avec une première association de la première valeur de sel au premier élément de données (644) est stockée dans une première base de données (120),
dans lequel une deuxième entrée de base de données (182) avec des éléments de données (644) du document émis (172) est stockée dans une deuxième base de données (140),
dans lequel le procédé comprend, par un premier serveur (100) du service d'émetteur :
∘ la réception d'une demande d'émission pour émettre la copie (174) à émettre du document émis par un terminal (151) d'un demandeur,
∘ la réception du jeton d'approvisionnement (174) du terminal (151),
∘ la validation du jeton d'approvisionnement (174), dans lequel la validation du jeton d'approvisionnement (174) comprend :
• la validation de la signature du jeton d'approvisionnement (174) en utilisant une première clé de vérification de signature (110) du service d'émetteur,
• la lecture de la première entrée de base de données (180) dans la première base de données (120) en utilisant le premier élément de données reçu (644),
• la vérification des valeurs de hachage (624, 626, 628) enregistrées dans le jeton d'approvisionnement (174) en utilisant la première entrée de base de données (180) lue,
• lors d'une vérification réussie, la suppression d'au moins les valeurs de sel stockées dans la première entrée de base de données (180) dans la première base de données (120),
∘ l'émission de la copie (174) du document, dans lequel l'émission de la copie (174) du document comprend :
• la lecture de la deuxième entrée de base de données (182) dans la deuxième base de données (140),
• la création d'un deuxième ensemble de données (642) qui comprend un ou plusieurs des éléments de données de la deuxième entrée de base de données (182) qui sont associés au document émis (172) en texte clair, dans lequel le deuxième ensemble de données (642) comprend en outre un indicateur (652) en texte clair qui indique qu'il s'agit d'un ensemble de données d'une copie (174) du document émis,
• l'envoi d'une demande de clé au terminal (151),
• la réception d'une clé cryptographique publique (161) associée au terminal (151),
• l'ajout de la clé cryptographique publique (161) reçue du terminal (151) au deuxième ensemble de données (642) pour lier cryptographiquement le deuxième ensemble de données (642) au terminal (151),
• la signature du deuxième ensemble de données (642) avec une deuxième clé de signature cryptographique (108) associée au service d'émetteur,
• la fourniture de la copie émise (174) du document sous la forme du deuxième ensemble de données (642) signé,
• le stockage d'une association de la clé cryptographique publique (161) reçue du terminal (151) à la copie émise (174) du document dans la première base de données (120),
∘ l'envoi de la copie émise (174) du document au terminal (151).

2. Procédé selon la revendication 1, dans lequel le procédé comprend en outre une réception du premier élément de données (644) et une utilisation du premier élément de données reçu (644) pour lire la première entrée de base de données (180) dans la première base de données (120), et/ou
dans lequel l'association de la clé cryptographique publique (161) reçue du terminal (151) à la copie émise (174) du document est stockée dans la première entrée de base de données (180) de la première base de données (120), et/ou
dans lequel la validation du jeton d'approvisionnement (174) comprend, lors d'une vérification réussie, une suppression de toutes les données associées au jeton d'approvisionnement (174) de la première entrée de base de données (180) dans la première base de données (120), et/ou
dans lequel le deuxième ensemble de données (642) comprend tous les éléments de données de la deuxième entrée de base de données (182) qui sont associés au document émis (172) en texte clair, et/ou
dans lequel le premier élément de données (644) est utilisé pour fournir une clé d'accès de base de données pour identifier la première entrée de base de données (180) stockée dans la première base de données (120) avec la première association de la première valeur de sel générée au premier élément de données (644), et/ou
dans lequel le procédé comprend en outre une réception d'un deuxième élément de données (646) du document émis (172) qui est utilisé pour lire la première entrée de base de données (180) dans la première base de données (120), dans lequel le deuxième élément de données (646) est utilisé pour fournir la clé d'accès de base de données pour identifier la première entrée de base de données (180) stockée dans la première base de données (120), et/ou
dans lequel un accès à la deuxième base de données (140) est fourni par l'intermédiaire d'un deuxième serveur (130), dans lequel la demande de la deuxième entrée de base de données (182) comprend un envoi d'une demande au deuxième serveur (130) et une réception de la deuxième entrée de base de données (182) en réponse à la demande, et/ou
dans lequel le premier ensemble de données (622) du jeton d'approvisionnement (174) comprend en outre une deuxième valeur de hachage qui est générée en utilisant une deuxième combinaison d'un mot de passe à usage unique et d'une deuxième valeur de sel associée au mot de passe à usage unique, dans lequel une deuxième association de la deuxième valeur de sel au mot de passe à usage unique est stockée dans la première entrée de base de données (180) de la première base de données (120),
dans lequel la validation du jeton d'approvisionnement (174) comprend en outre une réception du mot de passe à usage unique et une vérification de la deuxième valeur de hachage en utilisant le mot de passe à usage unique reçu ainsi que la première entrée de base de données lue (180).

3. Procédé selon l'une quelconque des revendications précédentes, dans lequel le deuxième ensemble de données (642) de la copie émise (174) du document comprend en outre une indication (648) d'un moment de l'émission de la copie (174).

4. Procédé selon la revendication 3, dans lequel le procédé comprend en outre une mise à jour de la copie émise (174) du document, dans lequel la mise à jour comprend :
∘ la réception d'une demande de mise à jour pour mettre à jour la copie émise (174) du document par le terminal (151), dans lequel la demande de mise à jour comprend la copie émise (174),
∘ la lecture de la deuxième entrée de base de données (182) dans la deuxième base de données (140) en utilisant le premier élément de données (644) de la copie reçue (174) du document, dans lequel la deuxième entrée de base de données (182) comprend une indication d'un moment d'une dernière mise à jour de la deuxième entrée de base de données (182),
∘ la comparaison de l'indication (648) du moment de l'émission de la copie reçue (174) du document avec l'indication du moment de la dernière mise à jour de la deuxième entrée de base de données (182),
∘ la détermination que la dernière mise à jour de la deuxième entrée de base de données (182) s'est produite après l'émission de la copie (174) du document,
∘ l'émission d'une copie mise à jour du document, dans lequel l'émission de la copie mise à jour du document comprend :
• la création d'un quatrième ensemble de données qui comprend un ou plusieurs des éléments de données de la deuxième entrée de base de données lue (182) qui sont associés à la copie à émettre (174) du document en texte clair, dans lequel le quatrième ensemble de données comprend en outre un indicateur (652) en texte clair qui indique qu'il s'agit d'un ensemble de données d'une copie du document émis,
• l'ajout de la clé cryptographique publique (161) du terminal (151) de la copie reçue (174) du document au quatrième ensemble de données pour lier cryptographiquement le quatrième ensemble de données au terminal (151),
• la signature du quatrième ensemble de données avec la deuxième clé de signature cryptographique (108) du service d'émetteur,
• la fourniture de la copie mise à jour du document sous la forme du quatrième ensemble de données signé,
∘ l'envoi de la copie mise à jour du document au terminal (151).

5. Procédé selon la revendication 4, dans lequel la copie émise reçue (174) du document est signée avec une clé cryptographique privée (159) associée au terminal (151), dans lequel le procédé comprend en outre une validation de la copie reçue (174) du document, dans lequel la validation comprend une vérification de la signature de la copie reçue (174) du document avec la clé cryptographique privée (159) du terminal (151) en utilisant la clé cryptographique publique (161) du terminal (151) comprise dans la copie reçue (174) du document.

6. Procédé selon l'une quelconque des revendications précédentes, dans lequel le deuxième ensemble de données (642) comprend en outre une indication (650) d'une durée de validité prévue pour la copie émise (174) en texte clair.
dans lequel le jeton d'approvisionnement (174) comprend par exemple en outre une troisième valeur de hachage (626) qui comprend une troisième combinaison de l'indication (650) de la durée de validité avec une troisième valeur de sel, dans lequel une troisième association de la troisième valeur de sel à l'indication (650) de la durée de validité est stockée dans la première entrée de base de données (180) dans la première base de données (120),
dans lequel la vérification des valeurs de hachage enregistrées dans le jeton d'approvisionnement comprend par exemple une vérification de la troisième valeur de hachage (626).

7. Procédé selon l'une quelconque des revendications précédentes, dans lequel le procédé comprend en outre une révocation de la copie émise (174) du document, dans lequel la révocation comprend:
∘ la réception d'une demande de révocation pour révoquer la copie émise (174) du document par un terminal (150) lié cryptographiquement au document émis (172),
∘ la suppression d'au moins l'association de la clé cryptographique publique (161) du terminal (151) lié cryptographiquement à la copie (174) à révoquer du document de la première base de données (120),
∘ l'envoi d'une confirmation de révocation au terminal (150).

8. Procédé selon la revendication 7, dans lequel la demande de révocation comprend le document émis (172), dans lequel le document émis reçu (172) est signé avec une clé cryptographique privée (158) associée au terminal (150) lié cryptographiquement au document émis (172), dans lequel le procédé comprend en outre une validation du document reçu (172), dans lequel la validation comprend une vérification de la signature du document reçu (172) avec la clé cryptographique privée (158) du terminal (150) lié cryptographiquement au document émis (172) en utilisant la clé cryptographique publique (160) du terminal (150) lié cryptographiquement au document émis (172) comprise dans le document reçu (172).

9. Procédé selon l'une quelconque des revendications précédentes, dans lequel la copie émise (174) du document (172) est une copie d'un document de véhicule, par exemple une copie d'un certificat d'immatriculation électronique partie I.

10. Procédé selon la revendication 9, dans lequel le premier élément de données (644) est un identifiant de véhicule univoque, par exemple un numéro d'immatriculation de véhicule ou un numéro de châssis, et/ou
dans lequel le deuxième élément de données (646) est un élément de données associé au véhicule, par exemple un numéro d'immatriculation de véhicule ou un numéro de châssis.

11. Serveur (100) d'un service d'émetteur pour émettre une copie numérique (174) d'un document numérique émis en utilisant un jeton d'approvisionnement numérique (174), dans lequel le serveur (100) comprend un processeur (102), une mémoire (104) avec des instructions de programme (112) et une interface de communication (114) pour la communication par le biais d'un réseau (190),
dans lequel le jeton d'approvisionnement (174) prouve une autorisation pour recevoir la copie numérique (174) à émettre du document numérique émis avec un terminal (151) pour coupler cryptographiquement la copie numérique au terminal (151) au cours de l'émission, dans lequel le jeton d'approvisionnement (174) comprend un premier ensemble de données (622) avec une première valeur de hachage (624) et un indicateur, dans lequel la première valeur de hachage (624) est générée en utilisant une première combinaison d'un premier élément de données (644) associé au document émis (172), lequel identifie de manière univoque le document émis (172) pour lequel une copie (174) doit être émise, et d'une première valeur de sel associée au premier élément de données (644), dans lequel l'indicateur (630) indique qu'il s'agit d'un jeton d'approvisionnement (174) pour une copie (174) du document émis, dans lequel le premier ensemble de données (622) est signé avec une première clé de signature (108) d'un service d'émetteur générant le jeton d'approvisionnement (174),
dans lequel le serveur (100) a accès à une première base de données (120) dans laquelle une première entrée de base de données (180) avec une première association de la première valeur de sel au premier élément de données (644) est stockée,
dans lequel le serveur (100) a en outre accès à une deuxième base de données (140) dans laquelle une deuxième entrée de base de données (140) avec des éléments de données du document émis (172) est stockée,
dans lequel une exécution des instructions de programme (112) par le processeur (102) amène le processeur (102) à commander le serveur (100) pour :
∘ la réception d'une demande d'émission pour émettre la copie (174) à émettre du document émis par un terminal (151) d'un demandeur,
∘ la réception du jeton d'approvisionnement (174) du terminal (151),
∘ la validation du jeton d'approvisionnement (174), dans lequel la validation du jeton d'approvisionnement (174) comprend :
• la validation de la signature du jeton d'approvisionnement (174) en utilisant une première clé de vérification de signature (110) du service d'émetteur,
• la lecture de la première entrée de base de données (180) dans la première base de données (120) en utilisant le premier élément de données reçu (644),
• la vérification des valeurs de hachage (624, 626, 628) enregistrées dans le jeton d'approvisionnement (174) en utilisant la première entrée de base de données lue (180),
• lors d'une vérification réussie, la suppression d'au moins les valeurs de sel stockées dans la première entrée de base de données (180) dans la première base de données (120),
∘ l'émission de la copie (174) du document, dans lequel l'émission de la copie (174) du document comprend :
• la lecture de la deuxième entrée de base de données (182) dans la deuxième base de données (140),
• la création d'un deuxième ensemble de données (642) qui comprend un ou plusieurs des éléments de données de la deuxième entrée de base de données (182) qui sont associés au document émis (172) en texte clair, dans lequel le deuxième ensemble de données (642) comprend en outre un indicateur (652) en texte clair qui indique qu'il s'agit d'un ensemble de données d'une copie (174) du document émis,
• l'envoi d'une demande de clé au terminal (151),
• la réception d'une clé cryptographique publique (161) associée au terminal (151),
• l'ajout de la clé cryptographique publique (161) reçue du terminal (151) au deuxième ensemble de données (642) pour lier cryptographiquement le deuxième ensemble de données (642) au terminal (151),
• la signature du deuxième ensemble de données (642) avec une deuxième clé de signature cryptographique (108) associée au service d'émetteur,
• la fourniture de la copie émise (174) du document sous la forme du deuxième ensemble de données (642) signé,
• le stockage d'une association de la clé cryptographique publique (161) reçue du terminal (151) à la copie émise (174) du document dans la première base de données (120),
∘ l'envoi de la copie émise (174) du document au terminal (151).

12. Système (192) comprenant un serveur (100) d'un service d'émetteur selon la revendication 11 et un autre serveur (130) qui fournit l'accès à la deuxième base de données (140), dans lequel l'autre serveur (130) comprend un autre processeur (132), une autre mémoire (134) avec d'autres instructions de programme (136) et une autre interface de communication (138) pour la communication par le biais du réseau (190),
dans lequel la demande de la deuxième entrée de base de données (182) comprend un envoi d'une demande du serveur (100) à l'autre serveur (130) et une réception de la deuxième entrée de base de données (182) envoyée par l'autre serveur (130) en réponse à la demande par le serveur (100).

13. Système (192) selon la revendication 12, dans lequel le système (192) comprend en outre le terminal (150, 151).
